(19) Europäisches Patentamt / European Patent Office / Office européen des brevets

(11) **EP 3 901 710 B1**

(12) **EUROPEAN PATENT SPECIFICATION**

(45) Date of publication and mention
of the grant of the patent:
**03.05.2023  Bulletin 2023/18**

(21) Application number: **20171236.1**

(22) Date of filing: **24.04.2020**

(51) International Patent Classification (IPC):
**G05B 13/02** (2006.01)    **G05B 17/02** (2006.01)

(52) Cooperative Patent Classification (CPC):
**G05B 17/02**

(54) **OPTIMISATION OF PROCESSES FOR THE PRODUCTION OF CHEMICAL, PHARMACEUTICAL AND/OR BIOTECHNOLOGICAL PRODUCTS**

OPTIMIERUNG VON VERFAHREN ZUR HERSTELLUNG VON CHEMISCHEN, PHARMAZEUTISCHEN UND/ODER BIOTECHNOLOGISCHEN PRODUKTEN

OPTIMISATION DE PROCESSUS POUR LA PRODUCTION DE PRODUITS CHIMIQUES, PHARMACEUTIQUES ET/OU BIOTECHNOLOGIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.10.2021  Bulletin 2021/43**

(73) Proprietor: **The Automation Partnership (Cambridge) Limited
Royston, Hertfordshire SG8 5WY (GB)**

(72) Inventors:
• **STACEY, Adrian
  Cambridge CB4 1FY (GB)**
• **SCHOLZ, Jochen
  37077 Göttingen (DE)**
• **DANIELS, Charlie
  Cambridge CB5 8HH (GB)**
• **GRIMM, Christian
  37308 Heilbad Heiligenstadt (DE)**

(74) Representative: **Novagraaf International SA
Chemin de l'Echo 3
1213 Onex, Geneva (CH)**

(56) References cited:
**EP-A1- 2 400 358      EP-A1- 3 291 038
EP-A1- 3 525 053      US-A1- 2019 154 713
US-B1- 10 088 837**

**Description**

Technical Field

The following description relates to processes for the production of chemical, pharmaceutical and/or biotechnological products. In particular, aspects of the application relate to optimising such processes as a whole in terms of overall performance.

Background

Processes for the production of chemical, pharmaceutical and/or biotechnological products are complex procedures involving non-linear dynamics in the transformation of the inputs or ingredients into the final products. An example of such a process is upstream cell cultivation in drug manufacture. Design of this process may involve considerations about the resulting drug product (at large scale), about how to adjust the process to optimise the resulting drug product (at intermediate scale) or about identifying a cell line best able to do so (at small scale). At each scale, interactions between the organism, cultivation equipment, reagents, physical conditions and the timing of the steps of the process determine success or failure; therefore process design is critical.

However, determining how best to perform the production process for a particular organism, piece of cultivation equipment or set of reagents is challenging, because responses of cultivation to driving parameters is typically highly non-linear and the space of possible parameters regulating the production process is very large.

Conventionally, the optimisation of such processes has focused on identifying and optimising for, and then achieving a particular set-point, i.e. a target value for a single process output. Such a simplistic approach underestimates the complex interplay between the different factors characterizing the performance of the process. For example, maximising the product titre does not necessarily lead to the best way of performing the process. Additionally, the complex interplay between the different factors driving the outcome of the process is underestimated in conventional approaches.

Further, conventionally, available knowledge about a process, which may come from theoretical assumptions and previous executions, is taken into consideration only in a rudimental manner, e.g. selecting *a priori* a value for a parameter or a model for the physical and biological dynamics involved in the process. For example, in the design of experiments (DoE), the shape (e.g. linear or quadratic) of the response of the process to the driving parameters is usually selected a *priori.*

Document EP 3 525 053 A1 discloses a computer-implemented method of scaling a production process to produce a chemical, pharmaceutical and/or biotechnological product, the scaling being from a source scale to a target scale, wherein the production process is defined by a plurality of steps specified by one or more process parameters controlling an execution of the production process, the method comprising: (a) retrieving: parameter evolution information that describes the time evolution of the process parameter(s); a plurality of recipe templates, wherein a recipe comprises the plurality of steps defining the production process, and wherein a recipe template is a recipe in which at least one of the process parameters specifying the plurality of steps is a parameter being variable and having no predetermined value at the outset; (b) receiving: a source setup specification of a source setup to be used for executing the production process at the source scale, the source setup specification comprising the source scale value; a target setup specification of a target setup to be used for executing the production process at the target scale, the target setup specification comprising the target scale value; a source recipe defining the production process at the source scale; at least one acceptability function defining conditions for the values of the process parameter(s) at the source scale and/or at the target scale; (c) simulating the execution of the production process at the source scale using the source setup specification, the source recipe and the parameter evolution information; (d) determining, from the simulation, one or more source trajectories for the process parameter(s), wherein a trajectory corresponds to a time-based profile of values recordable during the simulated execution of the production process; (e) performing a target determination step comprising: selecting a recipe template pertinent to the production process out of the plurality of recipe templates; providing an input value for the at least one variable parameter in the selected recipe template; simulating the execution of the production process at the target scale using the target setup specification, the selected recipe template, the input value for the at least one variable parameter and the parameter evolution information; determining, from the simulation, one or more target trajectories for the process parameters; comparing the source trajectory(ies) and the target trajectory(ies); computing, based on the comparison and on the at least one acceptability function, an acceptability score for the selected recipe template; computing an optimal value for the at least one variable parameter in the selected recipe template by optimising the acceptability score and/or computing an acceptable range for the at least one variable parameter, wherein values within the acceptable range yield an acceptability score above a specific threshold; (f) if there is at least another pertinent recipe template, repeating the target determination step for at least another pertinent recipe template; (g) selecting at least one of the plurality of recipe templates and corresponding computed value(s) for variable parameter(s) as target recipe based on the acceptability scores computed for one or more recipe templates.

Document EP 3 291 038 A1 discloses a method comprising: providing a database, the database storing sets of process parameters to control and monitor respective ones of a plurality of processes performed in order to produce products, wherein each of the stored sets of process parameters is associated with a successful trajectory of a respective one of the processes performed according to the respective set process parameters, wherein each successful trajectory is a time-based profile of measurements recorded during performance of the respective process; receiving a set of characterizing process parameters that characterize the process; identifying a first set process parameters from the stored sets of process parameters, the first set of process parameters having a specified degree of similarity to the set of characterizing process parameters, wherein the first set of process parameters is associated with a first successful trajectory, controlling and monitoring the process using the first successful trajectory, comprising: recording measurements of the process; estimating a trajectory of the process based on the recorded measurements.

Summary

It is an object of the invention to optimise a process for the production of chemical, pharmaceutical and/or biotechnological products, wherein the process is regarded in its entirety and complexity. In particular, it is an object to account accurately for the plurality of factors affecting the execution and possible outcomes of the process and to duly consider the plural aspects characterizing the performance of the process. In this context, it is also an object to integrate effectively available knowledge about the process in the optimisation procedure.

The achievement of these objects in accordance with the invention is set out in the independent claims. Further developments of the invention are the subject matter of the dependent claims.

According to one aspect, a computer-implemented method of determining at least one recipe for a production process to produce a first chemical, pharmaceutical and/or biotechnological product is provided. In particular, the determined recipe(s) may be the optimal recipe(s) in the sense that the production process is optimised in terms of a utility function, as will be explained below.

Examples of processes according to the present application are industrial processes, particularly biopharmaceutical processes. Other examples include research and development processes or scientific research.

Examples of inputs or ingredients for a production process according to the present application may include biological material, i.e. materials comprising a biological system, such as cells, cell components, cell products, and other molecules, as well as materials derived from a biological system, such as proteins, antibodies and growth factors. Further ingredients may include chemical compounds and various substrates.

Examples of inputs may include gasses and liquids. Gasses include any or all of air, oxygen, nitrogen, oxygen-enriched air and carbon dioxide. Liquids are typically:

- media (nutrient mix in buffer e.g. glucose + amino acids + salts + water)
- inoculum (organism at relatively high density in media)
- base (used to modulate pH e.g. ammonium hydroxide solution)
- acid (used to modulate pH e.g. HCl solution)
- nutrient feed (high concentration nutrient mix in buffer)
- inducer (modulates behaviour of organism).

A production process of the present application may involve chemical or microbiological conversion of material in conjunction with the transfer of mass, heat, and momentum. The process may include homogeneous or heterogeneous chemical and/or biochemical reactions. The process may comprise but is not limited to mixing, filtration, purification, centrifugation and/or cell cultivation. The production process may involve chemical or biological reactions that take time to complete, e.g. 6 hours for an *E. coli* microbial batch, 18 days for a mammalian cell cultivation and 60 days for a mammalian perfusion process.

In particular, "producing" a chemical, pharmaceutical and/or biotechnological product indicates any processing of the inputs, including but not limited to modifying a state of any of the inputs (e.g. changing the temperature, oxygen content etc. thereof), combining any of the inputs reversibly or irreversibly, and using the inputs for creating new material.

Possible products may include a transformed substrate, baker's yeast, lactic acid culture, lipase, invertase, rennet. Further exemplary biopharmaceutical products that can be produced according to the techniques described in the present application include the following: recombinant and non-recombinant proteins, vaccines, gene vectors, DNA, RNA, mRNA, antibiotics, secondary metabolites, growth factors, cells for cell therapy or regenerative medicine, half-synthesized products (e.g. artificial organs). Various production systems may be used to facilitate the process, e.g. cell based systems such as animal cells (e.g. CHO, HEK, PerC6, VERO, MDCK), insect cells (e.g. SF9, SF21), microorganisms (e.g. E. coli, S. ceravisae, P. pastoris, etc.), algae, plant cells, cell free expression systems (cell extracts, recombinant ribosomal systems, etc.), primary cells, stem cells, native and gene manipulated patient specific cells, matrix based cell systems.

Exemplarily, the production process may be a batch process, in which a specific amount of feed medium for feeding an organism is provided as an initial condition and then a control period follows. The production process may be a fed batch process. The fed batch process may involve a culture in which a base medium supports initial cell culture and a feed medium is added to support further growth and/or product production, once the initial nutrients have been depleted. In other words, the fed batch process may involve a batch period followed by a feed period. The production process may be a perfusion process, in which a batch period is followed by a feed period with continual removal of e.g. the product, e.g. by filtration.

Exemplarily, the process may be a mammalian and/or microbial cultivation process.

Techniques described in the present application may be useful for bioreactor processes, and for processes carried out at other levels of production.

The production process is defined by a plurality of steps specified by one or more recipe parameters controlling an execution of the production process.

The production process is defined by the sequence of steps that is performed in order to produce the product and/or produce a particular outcome relating to the product. Some steps may occur simultaneously to one another and other steps may occur in a temporal sequence after one another. A step may correspond to an action carried out during the production process, wherein the action may be passive, such as waiting for an event to occur (such as an increase in oxygen levels due to inactivity of the culture), or active, such as causing an event to occur (e.g. stirring or adding a fluid) or setting values and/or profiles for a given quantity.

Exemplarily, steps that perform actions within a production process in a bioreactor may be typified by the following non-exhaustive list:

- set a set point in terms of stirring, gas supply, gas mix, temperature, pH
- perform a profiled change in terms of stirring, gas supply, gas mix, temperature, pH
- add a selected liquid to bioreactor vessel
- remove liquid from bioreactor vessel
- specify the connection of particular fluids to the bioreactor and the composition of such fluids.

Further, the process may comprise step types that describe the flow of execution, e.g. specifying how/when an event occurs, such as: repeat a step or steps until a condition is met and/or for a specified number of iterations, choose between various options depending on state of bioreactor, wait until a condition becomes true (e.g. wait until dissolved oxygen rises to indicate end of batch phase before starting feed), perform a step or set of steps concurrently (e.g. perform pH control at the same time as temperature control).

The execution of the plurality of steps is controlled by one or more recipe parameters. Exemplarily, the plurality of steps may be specified by a plurality of recipe parameters, with each step being defined by one or more recipe parameters.

In other words, the production process may include (i.e. may be performed according to) at least one recipe parameter that has an influence on performance of the process (e.g., product titre, quality attributes) and the product produced by the process. The recipe parameters control the execution of the process in the sense that they influence the course of the process.

Specifically, the recipe parameters may be controllable, i.e. the values of the recipe parameters may be specifically adjusted prior to and/or during performing the process. In other words, at least one of the recipe parameters can be set e.g. by an operator or by a control system. In particular, the recipe parameters may be the ones describing and/or governing a state and/or behaviour of the equipment used for the production process, e.g. a bioreactor.

In the case of a bioreactor the recipe parameters may include but are not limited to:

- one or more parameters related directly to interventions in the bioreactor, e.g. amount of liquid to remove in a sampling step;
- one or more parameters providing an input to a control loop, e.g. the set point for oxygen in the bioreactor (a control loop in the bioreactor system would then monitor oxygen and adjust e.g. stirring or gassing to hit the set-point);
- one or more parameters providing an input to a profile e.g. the rate exponent in exponential increase of feed; and/or
- one or more parameters specifying a condition to be met (e.g. dissolved oxygen must reach 90% before fed phase can start).

Exemplarily, the recipe parameters may include (but are not limited to) any of the following: stir speed, sampling frequency and volume, total gassing rate, harvest time, glucose concentration in feed, timing, frequency or volume of feed, set points for concentration of dissolved oxygen or other gases, sheer stresses applied to cell population (e.g. from vigorous stirring), amino acid or other nutrient concentration in feed, rate of media replacement by perfusion, inoculum volume, inoculum concentration and trigger points for next stage of process (e.g. $\%O_2$), parameters defining feeding

strategy (bolus vs continuous), temperature profile, pH profile, control approach (set points, P, I and D parameters in proportional-integral-derivative (PID) control), execution times and wait times, volumes and concentrations or various reagents, feeds or other liquids, fill volume, magnitude and timings of changes/shifts to any of the parameters or set points of variables. Profiles may be:

- constant rate (e.g. constant rate feed)
- exponential (e.g. feed exponentially increasing, which typically roughly corresponds to what the organism will be doing)
- polynomial (e.g. order 3 polynomial to correspond to a particular organism growth pattern);

and may be parameterised by one or more recipe parameters.

An exemplary recipe with recipe parameters **A** to **X** may be the following:

- Fill bioreactor with **A** L of media, with a concentration of glucose of **B** $gL^{-1}$ and a concentration of lactate of **C** $gL^{-1}$ and an inoculum density of **D** cells $L^{-1}$.
- Start gassing bioreactor at **E** Lpm. Stir in a PID loop with P, I and D parameters **F, G** and **H** to regulate $O_2$ to **I**%. Control temperature to **J** degrees.
- Wait until %$O_2$ drops to below **L**%, then wait until %$O_2$ rises above **M**%. In the meantime, once every **N** hrs sample **O** L from the bioreactor.
- Once the %$O_2$ rises, feed according to an exponential profile, supplying $Pe^{Qt}$ Lpm of **R**% glucose solution.
- At intervals of **5** hrs, sample **T** L from the bioreactor and measure the cell count. When the cell count reaches **U** cells $L^{-1}$ perform a temperature shift by increasing the temperature for **V** degrees per hr over a period of **W** hrs.
- Wait for a further **X** hrs and then harvest.

In particular, the recipe parameters may be given a constant, fixed value expressed by a given number. The values for the recipe parameters may be set at the outset of the execution of the production process or may be dynamically determined during the execution of the production process. For example, set points and profiles may be dynamically determined to take into account events arising during the production process.

A given step in a recipe may be specified by a given recipe parameter in different ways. In some cases, the value assigned to the recipe parameter is directly used, as in the step "fill bioreactor with **A** L of media". In other cases, the value assigned to the recipe parameter may be "processed". For example, the recipe parameter may be used as argument of a mathematical expression and/or a conditional statement. The mathematical expression and/or a conditional statement may take one or more additional arguments beside the value of the recipe parameters. The other arguments may include, but are not limited to, a process variable (see below), time, a property of the machine onto which the recipe is deployed (e.g. bioreactor volume), or a combination thereof.

Exemplarily one step of the recipe may be "when the dissolved oxygen (DO) drops below 20%, then supplement oxygen". The choice of the recipe parameter "20%" is predetermined, but how this manifests in a given run will vary. The same applies for a simulation run, in which the time at which the DO will drop below 20%, if it does so at all, may vary depending, among others, on any or a combination of the following factors: the process evolution information, the machine specification and the stochastic realisation (these factors will be discussed below).

A recipe comprises the plurality of steps defining the production process. In other words, a recipe is a structured representation of the production process, e.g. of the activity of a bioreactor. This means that the plurality of steps are expressed in a structured manner, e.g. in a format that can be interpreted by a machine.

As already explained above, there are steps indicating an action (passive or active) and steps controlling the flow, e.g. sequence (execute the contained steps in sequence), repeat (repeat the contained steps until a condition is met or a given number of times) and decision (depending on a condition, perform one step or another).

As discussed, the actual behaviour of the steps during (real or simulated) execution, i.e. what happens, is determined by one or more of the recipe parameters and, if applicable, their predetermined dependency to the response of the process variables, i.e. the status of the process.

Accordingly, the recipe comprises the plurality of steps as well as one or more values for the recipe parameters specifying the steps. In other words, the recipe provides a well-defined procedure that can be directly implemented when executing the production process and that dictates how the process equipment is controlled with time.

As explained above, the values of the recipe parameters are predetermined, even if they may be dynamically fed to the recipe during execution (e.g. when they depend on the process variables). Conversely, a recipe template is a recipe in which at least one of the recipe parameters specifying the plurality of steps is a variable recipe parameter being variable and having no predetermined value at the outset.

The method comprises retrieving one or more recipe template composites, wherein a recipe template composite comprises one or more recipe templates.

As explained, a recipe template involves one or more degrees of freedom on how to execute the production process. Different values for the at least one variable recipe parameter result in different recipes being produced from a given recipe template. The difference may be in the values of the recipe parameters only or also in the sequence of steps, e.g. if a path of execution within a recipe template is contingent on a variable recipe parameter. Multiple recipe parameters or only one recipe parameter might be free within one recipe template.

Exemplary recipe parameters that would be free to vary (i.e. variable recipe parameters) may include but are not limited to one or more of the following:

- Concerning attachments to the bioreactor system

  - Concentration of primary carbon source in batch media
  - Concentration of primary nitrogen source in feed media
  - pH of the acid attached for top control of pH
  - buffering capacity of the batch media
  - density of cells in the inoculum
  - percentage of oxygen in oxygen-enriched air

- Concerning profiles and set-points

  - The supply rate for constant gassing in batch phase

  - The rate at which stir speed is incremented over time in the batch phase

  - The P or I parameter in a PI feedback loop for gassing control

  - The maximum air flow rate before oxygen supplementation occurs

  - The exponential coefficient in an exponential profile for feed

  - The initial feed rate in an exponential profile for feed

  - The duration of a plateau phase in a feed profile (for example, after an exponential period)

  - The rate of temperature drop during a temperature shift for induction

  - Temperature set-point during batch phase

- Concerning discrete events in recipes

  - Bioreactor fill volume (as a proportion of total bioreactor volume)
  - Inoculum volume (as a proportion for example, of bioreactor fill volume)

- Concerning recipe structure and flow control

  - The cascade order (e.g. stirring then gassing then 02 supplementation; or gassing then stirring then O2 supplementation) in dissolved oxygen (DO) control
  - Threshold for primary carbon source and/or DO to initiate the fed phase
  - Frequency of sampling
  - Volume of sample each time a sample is taken, or for particular sampling steps
  - Threshold primary carbon source in sample to trigger feed supplementation
  - Threshold cell density to initiate harvest.

Different recipe templates may be used at granularity of different organisms, clones, or production processes, deployment systems (e.g. disposable vs stainless steel reusable production bioreactors). Alternatively or in addition, a given recipe template may be used across a range of different organisms, clones, production processes or deployment systems, capitalising on the use of recipe parameters that are themselves functions of variables or parameters, for example, the bioreactor volume.

Recipe templates might also be shared between organisations or categorised on the web in a repository. They might be selected based on user feedback.

Recipe templates may be part of a library. For example, recipe templates may be stored in a structured data format (e.g. persisted by a serialiser in XML). Recipe templates could equally be stored in a database, spreadsheet, and stored locally, in an organisation file system, in a database within an organisation or on the cloud (remotely).

Further, each recipe template composite comprises one or more recipe templates. In the cases in which the recipe template composite comprises only one recipe template, the composite coincides with the recipe template. In other cases, the recipe template composite comprises a plurality of recipe templates, wherein the recipe templates may differ in the execution of one or more steps or may be identical. The recipe templates in the same recipe template composite may have the same variable recipe parameter(s), a subset of the recipe parameters may be shared between the constituent recipe templates, or none may be shared. The plural recipe templates in the composite are meant to be employed for parallel, sequential or overlapping executions of the production process, e.g. on plural bioreactors.

There may be several different motivations for having multiple executions of the production process in parallel, e.g. if a large amount of titre is needed and the outputs of the runs should be combined in order to obtain it, or in order to address the risk of one of the runs failing, or in order to obtain composite information from the multiple processes.

As explained below, the recipe template composites are used to simulate the production process. In the case of more than one recipe template composite, running a plurality of simulations respectively based on the plurality of recipe template composites enables the method to explore a wider range of available alternatives to find the optimal recipe(s), with respect to a case in which a single recipe template composite is considered.

The method further comprises retrieving process evolution information that describes the time evolution of process variable(s) that describe a state of the production process, wherein the process evolution information comprises evolution parameter(s) and at least one of the evolution parameter(s) is a variable evolution parameter being variable and having no predetermined value at the outset.

The process variables describe the state of the production, which is of course at least partly determined by the behaviour of the equipment, as well as by the specifics of the equipment and the inputs (e.g. organism) used. The values of these process variables may be intrinsic to the production process and not directly adjustable. However, they may be indirectly adjustable by modifying factors that affect them, such as the recipe parameters. Further, process variables may influence each other.

The values of the process variables change during the production process. The measured value of a process variable at a given time during the process (either executed in the real world or simulated) is usually referred to as "process value".

For example, the process variables for a production process in a bioreactor may be classified as:

  a. calculable knock-on effects of the recipe parameters as a result of the geometry and capabilities of the bioreactor, e.g. tip speed, stir speed as proportion of maximum bioreactor stir speed, superficial gas velocity;

  b. knock-on effects that can be obtained from previous empirical research e.g. $k_L a$, mixing time, power input, minimum eddy size;

  c. variables that can be calculated from those in point (b) together with properties of the bioreactor e.g. power per unit volume;

  d. variables which, due to a control loop in the process, arise from feedback from simulated bioreactor properties and aspects of the process, e.g. gassing rate, gas mix and stir speed;

  e. variables that result from the dynamics of oxygen or other gasses within the bioreactor as affected by e.g. stir speed, gassing etc., e.g. DO, partial pressure of carbon dioxide (ppCO2);

  f. variables that result from the dynamics of the organism, as dictated by an organism model and the other variables above and below (e.g. cell count, cell activity, cell metabolism, cell viability);

  g. variables that result from liquid addition or removal calculable from the recipe parameters, e.g. fill volume, and potentially a model for evaporation;

  h. variables that result from a combination of liquid addition and removal and also the dynamics of the organism, e.g. concentrations of analytes;

  i. environmental conditions which may be modulated both by the recipe steps but also by the organism e.g. pH, osmolality and temperature.

The process evolution information characterises how the one or more process variables change with time, including initial conditions for the process variables. In particular, the process evolution information may comprise relations empirically derived from previous executions of the production process and/or equations derived by theoretical model about the evolution of the production process. The process evolution information may comprise the explicit dependence of one or more variables on time together with relations linking the process variables to each other.

Process evolution information may have a number of constituent parts e.g. process evolution information related to cell dynamics, to bioreactor dynamics and/or to chemical reactions occurring within the bioreactor.

The process evolution information may also describe events related and going beyond what may be strictly considered to be the production process *per* se. In particular, the process evolution information may also describe what happens outside a bioreactor e.g. time evolution of samples taken, or in a secondary reactor vessel, or in a downstream processing facility (e.g. a purification unit), and/or in a piece of analytics equipment.

In one example, the cell culture constituent of the process evolution information is modelled using a hierarchical set of ordinary differential equations describing "cell processes", where any individual cell process describes, amongst other things, the dependencies of that cell process, i.e. how its rate depends on pH, DO, temperature, and concentrations of various nutrients, and the results of that process, i.e. the change that occurs in cell count, titre, pH, DO etc. as a result of that process being active. It is generally noted that a "set" can comprise one or more elements.

A given cell process A is allowed to depend on one or more driving processes, X, Y ... such that the rate of A is computed and then multiplied by either the sum or product of the rates of X, Y. A given cell process may depend on no driving cell process or any number of driving cell processes, and a given cell process may drive no other cell process or any number of other cell processes.

In a very simple case, for example, where there is just one dependency (on temperature) and one consequence (cell growth), this amounts to solving the differential equation:

$$\frac{d\rho}{dt} = r_g \rho N(T - T_{opt}, T_{sens}) \tag{1}$$

where $p$ is cell density, $t$ time, $r_g$ maximum growth rate, $T$ temperature, $T_{opt}$ optimum growth temperature, $T_{sens}$ indicates the sensitivity of the growth to the temperature, and $N(x,s)$ denotes the value of a normal distribution with standard deviation s at x.

A more typical case would have considerably more dependencies (e.g. dependency on key nutrients) and consequences (e.g. reduction in DO due to cell activity, elevation of temperature in the case of microbial cell activity, reduction in quantities of nutrients etc). In addition, there may be a number of such cell processes with an additive effect e.g. constitutive growth, death due to toxin presence, product accumulation, etc.

The process evolution information for the cell growth then amounts to describing the "cell processes" variables and dependencies on each other. This may take several forms:

a. Tabulated data (such as could be present in a spreadsheet) whereby each of the cell processes has a row to itself, and within each row, the parameters for the various potential dependencies are supplied (with respect to a hard-coded library of functional forms for the dependencies)
b. Database tables, for example, where there may be tables for

DB_CELL_CULTURE_MODEL,
DB_CELL_CULTURE_PROCESS,
DB_CELL_CULTURE_PROCESS_LINK,
DB_CELL_CULTURE_PROCESS_DEPENDENCY,
DB_CELL_CULTURE_PROCESS_DEPENDENCY_PARAMETER,
where DB_CELL_CULTURE_MODEL catalogues the named models which can then be referenced by the software, DB_CELL_CULTURE_PROCESS catalogues the cell culture processes within any model, DB_CELL_CULTURE_PROCESS_LINK relates entries in DB_CELL_CULTURE_PROCESS together to indicate the fact that some processes drive others, DB_CELL_CULTURE_PROCESS_DEPENDENCY indicates particular dependencies (e.g. by indicating the trajectory variable of the dependency and the form of the dependency), and so on.

c. Structured data formats such as XML, or equally JSON or a proprietary form.

These data might then be stored in several ways:

a. Within the software responsible for performing the determination of the recipe, for example, embedded within a DLL or executable
b. In files available to the s/w on a file system (a file might supply any of these forms)
c. Within a database instance

The data might further then be stored and accessed:

a. Locally to the software performing the determination e.g. on the same file system, or accessed by a database engine built into the s/w, potentially within memory, SD card, hard drive, CDROM, DVDROM etc.
b. Within a file share on a network accessible to the software
c. Across a client/server (e.g. webservice) system, with the client physically separated from the server, that is, located close to the software (physically), or accessible across a network by the software, in the latter case either stored in one location or distributed across multiple sites.

In addition to the cell culture, physical dynamics of the process are described in the process evolution information. This comprises how the process variables are related to each other at a point in time and how each process variable evolves over time.

As with the cell culture model, the model for physical dynamics may be stored as XML, database tables, and so on and the substrate for the data could be DVD, CDROM, hard disk etc., and the location of the data local or distinct, and the distribution of the data in one place or distributed.

To summarize, the data representing the process evolution information may be retrieved according to a plurality of different implementations.

The process evolution information is determined by one or more evolution parameters. These evolution parameters (which may be also referred to as "model parameters") are the factors that characterize how the one or more process variables depend on time and/or on other process variables. The evolution parameters are the parameters that appear in the empirically derived relations and/or theoretical equations. In particular, the evolution parameters may have values that do not depend on time, i.e. that do not vary with time.

Referring to the exemplary differential equation discussed above for cell growth, $\rho$(the cell density) and $T$ (the temperature) represent process variables, while $r_g$ (maximum growth rate), $T_{opt}$ (optimum growth temperature) and $T_{sens}$ (sensitivity of the growth to the temperature) represent evolution parameters. More generally, evolution parameters may exemplarily include any of the following: growth rates, rate of apoptosis or lysis or other change of state, rate of production of inducer or inhibitors, rates or production or consumption of nutrients or products, sensitivities or other descriptive response parameters (e.g. critical values, capacities etc.) to external factors such as pH/pressure/dissolved oxygen (DO)/temperature/$CO_2$/ultraviolet or visible light or other chemical or physical factors, sensitivities or other descriptive response parameters to nutrients or chemical gradients, cytokine concentration, growth rate variability (in the context of a stochastic differential equation), oxygen consumption by cell type distribution, crowding/capacity constants (e.g. max viable cell density), decay or degradation rates of nutrients, products or other, rates of change, relative or absolute magnitudes of changes or shifts, timing or control parameters of any of the above.

In particular, the external factors to which the sensitivities or other descriptive parameters relate may include factors that are set by recipe parameters. For example, the growth of cell may depend on pH, which may be set according to a corresponding recipe parameter.

As explained, the process evolution information provides a model of how the production process behaves on the basis of biological, physical, chemical etc. considerations about the phenomena involved in the production process. Such a model is necessary to simulate the production process, as will be discussed below, and acquire valuable information from the simulations on how to run the actual process.

If the evolution parameters of the process evolution information have a fixed, predetermined or pre-determinable value, a single view on the science behind the process is taken. However, the production processes are rather complex and such an assumption may unduly influence the outcome of the process simulation. In other words, the determination of the optimal recipe(s) may be affected by the specific choice for the values of the evolution parameters.

Accordingly, in order to determine more accurately the optimal recipe(s) by mitigating the effect of the assumed process evolution information, at least one of the evolution parameters is a variable evolution parameter being variable and having no predetermined value at the outset. Exemplarily, only a proper subset of the evolution parameters may be variable. In other examples, all evolution parameters may be left free to vary.

The presence of one or more variable evolution parameters entails a plurality of sets of values for the set of evolution parameters. For example, if there is one variable evolution parameter in a set of three evolution parameters and $n$ different values $v_1, ..., v_n$ are assigned to the variable evolution parameter, there will be $n$ sets of values: $(v_1, f_a, f_b), (v_2, f_a, f_b), ..., (v_n, f_a, f_b)$, with $f_a$ and $f_b$ being the fixed values for the other two evolution parameters. The number of different values considered for any of the evolution parameters may differ from the number considered for another evolution parameter. In reference to the likelihood functions below, the number of different values characterised or evaluated may be pre-determined or dynamically determined until adequate accuracy is reached, depending on the precise algorithm used.

As mentioned, the process evolution information is used to simulate the production process. Running a plurality of simulations corresponding to a plurality of sets of values for the evolution parameters enables the method to explore a wider range of available alternatives to find the optimal recipe(s), with respect to a case in which only a set of values is used for the evolution parameters.

Indeed, conventionally, insights into biological, physical and chemical dynamics are frequently expressed in terms of a single model of choice and further refined through determining the best fit parameters for that model of choice. However, this overrepresents certainty about the science behind the mechanisms, and under-represents variation and uncertainty around the most likely explanation for observed data.

It should be noted that having variable evolution parameters does not only enable one to account for uncertainty in the model parameters but also for uncertainty in the choice of model itself. Indeed, the process evolution information may comprise a plurality of competing models, each having different evolution parameters. In a merely illustrative example, there may be two competing models that describe the evolution of process variables X and Y, wherein the first model comprises equations

$$\frac{dX}{dt} = aXY$$

$$\frac{dY}{dt} = bY$$

and the second model comprises equations

$$\frac{dX}{dt} = cY$$

$$\frac{dY}{dt} = \frac{d}{X}$$

Thus, the first model has evolution parameters (*a*, *b*) and the second model has evolution parameters (*c*, *d*), and the variable evolution parameters of the process evolution information may be (*a*, *b*, *c*, *d*). By assigning values (*a'*, *b'*, 0, 0) or (0, 0, *c'*, *d'*) the first or the second model, respectively, may be selected, so that the production process may be simulated according to different dynamics. In some examples, if no value is assigned to a given evolution parameter, it may be assumed it is zero by default. Accordingly, choosing different sets of values for the evolution parameters may, in some cases, mean choosing different models for the production process.

The values for the one or more variable evolution parameters may be assigned on the basis of a likelihood function, as will be explained below.

The method further comprises retrieving a likelihood function for the evolution parameters, wherein the likelihood function provides a likelihood that value(s) for the evolution parameter(s) are feasible for the production process. In other words, the likelihood function provides a measure of how adequately a certain value for an evolution parameter can describe the production process as modelled by the process evolution information. Said otherwise, the likelihood function maps possible values for evolution parameters to the likelihood that these values correctly describe the process evolution, i.e. the time evolution of process variable(s) that describe the state of the production process.

In one example, the likelihood function may be the rectangular distribution, meaning that all values are equally feasible. In other examples, the likelihood function may be different from the rectangular distribution and may describe which value(s) is/are more feasible than others. In particular, the likelihood function may be a multivariate probability distribution, in the case of a plurality of evolution parameters. The likelihood function may be a function of all evolution parameters, i.e. variable evolution parameters and non-variable or fixed evolution parameters. In this case, the likelihood function may be considered as being the product of the marginal distribution for the variable evolution parameters and the marginal distribution for the fixed evolution parameters, wherein the latter is a delta distribution, possibly multi-dimensional, peaked on the value(s) actually assumed by the fixed evolution parameter(s). Otherwise, the likelihood function may be more simply expressed only as a function of the variable evolution parameter(s).

Possible shapes of the likelihood function include, but are not limited to, any of the following:

- Single maximum with a Gaussian or similar distribution around the maximum (univariate, bi-variate or multi-variate Gaussian or similar)
- Single maximum with a Gaussian or similar distribution around the maximum, truncated beyond a certain range
- Multiple local maxima (univariate, bi-variate or multi-variate)
- Constant within a range (univariate, bi-variate or multi-variate)
- Valleys, regions, hyper-volumes or curves of similar likelihood
- Periodic distributions where the likelihood function corresponds to e.g. a sinusoidal or attenuated sinusoidal function in one or more of its dimensions

The likelihood function may be stored in a database and stored locally, in a local or an organisation file system, in a database within an organisation or on the cloud (remotely).

The likelihood function describes and can be visualised as a likelihood space. By extension, the likelihood function may be referred to as "likelihood space", "probability space" or "knowledge space".

The likelihood function may be determined on the basis of prior knowledge about the values of the evolution parameters. This prior knowledge may be derived from any of the following sources and any combinations thereof: data from literature, personal experience of a user, data based on theoretical considerations, data from completed runs of the same production process, data from ongoing runs of the same production process, data from completed or ongoing runs of production processes related to the production process in question. These options will be discussed singularly in the following. The term "run" is herein used for actual execution of the production process in the real world, while "simulation run" is used for the simulated execution thereof.

Generally, ways in which prior knowledge may be expressed include, but are not limited to:

- Simple bounds on evolution parameter values
- Semi-qualitative description, e.g. manual delineation of single or concentric likelihood region on a surface, manual setting of bounds, setting/dragging points on a spline curve etc. Semi-qualitative description may e.g. be achieved by parameterising a generic function or template that itself describes a class of likelihood surfaces e.g. supplying the minimum and maximum of a rectangular region of constant likelihood in a two-dimensional likelihood function, with the parameters specified either manually, or by interaction with a graphical system.
- Distribution around a common mean, e.g. normal distribution where the sigma describes natural (non-directional) variance and experimental noise
- Other common distributions described by means of shape parameters, such as beta, Bernoulli etc.
- Long-tailed distribution (e.g. Cauchy, Gamma-variate) describing knowledge that a parameter is more likely to fall on one side of the mean than the other, or accounting for large directional outliers
- Platykurtic distribution, in which parameters have strong boundaries but less clearly defined mean values
- Uniform distribution within or without bounds
- Bi-model (or higher order) distributions, e.g. cell can be in one of two (or more) 'states'
- Higher dimensionality multivariate distributions of many types, describing the relationship to other evolution parameters (e.g. multivariate normal, gamma or beta distributions)
- Prior or constraints on the ratio, difference, sum or product of pairs (or more) of evolution parameters, or evolution parameters and environmental conditions, using any of the above distributions or simple arithmetic descriptions or semi-qualitative descriptions
- Other functions describing the relationship of or constraints on evolution parameters to each other or their environment
- Approximations of mappings from evolution parameters onto a likelihood by indexing into a multidimensional array of empirically determined values, potentially combined with interpolation
- Any combination of the above.

In some examples, the prior knowledge may have to be interpreted in the light of the process evolution information in order to determine the likelihood function. Accordingly, the likelihood function may be computed based on the prior knowledge and process evolution information describing the production process in question and/or other processes.

Deriving the likelihood function from the prior knowledge may be a completely automated process or may require at least partially input from a user. Exemplarily, the user input may be required when the prior knowledge itself is based on the experience of the user (e.g. the semi-qualitative description example above). Additionally or alternatively, the user input may be required to determine how exactly the prior knowledge should be used in deriving the likelihood function, e.g. the user may choose a distribution shape for fitting some data and/or for expressing a given assumption.

In one particular example, the chemical, pharmaceutical and/or biotechnological product may be a first product and retrieving the likelihood function may comprise:

- retrieving akin data related to at least one akin production process to produce a second chemical, pharmaceutical and/or biotechnological product, wherein the at least one akin production process has been at least partially performed and wherein the at least one akin production process is different from the production process;
- retrieving relatedness information providing a quantitative indication of similarity between the production process and the akin production process;
- computing the likelihood function based on the akin data and the relatedness information.

In other words, according to this particular example, a transfer of process knowledge between processes that differ from each other, e.g. because of recipe, cell type or media used, is made possible. The use of relatedness information can be particularly useful if there is no previous knowledge available about a given process/product. Further, even if previous knowledge is available, it helps to characterize the likelihood space more accurately, that is by modulating the likelihood landscape and, potentially, for example, increasing the set of evolution parameters' values which have zero or vanishingly small likelihood.

The akin production process is a production process and, as such, the above explanation about the nature and the features of a production process is equally applicable. However, the akin production process is different from the production process. In some cases the difference may be intrinsic to the process, e.g. the two processes may differ at least in the inputs or ingredients used therein and/or in the products and/or in the scales at which the processes are performed. In other cases, the difference may be due to one or more "external" factors, such as the use of different equipment (including analytical equipment), wherein the equipment may be different also because e.g. it has been upgraded/modified in the course of time. Accordingly, the first product may or may not differ from the second product.

The akin data are data measured and/or derived from a run of the akin production process and/or are related in another way to the akin production process. The run of the akin production process may have been already completed, i.e. the akin production process may have been already performed in its entirety, or the run may still be ongoing, i.e. the akin production process may have been only partially performed.

The akin data may comprise, but are not limited to, data related to process variables of the akin production process and/or evolution parameters derived from the akin production process (e.g. by assuming given process evolution information for the akin production process). Exemplarily, the akin data may comprise the trajectories for the process variables of the akin production process. A trajectory corresponds to a time-based profile of values recordable during the execution (real or simulated) of a production process. Additionally or alternatively, the akin data may comprise a prior (e.g. in the form of a probability distribution) about the values of the evolution parameter(s).

The relatedness information (also referred to simply as "relatedness" in the following) provides a quantitative indication of similarity between the production process and the akin production process. As explained, the two processes are different, but they may still hold some degree of similarity in the aspects that differentiate them, so that information extracted from the akin production process may provide insights also concerning the production process. The relatedness is a way to give the appropriate weight to the information from the akin production process, i.e. to express how relevant it is for the production process in question. The relatedness may also express the absence of similarity.

The relatedness may in general pertain to, but is not limited to, similarity between:

- Cell lines
- Organisms
- Microbial populations, including but not limited to generation number, cell preparation conditions e.g. thawing conditions following freeze, or preculture conditions
- Subsets of cell lines or of any of the above (e.g. activated vs. dormant cells)
- Molecules or proteins
- Other products or by-products produced during a process.
- Operating environments including machine attributes but also potentially including location, and/or time of execution of runs from which likelihood functions were obtained
- Machine conditions

In particular, the similarity between the processes, which is quantified by the relatedness, may reside in the process dynamics, which is modelled by the process evolution information, as discussed above. Accordingly, in particular, the relatedness may be a function linking one or more evolution parameters associated with the two processes. In other words, the similarity between the two processes is reflected in the fact that the value of an evolution parameter is not independent from the value of a relevant akin evolution parameter. Thus, the relatedness may indicate the probability that an evolution parameter takes a certain value relative to a given value for the relevant akin evolution parameter.

Exemplarily, the process evolution information that can model the two processes may at least partly overlap so that the sets of evolution parameters for both processes have a non-zero intersection. In some cases, the process evolution information may be identical.

The relevant akin evolution parameter may be the equivalent akin evolution parameter, i.e. the same evolution parameter, e.g. the growth rate $r$, so that $p_a = r_a$ and $p_b = r_b$. In other cases, the relevant akin evolution parameter may be different, e.g. inhibitor concentration capacity $k$, so that $p_a = r_a$ and $p_b = k_b$. In other words, the similarity may be significant only for pairs of equivalent evolution parameters (former case) or also for pairs of different evolution parameters (latter case).

The same applies for a plurality of evolution parameters $p_{a1}, p_{a2} .... p_{aN}$ and relevant akin evolution parameters $p_{b1}, p_{b2}, ... p_{bN}$. In the case in which the similarity is significant only for equivalent evolution parameters, such that the relatedness function $R(p_{a1}, p_{a2} .... p_{aN}, p_{b1}, p_{b2}, ... p_{bN})$ may be reduced to the product $R(p_{a1}, p_{b1}) * R(p_{a2}, Pb2) * ... * R(p_{aN}, p_{bN})$.

Relatedness between processes may be estimated a *priori* by virtue of knowledge of the entities concerned (e.g. 5 different clones of Chinese hamster ovary (CHO) cells are known a *priori to* have higher similarity than a clone each of CHO, *E. coli, P. pastoris,* human embryonic kidney (HEK) and *G. graminis*). For example, a given, constant relatedness *Rc* may be assumed for cell-lines for a given molecule and organism, 0.1*Rc* between cell-lines for different molecules for the same organism, and 0.01*Rc between different organisms.

Alternatively or additionally, relatedness may also be determined a *posteriori* given data concerning dynamics of the entities concerned e.g. by Bayesian inference.

Ways in which relatedness may be expressed include (but are not limited to):

- Qualitative description of the system by a user, e.g. 'same', 'similar', 'dissimilar', 'no similarity', to which constant values are associated
- Semi-qualitative description by a user e.g. manual delineation of single or concentric likelihood region on a surface, manual setting of bounds, setting/dragging points on a spline curve etc., wherein the user input is translated into quantitative constraints
- Distribution around a common mean, e.g. normal distribution where the sigma describes natural (non-directional) variance and experimental noise
- Long tailed distribution (e.g. Cauchy, Gamma-variate) describing knowledge that a parameter is more likely to fall on one side of the mean than the other, or accounting for large directional outliers
- Platykurtic distribution where parameters have strong boundaries but less clearly defined mean values
- Uniform distribution within bounds (i.e. no similarity)
- Bi-model distributions (e.g. cell can be in one of two 'states')
- Higher dimensionality multivariate distributions of many types, describing not only the relatedness of equivalent evolution parameters but their relationship to other evolution parameters simultaneously (e.g. multivariate normal, gamma or beta distributions)
- Relatedness describing the ratio, difference, sum or product of pairs or more of parameters using any of the above distributions
- Any combination of the above

Retrieving the relatedness information may comprise receiving a user input selecting the relatedness information, e.g. a distribution shape and/or parameters for the distribution shape.

Using the akin data and the relatedness information, the likelihood function may be computed. For example, the likelihood function $L(p_a)$ for evolution parameter $p_a$ may be obtained as follows:

$$L\left(p_a\right) = \int R(p_a, p_b) L'(p_b) dp_b \qquad (2)$$

wherein $R(p_a, p_b)$ is the relatedness information and $L'(p_b)$ is the likelihood function for the akin evolution parameter $p_b$ obtained from the akin data.

If the akin data comprise only trajectories, $L'(p_b)$ may be replaced by $L'(p_b|pvar_b)$, wherein $pvar_b$ is the tuple (or vector) of the process variables values for the akin production process. $L'(p_b|pvar_b)$ may exemplarily be estimated using Bayes' theorem, the akin data about the process variables and assuming no prior or a broad prior.

Alternatively, the prior may also be part of the akin data and originate e.g. from theoretical models. In particular, in order to estimate $L'(p_b|pvar_b)$ as mentioned, fitting of process evolution information that models the akin production process to the akin data may be performed.

As mentioned, the akin data relate to at least one akin production process. In some examples, there may be a plurality of akin production processes and a plurality of sets of akin data may be correspondingly retrieved. Similarly, relatedness information indicating the similarity between each of the akin production processes and the production process may be retrieved and the likelihood function may be computed using the akin data and relatedness information relative to each akin production process.

Alternatively or additionally, retrieving the likelihood function may comprise retrieving current data related to an ongoing run of the production process and computing the likelihood function based on the current data.

Alternatively or additionally, retrieving the likelihood function may comprises retrieving historical data related to one or more past runs of the production process and computing the likelihood function based on the historical data.

Constraints on the values of the evolution parameters may be obtained on the basis of knowledge acquired by already running the production process. It can be considered that the production process has a maximal similarity, i.e. it is identical, with itself. In this perspective, considering data relating to the production process itself may be considered a special case of considering an akin production process, with relatedness equal to one. For example, more precisely, $R(p_a, p_b)$ in the equation (2) above would be a Dirac delta function $\delta(p_a - p_b)$.

Accordingly, the historical data and the current data, similarly to the akin data, are data measured and/or derived from a run of the production process and/or are related in other way to the production process. The run of the production process may have been already completed, in the case of the historical data, or the run may still be ongoing, in the case of the current data.

The historical/current data may in particular comprise numerical values of the process variables of the production process, e.g. as a function of time, i.e. the trajectories. In some examples the likelihood function may be computed as the posterior probability $L(p|pvar)$, with $p$ the tuple of evolution parameters and $pvar$ the tuple of process variables. Using Bayesian inference, the posterior probability is given by

$$L\left(p|pvar\right) = \frac{L(pvar|p)*L(p)}{L\left(pvar\right)} \tag{3}$$

with $L(pvar|p)$ indicating the probability of observing certain values for the process variables given a set of values for the evolution parameter(s), $L(p)$ being the prior probability and $L(pvar)$ the marginal likelihood.

$L(pvar|p)$ may be determined from the values of the process variables by fitting them to the process evolution information. Optionally, the historical/current data may also comprise the prior about the evolution parameter(s), $L(p)$, or the prior may be input e.g. by a user in response to a prompt. $L(pvar)$ may also be determined from the values of the process variables. Alternatively, since $L(pvar)$ is a normalization factor, it may be neglected when the goal is optimisation, as in the case of the method herein described.

Any of the various sources discussed above may be combined for computing the likelihood function, so that the likelihood function may be computed based on the akin data in combination with relatedness and/or the current data and/or the historical data.

It should be noted that the likelihood function may be a function with an analytical expression or may be a function whose value is estimated numerically, e.g. numerical optimisation or via Monte Carlo methods. In cases where the likelihood function is at least in part determined by consideration of akin data, and/or by fitting to a trajectory of process variable(s), the function will typically be non-analytic.

The likelihood function is a way to take into account any prior knowledge about the values of the evolution parameters in a systematic and accurate way. To summarize, the likelihood function may be based on knowledge obtained from current and/or past runs of the production process in question and/or akin production processes. In addition or alternatively, the likelihood function may be based on knowledge coming from scientific literature and/or theoretical assumptions. In some examples, the likelihood function may be derived from all these sources.

The method further comprises retrieving a mapping that maps the one or more process variables onto one or more performance indicators. The mapping associates the value(s) for the process variable(s) to value(s) for at least one performance indicator. In some examples, the mapping maps the time series (or trajectories) of the one or more process variables onto one or more performance indicators.

A performance indicator is a quantity that describes a characteristic of one or more outputs of the production process, in an exemplary case, the product itself. In particular, the performance indicator may be a measurable quantity related to a chemical, biological, physical attribute of the one or more outputs. Examples of performance indicators include but are not limited to final titre, rate of increase of titre, total feed used, quality of the product, running time of experiment or bioreactor, time for downstream process to complete, duration of cell survival or cell activity, maximum growth rate or density of cell population, concentration of impurities including but not limited to by-products of cell metabolism and cell death, robustness or repeatability of process, robustness of product (rate of degradation of product in controlled conditions over time), robustness of cell line (stability of genetic code over generations and/or ability of cells to withstand particular conditions e.g. pH extreme or high shear), cost of substrates, disposables materials or other costs.

Exemplarily, performance indicators like the total feed used, the maximum cell density and the rate of increase of titre require the trajectories of the process variables, while other performance indicators, e.g. the final titre, are mapped from a single value of a process variable, e.g. at the end point.

One or more process variables may be mapped to one performance indicator. This means that the value of the performance indicator is influenced by the value(s) of the one or more process variables. Further, a given process variable may be relevant for, i.e. influence, more than one performance indicator. In some examples, a process variable may be itself a performance indicator, so that the mapping is the identity. In other examples, the mapping may be different from the identity.

If the state of the production process is characterized by a plurality of process variables, the mapping may map all process variables or only a proper subset thereof.

In some examples, e.g. for the cases in which a recipe template composite comprises more than one recipe template, the mapping may take a plurality of values for a single process variable, wherein the values come from parallel or multiple runs (real or simulated) of the production process.

The mapping may depend on how the production process is performed, namely on the recipe used for the production process. Accordingly, the mapping may need not only the process variable(s) but also the recipe parameters as an input. Alternatively, the method may comprise retrieving a plurality of mappings, each corresponding to a different recipe.

The mapping may be based e.g. on previous runs of the production process and/or on theoretical predictions. The mapping may be stored in a database, spreadsheet, and stored locally, in an organisation file system, in a database within an organisation or on the cloud (remotely). It should be noted that mapping may be a function with an analytical expression or may be a function estimated numerically, e.g. via Monte Carlo methods.

The method further comprises retrieving a utility function for at least one of the performance indicators, wherein the utility function provides a desirability value associated to the performance indicator(s). In other words, the utility function quantifies the overall worth or benefit of the performance of the production process on the basis of the value(s) of the performance indicator(s).

In the case of a single performance indicator, the utility function may simply quantify how good or how bad a specific value of the performance indicator is. For example, if the performance indicator is the titre, the utility function may be a monotonic function, indicating that larger values of the titre are preferred to smaller values. If there are more performance indicators, the utility function takes into account the interplay of the different performance indicators in assessing the overall worth of the performance. For example, if the performance indicators are the titre and the quality of the product, a lower titre associated with a very high quality may still be desirable. In some examples, the utility function may be constant within a range, and largely negative outside the range (i.e. a strong requirement for "robustness").

The worth of the performance may be evaluated according to one or more various factors, including, but not limited to, efficiency, yield, safety, reliability, costs. In particular, the utility function may be defined depending on a specific, desired goal for the determination of the optimal recipe. Indeed, the production process may be optimised with respect to many different aspects. Examples of goals may include, but are not limited to, optimising a given performance indicator, evaluating which clone among a set of clones is most suitable for the production of a molecule, compensating for unexpected conditions, scaling the production process.

Even if the mapping maps the process variable(s) to more than one performance indicator, the utility function may be a function of only a subset of the performance indicators. Further, the utility function may be a function of performance indicators that are not derived from process variables, such as the overall running time of the production process. In other words, the utility function takes as argument at least one performance indicator derived from a process variable via the mapping (which, in some cases, may be simply the identity function) and may optionally take as argument also one or more performance indicators not derived from a process variable. It should be noted that the utility function may be a function with an analytical expression or may be a function estimated numerically, e.g. via Monte Carlo methods.

In some examples, e.g. for the cases in which a recipe template composite comprises more than one recipe template, the utility function may take a plurality of values for a single performance indicator, wherein the values come from parallel and/or multiple runs (real or simulated) of the production process.

As explained so far, the output of the utility function depends directly on the performance indicator(s), and, since the performance indicator(s) can be linked to the process variable(s) via the mapping, it depends indirectly on the process variable(s). Further, since the process variables depend on the process evolution information, specifically the evolution parameters, the output of the utility function also depends indirectly on the evolution parameters. Since the values for the evolution parameters are based on the likelihood function, the output of the utility function also depends indirectly on the likelihood function.

To summarize, the method requires a plurality of inputs, namely the plurality of recipe template composites, the process evolution information, the likelihood function (which is based, optionally, on relatedness information), the mapping and the utility function. These inputs are used, as explained in the following, to simulate execution of the production process and select, based on the results of the simulation, the optimal recipe template composite with the optimal value(s) for the variable recipe parameter(s) among the plurality of recipe template composites and the plurality of possible values for the variable recipe parameter(s).

The method comprises

- selecting a recipe template composite and performing a first optimisation step comprising:

-- providing a set of input values for the at least one variable recipe parameter in the recipe template composite;
-- performing a second optimisation step providing a utility score;
-- repeating the second optimisation step for at least another set of input values, thereby obtaining a plurality of utility scores;
-- identifying the optimal utility score from the plurality of utility scores;

- if only one recipe template composite was retrieved, selecting the set of input values that yields the optimal utility score together with the one recipe template composite as the at least one recipe for the production process; or
- if more than one recipe template composite was retrieved:

-- repeating the first optimisation step for each recipe template composite, thereby obtaining a plurality of optimal utility scores;
-- identifying the best optimal utility score among the plurality of optimal utility scores;
-- selecting the recipe template composite and the set of input values that yield the best optimal utility score as the at least one recipe for the production process.

The method comprises a series of nested loops, wherein some loops may reduce to a single iteration in some cases. The outermost loop involves considering different recipe template composites, while the next loop involves considering different options for the values of the variable recipe parameter(s). The different iterations of each loop may be performed sequentially, i.e. one after the other. Alternatively, the iterations may be performed in parallel. Generally, the execution of the method may comprise a combination of parallel and sequential executions of the iterations of the loops. Accordingly, "looping" as used herein merely indicates considering each one of a plurality of possibilities when performing the simulation and does not necessarily indicate a succession in time. Hence, the one or more repetitions of any one of the steps described below may occur at the same time as the "first" execution of the step and/or may occur in a temporal sequence.

For a given recipe template composite a first optimisation step is performed, which comprises providing a set of input values for the at least one variable recipe parameter in the given recipe template composite.

As already mentioned, a set of input values may comprise one or more elements. If the recipe template composite comprises only one recipe template and the recipe template comprises only one variable recipe parameter, then the set of input values comprises only one input value. In the other cases, the set of input values comprises more than one value. For example, if the recipe template composite comprises two recipe templates, each having one variable recipe parameter (which may be the same quantity for both, e.g. pH set point), the set of input values comprises two values, one for the variable recipe parameter in the first recipe template and one for the variable recipe parameter in the second recipe template. If the recipe template composite comprises a single recipe template with a plurality of variable recipe parameters, the set of input values comprises a corresponding plurality of input values.

The input value(s) may be an educated guess based on process knowledge and could be part of a set of possible values linked to the specific recipe template composite. For example, each recipe template composite may comprise one or more candidate values together with a testing range for each value, so that an input value may be chosen as any value lying in an interval around a candidate value. The candidate value(s) may, thus, be retrieved together with the recipe template composites. Alternatively, the input value(s) may be supplied by a user.

Once a set of input values has been assigned to the variable recipe parameter(s), a second optimisation step providing a utility score is performed. The details of the second optimisation step will be discussed below; in any case the utility score is a numerical value associated with a certain recipe template composite and a certain set of input values. The second optimisation step is repeated for at least another set of input values, in some cases for a plurality of other sets of input values. The various sets of input values are different from each other in at least one input value.

To each set of input values, the second optimisation step associates a utility score. Since the second optimisation step is performed for a plurality of sets of input values, as a result a plurality of utility scores is obtained. The repetition of the second optimisation step constitutes the second outermost loop, nested in the potential outermost loop over the recipe template composites, which is discussed below. The number of different sets of input values, i.e. the number of iterations for the second optimisation step, may be a fixed, predetermined number or may be set each time the method is performed, e.g. by a user, or maybe determined computationally, e.g. by the iterations required to reach convergence of an algorithm.

Besides performing the second optimisation step for different sets of input values, the first optimisation step comprises identifying the optimal utility score from the plurality of utility scores. Each value of the utility score, as mentioned, is associated to a set of input values. Said otherwise, the value of the utility score is dependent, among other things, on the value(s) assigned to the variable recipe parameter(s) in the selected recipe template composite. Thus, the utility score may be seen as a function of the one or more variable recipe parameters, hereafter called "score function". In the case of a plurality of variable recipe parameters, the score function is a multi-variable function. The score function may be evaluated by means of numerical methods on the basis of the plurality of discrete values actually computed.

The score function is optimised to find the optimal set of input values for the variable recipe parameters. Finding the optimal value(s) for the variable recipe parameter(s) is an optimisation problem in which the score function is maximised or minimised. Depending on the number of variable recipe parameters, the optimisation problem may be a multi-dimensional problem. Depending on how the utility function as well as the quantities derived from it and discussed below (e.g. utility tally, utility value) are defined, the optimal utility score may be the highest or the lowest utility score. Examples of optimisation algorithms are the Nelder-Mead method and the steepest descent method.

The result of optimising is that the set of input values that give the optimal (e.g. highest score) for the selected recipe template composite is found. The optimal utility score and the set of input values associated thereto may exemplarily be stored, e.g. in a storage device such as a hard disk.

If only one recipe template composite was retrieved, the outermost loop "collapses" to a single iteration and the first optimisation step is performed only once. Accordingly, the set of input values that yields the optimal utility score identified within that first optimisation step, or "optimal set of input values", together with the recipe template composite is chosen as the at least one recipe for the production process. Indeed, by definition, a recipe template with values assigned to its variable recipe parameter(s) becomes a recipe. In this way, the optimal way of executing the production is determined, namely by determining the recipe(s), i.e. recipe template composite plus set of input values, that together optimize the score function.

If there is more than one recipe template composite, the first optimisation step is repeated for each of them, so that an optimal utility score is determined for each recipe template composite. Once the iteration over all recipe template composites is over, i.e. once the outermost loop has completed, the best optimal utility score among the optimal utility scores corresponding to the plurality of recipe template composites is identified. Again, the best optimal utility score may be the highest or lowest optimal utility score, depending on how the utility function is defined. The optimal utility scores may form a discrete set, so that the best optimal utility score may be identified simply by comparing the optimal utility scores against each other. The best optimal utility score and the recipe template composite associated thereto may exemplarily be stored, e.g. in a storage device such as a hard disk.

Also in this case, the recipe template composite and the set of input values that are associated with the best optimal utility score are selected as the recipe(s) to be used for the production process.

If the recipe template composite comprises only one recipe template, then only one recipe is determined as the optimal recipe for running the production process. If the recipe template composite comprises more recipe templates, then a plurality of recipes are identified for parallel, sequential or overlapping runs of the production process.

For example, a recipe template composite (A) may comprise two recipe templates for two parallel runs on bioreactors, wherein according to one recipe template bolus feed is used and according to the other gradual feed is used. Another recipe template composite (B) may comprise two identical recipe templates with bolus feed with volume dependent on glucose measurements. For both composites the variable recipe parameter in all recipe templates is the time of harvest. According to the method disclosed herein, it may be determined that it is best to have two parallel runs using the recipe templates from composite A rather than B, and in particular with harvest times of 15 days for the bolus feed and of 18 days for the gradual feed.

To summarize, the final result provided by the method is at least one recipe for running the production process, wherein the recipe(s) can be considered optimal on the basis of one or more specific criteria, which are expressed by the utility function. In the following, the path from the utility function to the utility score will be explained. It should be noted that the term "first/second/third/fourth optimisation step" does not necessarily indicate that an optimisation process is being performed within that step. Rather, each of these steps contributes to the optimisation achieved by the method as a whole, namely finding the optimal recipe(s).

As mentioned above, the second optimisation step provides a utility score, which is obtained by potentially looping over different values for the variable evolution parameters. In particular, the second optimisation step comprises:

-- providing a set of likely values for the at least one variable evolution parameter based on the likelihood function;
-- performing a third optimisation step providing a utility tally;
-- if there is at least another set of likely values that is suitable, repeating the third optimisation step for the at least another set of likely values, thereby obtaining a plurality of utility tallies;
-- computing the utility score by weighting the utility tally(ies) by the likelihood function.

Every time the second optimisation step is performed, the recipe template composite and the set of input values for the variable recipe parameter(s) are "fixed". Within the second optimisation step, the repetition of the third optimisation step represents the third outermost loop, nested within the second outermost loop over the sets of input values.

The third outermost loop is a loop over possible sets of likely values for the variable evolution parameter(s), however this loop involves only optionally a plurality of iterations, namely only if there is more than one suitable set of likely values. In some cases, only one set of likely values for the variable evolution parameter(s) is considered and, thus, the third outermost loop "collapses" to a single iteration.

If the recipe template composite comprises more than one recipe template, in some cases, the same likely values may be used for the variable evolution parameters when simulating, irrespective of the specific recipe template being considered. Accordingly, each set of likely values may comprise one likely value if there is only one variable evolution parameter, or a plurality of likely values if there are more variable evolution parameters. In other cases, different likely values may be used when simulating using different recipe templates. Accordingly, even when there is only one variable evolution parameter, each set of likely values may comprise a plurality of likely values corresponding to the plurality of recipe templates in the recipe template composite.

The set of likely values is selected based on the likelihood function, which can incorporate different types of knowledge and can assume different forms, as explained above. In other words, the one or more likely values are points drawn from the likelihood space.

In one example, the likely value(s) may be the maximum likelihood estimate(s) according to the likelihood function, i.e. the value(s) that maximize the likelihood function. In this case, finding the likely value(s) for the variable evolution parameter(s) is a maximisation problem in which the likelihood function is maximised by systematically choosing values from within an allowed set and computing the value of the likelihood function. Depending on the number of variable evolution parameters, the maximisation problem may be a multi-dimensional problem. Numerical methods, such as Monte-Carlo simulations, or algorithms, e.g. the Nelder-Mead method, may be used to solve the maximisation problem. In some cases, it may be necessary to use multiple starting values for maximisation, as the likelihood space being explored may be highly non-linear and may exhibit multiple maxima.

According to this example, there may be only one set of likely values that maximises the likelihood function, in which case the third outermost loop is not an actual loop, or there may be more than one set of likely values that maximises the likelihood function, in which case the third optimisation step is repeated for each set.

In another example, the likely value(s) may be sampled from the likelihood space, wherein e.g. the sampling may satisfy given constraints, such as that the likelihood function assumes a value larger than a specific predetermined or predeterminable threshold. The sampling may alternatively be stochastic. Also according to this example, there may be one or more sets of likely values. If more than one set of likely values is considered, the number of different sets of likely values, i.e. the number of iterations for the third optimisation step, may be a fixed, predetermined number or may be set each time the method is performed, e.g. by a user, or determined dynamically, for example, on the basis of the variability in outcome from successive samples.

The result of the third outermost loop is to associate a utility tally, which will be explained later, to each set of likely values. Besides the potential loop over different sets of likely values, the second optimisation step comprises computing the utility score based on the one or more utility tallies.

The utility tally is a numerical value associated to a certain recipe template composite, a certain set of input values and a certain set of likely values for the variable evolution parameter(s). In a certain sense, the utility tally can be seen as a function of these three factors and, when computing the utility score, the dependency on the set of likely values is "eliminated". Specifically, this is achieved by combining different utility tallies, each weighted according to the probability that the values for the evolution parameters correctly describe the process evolution, namely the likelihood function.

In one example, the utility score US (for a certain recipe template composite and a certain set of input values) may be obtained as

$$US = \int UT(p)L(p)dp \tag{4}$$

wherein $UT$ is the utility tally function, $p$ represents the vector (or tuple) of the evolution parameters and $L$ is the likelihood function. Equation (4) is a schematic equation in which other details may have been omitted to illustrate the basic concept for computing the utility score, namely that an integral is performed over the space of the evolution parameters. The utility tally function is not a function formulated as an analytic expression, but is rather evaluated numerically by considering the different utility tallies associated to different sets of likely values.

If only one set of likely values is considered, $p'$, it may be interpreted as the likelihood function being a Dirac delta function centred on $p'$, so that $US=UT(p')$.

According to the above equation, the utility score may be considered the expected value of the utility tally function. In other examples, higher moments of the utility tally function may be considered, such as the variance.

To summarize, the second optimisation step provides a utility score for a given recipe template composite and a given set of input values for the variable recipe parameter(s), which is then optimised as described above. Each utility score may exemplarily be stored, e.g. in a storage device such as a hard disk.

As mentioned above, the third optimisation step provides a utility tally, which is obtained by potentially looping over different stochastic realizations. In particular, the third optimisation step comprises:

-- performing a fourth optimisation step providing a utility value;
-- if a stochasticity flag is set, repeating the fourth optimisation step, thereby obtaining a plurality of utility values;
-- computing the utility tally as the utility value or by compounding the plurality of utility values.

Every time the third optimisation step is performed, the recipe template composite, the set of input values for the variable recipe parameter(s) and the set of likely values for the variable evolution parameter(s) are "fixed". Within the third optimisation step, the repetition of the fourth optimisation step represents the fourth outermost loop, nested within the third outermost loop over the sets of likely values.

The fourth outermost loop is a loop that creates multiple versions of a simulation (the generation of the simulation is part of the fourth optimisation step) with the same nominal inputs, in order to account for potential variabilities in the production process. However, this loop involves only optionally a plurality of iterations, namely only if stochasticity is taken into consideration. If variability shall not be accounted for, the fourth optimisation step is performed only once and, thus, the fourth outermost loop "collapses" to a single iteration.

The stochasticity in the production process may be due to equipment or machine variability and/or to process evolution variability. Indeed, the way the production process is simulated or executed in real life is dictated by the recipe with its recipe parameters. However, in reality, the recipe needs to be implemented by a process equipment and the recipe parameters get "translated" into equipment parameters (also referred to as "machine parameters" or "setup parameters"). The machine parameters describe how a specific equipment setup carries out the recipe steps according to the recipe parameters. For a given equipment setup, the "mapping" between the recipe parameters and the machine parameters is fixed. However, unlike the recipe parameters, the machine parameters may be affected by stochasticity.

Ways in which the equipment may introduce stochasticity into the production process may include, but are not limited to:

- Variations in liquid addition volume or timing
- Variations in sampling volume or timing
- Errors in measurement of chemical or other concentrations in liquids being added
- Imperfect accuracy/timing of pH measurements (in feedback loop)
- Imperfect accuracy/timing of temperature measurements
- Imperfect accuracy/timing of other system measurements e.g. $CO_2$, viable cell density (VCD), DO, volume etc.
- Variability of mechanical motion e.g. stirring, shaking
- Chemical or physical gradients generated by geometry of vessels in relation to methods of control

An exemplary correspondence between some recipe parameters and machine parameters is reported in the table below:

| Recipe parameter (illustrative) | Machine parameter (illustrative) |
| --- | --- |
| pH setpoint | Interval between delivery of base<br>Measurement accuracy of pH |
| Stir speed | Power input dependency on stir speed, fill volume and gassing rate<br>Mixing time dependency on stir speed, fill volume and gassing rate |
| Volume of feed to deliver | Accuracy of feed delivery<br>Bolus size of feed delivery |
| Temperature setpoint | Typical variation around setpoint<br>Rate of heating (heating capacity per volume)<br>Rate of cooling (cooling capacity per volume) |

The stochasticity that would affect the actual run of the production process can be introduced in the simulation run by considering the mapping of the recipe parameters onto machine parameters when simulating. For example, stochasticity could be introduced by using stochastic differential equations in the simulation or by sampling from a distribution during simulation, the distribution itself being determined by the machine parameters. The case in which stochasticity is due to machine variability is discussed further below in the context of setup specification.

As already mentioned, additionally or alternatively, stochasticity may be intrinsic to the process evolution itself. In this case, the process evolution information may be stochastic. For example, a stochastic model for cell growth may be:

$$dr = a\, dW,\ r(t=0) = N(r_{g,c},\ r_{g,s})$$

$$d\rho = r\, \rho\, dt,$$

wherein the evolution parameters a, $r_{g,c}$ and $r_{g,s}$ (respectively drift in growth rate, mean initial growth rate and variation in initial growth rate) drive the stochasticity and wherein W is a Wiener process, $p$ is cell density, and N is the normal distribution with specified mean and standard deviation.

Accordingly, in the third optimisation step, the fourth optimisation step (which will be discussed below), i.e. the generation of the simulation, is performed more than once if a stochasticity flag is set. The stochasticity flag signals to the computer system performing the method that the fourth optimisation step needs to be repeated.

The stochasticity flag may be set before the method starts to be performed or may be set on the fly. It may be a flag that indicates how many times the fourth optimisation step shall be repeated, e.g. a non-Boolean flag. Alternatively, the flag may be Boolean, i.e. only indicating whether a repetition must occur or not, and the number of repetitions may be retrieved from a look-up table or input by a user upon prompt. The number of repetitions may further be determined dynamically depending on the outcome from successive iterations of process simulation. The stochasticity flag may be stored in volatile or non-volatile memory.

The result of the fourth optimisation step is a utility value. The utility value is a numerical value associated to a certain recipe template composite, a certain set of input values, a certain set of likely values for the variable evolution parameter(s) and a certain simulation run. If simulation runs are affected by stochasticity, the effect of stochasticity may be mitigated or otherwise explicitly considered as a factor in determining the optimal recipe for the process by compounding a plurality of utility values, as explained below.

If the stochasticity is not introduced in the simulation (i.e. the flag is not set), the fourth optimisation step is performed only once and the utility tally is computed by merely setting it equal to the single utility value obtained from the fourth optimisation step.

If the stochasticity is introduced in the simulation (i.e. the flag is set), the fourth optimisation step is repeated at least once and, thus, a plurality of utility values is obtained. In this case, the utility tally is computed by compounding the plurality of utility values. "Compounding" means combining the utility values in a meaningful manner to address the issue of stochasticity.

Exemplarily, compounding may comprise computing statistics out of the utility values, e.g. location (average, median, mode...), spread (standard deviation, variance, mean absolute difference...), shape (skewness, kurtosis...). In one example, the utility tally may be the average of the utility values, so that the effect of stochasticity is mitigated. In another example, part of the optimisation in determining the recipe may be reducing the stochasticity, so that the utility tally may be the mean absolute difference of the utility values. In such a case, the utility score in the first optimisation step is optimised by finding the lowest value.

To summarize, the third optimisation step provides a utility tally for a given recipe template composite, a given set of input values for the variable recipe parameter(s) and a given set of likely values for the variable evolution parameter(s), which is then used to compute the utility score as described above. Each utility tally may exemplarily be stored, e.g. in a storage device such as a hard disk.

As mentioned above, the fourth optimisation step provides a utility value, which is obtained from the simulation trajectories and by potentially looping over different recipe templates. In particular, the fourth optimisation step comprises:

-- generating a simulation by simulating the execution of the production process using a recipe template in the recipe template composite with the set of input values for the at least one variable recipe parameter, the process evolution information and the set of likely values for the at least one variable evolution parameter;
-- if the recipe template composite comprises more than one recipe template, repeating the step of generating the simulation for each recipe template in the recipe template composite;
-- determining, from the one or more simulations, trajectory(ies) for the process variable(s), wherein a trajectory corresponds to a time-based profile of values recordable during the simulated execution of the production process;
-- computing a utility value by evaluating the utility function using the process variable(s) of the trajectory(ies) and the mapping.

The simulation of the execution of the production process (or "simulation run") is an imitation of the execution of the production process in the real world performed by means of a computer system.

A simulation is generated on the basis of a given recipe template in the recipe template composite and the set of input values for the variable recipe parameter(s), which together provide a recipe, and the process evolution information with the set of likely values for the variable evolution parameter(s). The recipe provides a description of the process to be simulated, while the process evolution information provides initial conditions for the process variables and models the evolution of the process with time.

Within the fourth optimisation step, the repetition of generating the simulation represents the innermost loop, nested within the fourth outermost loop for stochasticity. The innermost loop is a loop that generates a simulation for each recipe template within a recipe template composite. However, this loop involves only optionally a plurality of iterations, namely only if the recipe template composite comprises a plurality of recipe templates. If the recipe template composite comprises only one recipe template, the simulation is performed only once and, thus, the innermost loop "collapses" to a single iteration.

Optionally, the method may comprise retrieving a setup specification (also referred to as "machine specification"). A setup specification includes information about the setup of the process equipment used for executing the production process, such as the scale value of the equipment, e.g. the capacity of a bioreactor expressed in litres. Further, the setup specification may include at least one of the components of the setup and its characteristics, e.g. specifying that the equipment comprises an impeller and, optionally, which kind of impeller and so on. Also, other characteristics of the equipment may be indicated by referring to a model of a product, e.g. Sartorius ambr®. In other words the setup specification describes the equipment used for executing the production process.

Further, the setup specification refers to properties of the setup (machine) which mediate between the specification of the process (in the recipe) and the dynamics of the system (in the evolution parameters).

An example of a setup specification may be ambr® 250 bioreactor with standard sparger and mammalian impeller or Sartorius STR® 50 with ring sparger and two 3-blade impellers.

As explained above, the effect of the recipe parameters on the time evolution of the process variables, as governed by the process evolution information, may be mediated (or modulated) by the machine setup and in particular, machine parameters identified by that machine setup. This may introduce stochasticity in the simulation run. Indeed, the recipe with its recipe parameters dictates how the machine is set to operate. The effects on the process dynamics are mediated by the machine. The machine parameters therefore dictate how the machine desired behaviour (as prescribed by the recipe) maps onto its actual behaviour (as determined by the combination of the desired behaviour and the machine parameters). The actual behaviour of the setup then interacts with the process evolution information to determine how the process variables evolve over time.

Exemplarily, a setup specification may encapsulate information on the feedback loop for temperature control, in particular in terms of the manner in which the machine heats or cools the culture in response to deviation from setpoint, and randomness in terms of deviation from set-point. By way of example, the temperature within the culture vessel may be modelled by a stochastic differential equation as shown below

$$dT = \varepsilon(f,\, dt) + a(T^*\text{-}T)dt$$

where $\varepsilon(f,\, dt)$ is a noise term, or e.g. equivalently:

$$dT = a(T^*\text{-}T) + f\, dW$$

where $W$ is a Wiener process. In this example, $f$ and $a$ are both machine parameters and $T^*$ is the current temperature set-point, as dictated by the recipe. In this case, stochasticity then affects the trajectories by virtue of a dependency e.g. of growth rate on temperature. The effect can be modelled by the system of stochastic differential equations

$$dT = a(T^*\text{-}T) + fdW$$

$$d\rho = r_g\, N(T\text{-}T_{opt},\, \sigma)\, \rho\, dt$$

where $a$, $f$ are machine parameters as before, $T^*$ arises from the simulation of the recipe, as before, $T$ is temperature as a function of time, $W$ is a Wiener process, $\rho$ is cell density, $T_{opt}$, $\sigma$ and $r_g$ are evolution parameters, respectively optimum temperature, temperature sensitivity, and maximum growth rate, N is the normal distribution with specified mean and standard deviation. The solution to the above system is stochastic in both $T$ and $p$.

From the simulation(s) values of a process variable at the different times during the evolution of the process are derived in order to obtain a trajectory. Each trajectory may be understood to summarize and provide an overview of the associated process variable. Each trajectory may be expressed as a curve or graph that describes the time evolution of the process variable during the simulated execution of the production process. In particular, each trajectory may comprise a plurality of points representing values of a variable corresponding to different moments in time. For example, a time unit between successive points may be one hour. In alternative examples, the time unit between successive points may be ten seconds, or a day. The time units may also be unequally spaced within the trajectory.

If there is only one recipe template in the recipe template composite and only one process variable, then only one trajectory is determined. In all other cases, a plurality of trajectories is determined.

As explained above, the utility function depends at least on the performance indicator(s). The value(s) of the performance indicator(s) can be obtained from the value(s) of the process variable(s) by means of the retrieved mapping and the value(s) of the process variable(s) are obtained from the simulation(s). Accordingly, the utility function can be evaluated based on the trajectories via the mapping. As already explained above, in some cases a process variable may be itself a performance indicator and the mapping is simply the identity function. Generally, if $U$ is the utility function, $I$ is the tuple of the performance indicators, $M$ is the mapping and $V$ is the tuple of the process variables, $U(I) = U\{M[V(t)]\}$. The utility value computed within the fourth optimisation step may be, in general, a function of the output of the utility function, i.e. $UV=f[U(I)]$. Exemplarily, $UV=U(I)$.

In some examples, the utility function may be cumulatively evaluated over time in order to compute the utility value. In other words, if the trajectory points (i.e. the different values of a process variable over time) correspond to times $t_1$, $t_2$ ... $t_n$, the utility value may be computed as $\sum_{i=1}^{n} U\{M[V(t_i)]\}$ or some other composite of utility values at selected time points. In other examples, the utility value may correspond to the utility function evaluated at a single time, e.g. $t_n$.

In some cases, each of the one or more variable recipe parameters may be a timepoint. For example, there may be only one variable recipe parameter, the harvest time. The purpose of the loop over the sets of input values in the first optimisation step is to obtain utility scores related to different sets of input values, which, in these specific cases, means obtaining utility scores related to different timepoints. In such cases, a trajectory already provides the values of the process variables as a function of time, so that it is possible to obtain a plurality of utility scores (via the steps in between) directly from the trajectories. Accordingly, in these specific cases, the second outermost loop may be dispensed with.

If there is more than one recipe template in the recipe template composite, i.e. if parallel or sequential runs are to be performed, the overall utility shall be considered. In one example, computing the utility value may comprise combining partial utility values, each partial utility value associated to a recipe template. The utility value may e.g. be given by the arithmetic mean, geometric mean, sum or product of the partial utility values.

In another example, as mentioned above, the mapping to the performance indicator may already take into consideration a plurality of trajectories for a given process variable, each trajectory corresponding to a different recipe template in the recipe template composite. In this case, for m recipe templates in a recipe template composite, the mapping $M$ may be $M(Vi(t), V_2(t), ... V_m(t))$, wherein $Vj(t)$ is the trajectory of the process variable V associated with the j-th recipe template.

In yet another example, as mentioned above, the utility function itself may take as input values of performance indicators corresponding to simulation runs with different recipe templates within a recipe template composite, namely $U\{M[V_1(t)], M[V_2(t)], ... M[V_m(t)]\}$.

To summarize, the fourth optimisation step provides a utility value for a given recipe template composite, a given set of input values for the variable recipe parameter(s) and a given set of likely values for the variable evolution parameter(s), which is then used to compute the utility tally as described above. Each utility value may exemplarily be stored, e.g. in a storage device such as a hard disk.

In conclusion, the path from the utility function to its form that is optimized, i.e. the score function, may - only exemplarily - be described as following (assuming a recipe template composite comprising only one recipe template, for the sake of clarity):

    1) Computing a plurality of utility values all associated with a certain recipe template composite and a certain set of input values, each utility value $UV_i$ being associated with a different set of likely values. The association originates in the fact that a certain utility value is computed by evaluating the utility function that takes as arguments, via the mapping, simulated values of the process variables, and the simulation is run using a certain recipe template composite $R_1$, a certain set of input values $rp_1$ for the variable recipe parameter(s) and a certain set of likely values $pp_1$ for the variable evolution parameter(s). Accordingly, the value $\overline{V}$ of a process variable is conditional on these inputs, so that it could be written that $\overline{V} = \overline{V}|\langle R_1, rp_1, pp_1 \rangle$. Consequently, the utility value is also conditional on these

inputs such that $UV_1|\langle R_1,rp_1,pp_1\rangle = f\{U[M(\overline{V}|\langle R_1,rp_1,pp_1\rangle)]\}$.

2) When considering stochasticity, each utility value has one or more replicas, e.g.

$$UV_1^1|\langle R_1, rp_1, pp_1\rangle, \; UV_1^2|\langle R_1, rp_1, pp_1\rangle, \; ... \; UV_1^m|\langle R_1, rp_1, pp_1\rangle$$ , which are compounded to obtain the utility tally, e.g. by taking the average $UT_1|\langle R_1,rp_1,pp_1\rangle$ = $$\sum_{j=1}^m UV_1^j|\langle R_1, rp_1, pp_1\rangle/m$$ . The plurality of utility tallies is, then, $UT_1|\langle R_1,rp_1,pp_1\rangle, UT_2|\langle R_1,rp_1,pp_2\rangle, ..., UT_n|\langle R_1,rp_1,pp_n\rangle$. From these utility tallies, a utility tally function $UT(pp)|\langle R_1,rp_1\rangle$ may be numerically defined, wherein the utility tally function is a function of the values for the evolution parameters, i.e. the likely values. If no stochasticity is considered, the utility tally function reduces to a utility value function $UV(pp)|\langle R_1,rp_1\rangle$.

3) The utility score associated with the recipe template composite $R_1$ and the set of input values $rp_1$ is obtained by weighting the utility tallies by the likelihood function, e.g. $US_1|\langle R_1,rp_1\rangle = \int L(pp)\cdot UT(pp)|\langle R_1,rp_1\rangle dpp$, wherein $pp$ may be a vector, in the case of a plurality of variable evolution parameters, so that the integral may be multidimensional. In this way, a plurality of utility scores $US_1|\langle R_1,rp_1\rangle, US_2|\langle R_1,rp_2\rangle ..., US_k|\langle R_1,rp_k\rangle$ can be computed and, again, these scores can be used to numerically define a function, the score function $US(rp)|\langle R_1\rangle$. When a function is expressed numerically, it is defined by a list of value pairs $(rp_1,US_1|\langle R_1,rp_1\rangle), (rp_2, US_2|\langle R_1,rp_2\rangle) ..., (rp_k,US_k|\langle R_1,rp_k\rangle)$. Considering how each utility score is obtained, the relation between the score function and the utility tally function can be written in a compact form as $US(rp)|\langle R_1\rangle = \int L(pp)\cdot UT(pp)|\langle R_1,rp\rangle dpp$, with $UT$ becoming $UV$ if stochasticity is not considered.

The steps 1-3 illustrated above provide a general mathematical formalism on how to arrive at the score function from the utility function; however, they are not meant to cover all possible cases. As already explained in detail previously, for example, in some cases only one utility value is computed, or higher moments of the utility tally function are considered.

In a particular example, the method may further comprise providing the at least one recipe to a control system and executing, by the control system, the production process based on the at least one recipe.

In other words, the recipe template composite with relative input value(s) as selected by the above-described method may be fed directly to a control system configured to control the setup equipment to carry out the process. In the case of a recipe template composite comprising multiple recipe templates, the process is run multiple times in parallel or sequentially, e.g. on multiple bioreactors.

When the production process is executed in the real world, the results may be used to provide feedback for the ongoing run and/or future runs. Accordingly, the method may further comprise storing data from the executed production process as historical data and/or storing data from the executing production process as current data.

The method described herein, or at least aspects thereof, may be applied in the context of scaling the production process. Processes for the production of chemical, pharmaceutical and/or biotechnological products are scale dependent; in other words, a process behaves at least partly differently on a small scale (e.g., in a laboratory) in comparison to a large scale (e.g., in production). Usually the process is first performed at small scales and then at successively larger scales. In the following, two exemplary scaling scenarios will be considered, namely scaling from a scale for process development to a scale for manufacturing and scaling from a scale for clone selection to a scale for process development.

Process development scenario

In this case, the process development is at source scale A and the manufacturing is at target scale B. There may be two recipe spaces $\alpha$ and $\beta$ that contain recipe template composites for scales A and B, respectively. The goal may be to find the recipe (recipe template composite plus values for variable recipe parameters) at scale A that, when scaled, will optimize the execution of the production process at scale B.

Similarly to what is described above, one or more recipe template composites (from space $\alpha$) may be retrieved, as well as process evolution information and a likelihood function. A recipe template composite is selected, a set of input values is assigned to the variable recipe parameters and a set of likely values is assigned to the variable evolution parameters on the basis of the likelihood function. Using all these inputs, the production process at scale A may be simulated, thereby obtaining one or more trajectories for the process variables, e.g. trajectories corresponding to different recipe templates within the composite.

Similarly to what described above about akin data, current data and historical data, also the simulated data, i.e. the trajectories, may be used as evidence to create a posterior distribution. In other words, an updated likelihood function may be computed, based on the retrieved likelihood function as a prior, and the simulated data as evidence.

The above-described method for determining at least one optimal recipe may then be performed for scale B, wherein the recipe template composites are taken from space β and the retrieved likelihood function is the updated likelihood function previously obtained. Accordingly, a recipe at scale B may be obtained.

Alternatively, the recipe at scale B may be obtained via: (a) general scaling procedures (b) DoE approaches and linear / quadratic curve fitting (c) the methods described in European patent application 18 000 132 (d) some combination of (a) to (c).

Irrespectively of how the recipe at scale B is obtained, it may be used, together with the process evolution information and values for the evolution parameters drawn from the updated likelihood function, to perform a simulation at scale B. From the trajectories obtained in the simulation, a utility function may be evaluated at scale B, wherein the output of the utility function quantifies the overall worth or benefit of the performance of the production process at scale B.

As mentioned with reference to the features of the utility function above, the output of the utility function depends indirectly on the likelihood function. In this case, the updated likelihood function obtained from the simulated trajectories at scale A is used for the simulation at scale B. Hence, the output of the utility function will indirectly depend on the inputs of the simulation at scale A, in particular the selected recipe template composite and the set of input values assigned to the variable recipe parameters.

Therefore, numerical optimisation methods may be used to find the recipe template composite and the set of input values for the variable recipe parameters at scale A that optimise the output of the utility function at scale B. In this way the recipe (recipe template composite plus values for variable recipe parameters) at scale A that, when scaled, will optimize the execution of the process at scale B can be determined.

The computation of an updated likelihood function as illustrated above may be performed as a stand-alone preparatory step for determining the optimal recipe at the process development scale in view of future manufacturing. Alternatively, the updated likelihood function may be computed and stored while performing the method according to the invention simply for determining a recipe at scale A. In this case, if scaling to B is later to be considered, the updated likelihood function may be already available. Accordingly, in a particular example, the method may further comprise updating the likelihood function based on the trajectory(ies) and storing the updated likelihood function.

Clone selection scenario

In this case, the clone selection is at source scale A and the process development is at target scale B. There may be two recipe spaces α and β that contain recipe template composites for scales A and B, respectively. The goal may be to find the clone at scale A that will optimize the execution when the production process is executed at scale B.

Similarly to what described above, one or more recipe template composites (from space α) may be retrieved, as well as process evolution information and a likelihood function. Each recipe template composite in the recipe space α contains, in this case, a plurality of recipe templates, wherein each recipe template is associated with a clone. In the typical case, the recipe templates here are identical, although in an alternative realisation, a multiplicity of different recipe templates may be associated with each clone, e.g. a set of templates (D, E, F) may be used for clones (1, 2, 3, 4) in all combinations, i.e. D1, D2, D3, D4, E1, E2, E3, E4, F1, F2, F3, F4.

A recipe template composite is selected, a set of input values is assigned to the variable recipe parameters and a set of likely values is assigned to the variable evolution parameters on the basis of the likelihood function. In particular, the set of likely values $G$ comprises a plurality of subsets $G_1, ..., G_n$ corresponding to the plurality of clones. Accordingly, each subset is assigned to a recipe template in the selected recipe template composite.

Using all these inputs, the production process at scale A may be simulated, thereby obtaining a plurality of trajectories for the process variables, wherein, for a given process variable, a plurality of trajectories $T_1, ..., T_n$ corresponding to the plurality of clones is obtained.

Based on the trajectories, the best clone may be identified, e.g. by evaluating some metric using the values of the trajectories. Performance indicators and/or a utility function may be used, similarly to the way in which they are used in the above-described method for determining the optimal recipe.

Once the best clone is selected, the associated subset $G_b$ of values for the variable evolution parameters may be used, together with the process evolution information and a recipe, to perform a simulation at scale B. The recipe (i.e. a recipe template composite from space β and values for its variable recipe parameters) may be determined using the method according to this invention.

From the trajectories obtained in the simulation, a utility function may be evaluated at scale B, wherein the output of the utility function quantifies the overall worth or benefit of the performance of the production process at scale B.

As mentioned with reference to the features of the utility function above, the output of the utility function depends indirectly on the values for the evolution parameters. In this case, the values for the evolution parameters are associated with a given clone. Hence, the output of the utility function will indirectly depend on the clone chosen at scale A.

Therefore, numerical optimisation methods may be used to find the clone at scale A that optimises the output of the utility function at scale B.

According to another aspect of the present invention, a computer program product is provided. The computer program product comprises computer readable instructions, which, when loaded and executed on a computer system, cause the computer system to perform operations as described above. The computer program product may be tangibly embodied in a computer readable medium.

Yet another aspect of the present invention relates to a computer system operable to determine at least one recipe for a production process to produce a chemical, pharmaceutical and/or biotechnological product, wherein the production process is defined by a plurality of steps specified by recipe parameter(s) controlling an execution of the production process and a recipe comprises the plurality of steps defining the production process. The computer system comprises:

- a retrieving module configured to retrieve:

    -- a plurality of recipe template composites, wherein a recipe template composite comprises one or more recipe templates and a recipe template is a recipe in which at least one of the recipe parameter(s) specifying the plurality of steps is a variable recipe parameter being variable and having no predetermined value at the outset;
    -- process evolution information that describes the time evolution of process variable(s) that describe a state of the production process, wherein the process evolution information comprises evolution parameter(s) and at least one of the evolution parameter(s) is a variable evolution parameter being variable and having no predetermined value at the outset;
    -- a likelihood function for the evolution parameter(s), wherein the likelihood function provides a likelihood that value(s) for the evolution parameter(s) are feasible for the production process;
    -- a mapping that maps the process variable(s) onto performance indicator(s);
    -- a utility function for at least one of the performance indicator(s), wherein the utility function provides a desirability value associated to the performance indicator(s);

- a computing module configured to select a recipe template composite and perform a first optimisation step comprising:

    -- providing a set of input values for the at least one variable recipe parameter in the recipe template composite;
    -- performing a second optimisation step providing a utility score;
    -- repeating the second optimisation step for at least another set of input values, thereby obtaining a plurality of utility scores;
    -- identifying the optimal utility score from the plurality of utility scores;

wherein the computing module is further configured, if only one recipe template composite was retrieved, to select the set of input values that yields the optimal utility score together with the one recipe template composite as the at least one recipe for the production process;
or the computing module is further configured, if more than one recipe template composite was retrieved, to:

- repeat the first optimisation step for each recipe template composite, thereby obtaining a plurality of optimal utility scores;
- identify the best optimal utility score among the plurality of optimal utility scores;
- select the recipe template composite and the set of input values that yield the best optimal utility score as the at least one recipe for the production process;

and wherein:

- the second optimisation step comprises:

    -- providing a set of likely values for the at least one variable evolution parameter based on the likelihood function;
    -- performing a third optimisation step providing a utility tally;
    -- if there is at least another set of likely values that is suitable, repeating the third optimisation step for the at least another set of likely values, thereby obtaining a plurality of utility tallies;
    -- computing the utility score by weighting the utility tally(ies) by the likelihood function;

- the third optimisation step comprises:

    -- performing a fourth optimisation step providing a utility value;

-- if a stochasticity flag is set, repeating the fourth optimisation step, thereby obtaining a plurality of utility values;
-- computing the utility tally as the utility value or by compounding the plurality of utility values;

- the fourth optimisation step comprises:

-- generating a simulation by simulating the execution of the production process using a recipe template in the recipe template composite with the set of input values for the at least one variable recipe parameter, the process evolution information and the set of likely values for the at least one variable evolution parameter;
-- if the recipe template composite comprises more than one recipe template, repeating the step of generating the simulation for each recipe template in the recipe template composite;
-- determining, from the one or more simulations, trajectory(ies) for the process variable(s), wherein a trajectory corresponds to a time-based profile of values recordable during the simulated execution of the production process;
-- computing a utility value by evaluating the utility function using the process variable(s) of the trajectory(ies) and the mapping.

In other words, the computer system is operable to perform a method according to the aspect discussed above.

The computer system may particularly comprise a memory and a processor to operate the modules. The retrieving module and the computing module may be separate entities or may at least partly overlap with each other.

Further, the computer system may be configured to interface with a control system via a network, shared disk, or database system, wherein the control system controls the execution of the production process in the real world. The interface may particularly allow transfer of data and/or commands. In some examples, the computer system may coincide with the control system.

To summarize, the method, the product and the system discussed above enable the determination of an optimal recipe for a production process, wherein the recipe can be determined prior to execution or during the process execution, thereby supporting dynamic recipe adaptation.

Examples in which the recipe is determined prior to a run of the production process include the following scenarios:

◦ a recipe to optimise a performance indicator;
◦ a recipe to ensure that a system at one scale accurately provides transferrable predictions to a system at a second scale;
◦ a recipe to evaluate the non-linear effects of variations in culture conditions;
◦ a recipe to evaluate a set of clones for production of a molecule.

Examples in which the recipe is determined (i.e. adapted) during a run of the production process include the following scenarios:

◦ adapting a recipe to unexpected conditions (e.g. if a machine failure occurs during execution, determining what modifications to make to the recipe to recover as much as possible)
◦ adapting a recipe on the basis of prior information obtained during the run (i.e. if at the midpoint of a run, data from that run inform about the nature of the organism or process dynamics, the optimal run to conduct from that point may be different from that initially designed).

Further, according to the invention, knowledge about the process can be fully and accurately taken into consideration, in particular minimizing the role of assumptions for the production process during its whole course. In particular, ignorance can be accounted for by maintaining probability landscapes throughout the optimization procedure thanks to the use of the likelihood function for the variable evolution parameters and by considering multiple recipe template composites. In addition, transfer of process knowledge between different organisms, cell types, media etc. is made possible by the use of relatedness information.

Accordingly, the above-described method, product and system can be successfully employed in many different contexts, some of which are reported below, together with an explanation of the issues of conventional approaches for each case:

Cell line selection

At the cell line selection stage, the use of a recipe that is simply a "scale down" model of the recipe of a known large-scale target process fails to acknowledge that the best "cell line and recipe" combination may comprise a different cell line than that which would be selected against some (essentially arbitrary) recipe. For example, given two recipes A and B, and two cell lines 1 and 2, where recipe A is the standard "platform" recipe, performance at scale and during cell line (clone) selection may rank B1 > A2 > B2 > A1. However, just using the platform recipe for clone selection, cell line 2 would be selected, resulting in ultimately lower-than-optimal performance.

At the point in time when an organisation is conducting cell line selection, it will typically have access to data from previous molecule development processes. This gives an opportunity to determine prior estimates of variation expected within a candidate set of clones. Such estimates have the potential to be used to drive recipe design during clone selection (with a view to subsequent scale-up for manufacture). This invention provides a mechanism to do so thanks to the plurality of recipe template composites and the degrees of freedom offered by the variable evolution parameters.

Process development

At the process development stage, the range of potentially beneficial recipe variations that can be evaluated is limited by available time and resources from an effectively infinite number of possibilities resulting from the interaction of recipe parameters (e.g. pH setpoint) with time (e.g. when to perform a change in pH setpoint). As a result, process development is normally limited to a very small subspace of the range of possible recipe parameters values, and within this subspace, conclusions are drawn on the basis of linear behaviour of the biological systems.

Currently it is impossible to establish upfront whether the subspace being explored is itself close to optimal or far off, and whether linearity assumptions within this subspace are justifiable. For example, a series of experiments may be conducted to determine whether a switch in pH from 7 to 6.6, 6.7 or 6.8 is optimal after 20hrs of culture, in conjunction with DO % setpoints of 20, 25 and 30, using a DoE. The result may be a conclusion, via statistical modelling (e.g. fitting of a low-degree polynomial and identification of an optimum based upon the fitted surface) of the pH and DO response surface, that pH 6.65 and DO 23% are optimal. However, this may be ill-informed if, for example, the response to pH is highly nonlinear, with 6.6 being much worse than 6.7, which itself is only marginally worse than 6.8. Equally, it may be ill-informed because the true optimum may be a change of pH after 15hrs of culture rather than 20.

This invention provides a mechanism by which an appropriate subspace of recipe parameters can be explored and their optimal values for a given process determined.

Transfer to manufacture

Previous approaches to scale-up and transfer to manufacture consider only the most likely parameters for simulation models which drive the choice of scale-up recipes. These approaches have a deficiency that this invention resolves, namely the use of a single model with fixed evolution parameters for simulation of the target scale for manufacture. There is indeed the risk of weighting too highly the choice of model (the scale-up optimal therefore responding too strongly to the qualitative understanding of the person using the system). Further, the determination of the optimal recipe may: (a) lack robustness to deviations in process conditions, (b) be sub-optimal due to the inherent non-linearities of the process in question.

In-process deviations

During process execution, deviations from expected conditions may occur due to stochastic variation in the biological, chemical or physical systems or failure or compromise of part of the equipment. It is well established that "Model Based Control" is a powerful approach to respond to such a deviation. Traditional Model Based Control involves e.g. adjusting set-points to restore equilibrium or the original trajectory of the process. It takes a model of the process, and, working from the deviation, determines the optimum adjusted setpoints by simulating the process subject to the model.

Such Model Based Control has two important deficiencies:

- It fails to optimise the recipe from that point forward in time. Rather it makes adjustments in a step-wise manner. This has the effect of selecting a local but not necessarily a global optimum.
- It fails to account for uncertainty in the model. There are two layers to this: firstly, there is uncertainty in the (evolution) parameters in the model, and secondly, uncertainty in the choice of model itself. The consequence is that MBC may lead to increasing deviations from optimum as the process deviates progressively from the better characterised optimum (i.e. there is a risk of a spiral of increasingly bad behaviour by the process).

The invention presented here resolves the above two deficiencies.

It is worth noting that the same principles of the method discussed above could be applied to solve a different problem than finding the optimal recipe, namely the definition of the utility function. Indeed, it may be useful to get an insight in how to systematically evaluate the performance of such a complex process as the production process in a quantifiable, objective manner. Accordingly, there may be one or more loops pertaining to properties of the utility function (e.g. parameters in it, dependencies on which performance indicators...) instead of the loops on the recipe template composite, the variable recipe parameters and the recipe templates.

Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.

Figure 1 shows a computer system for determining a recipe for a production process to produce a chemical, pharmaceutical, or biotechnological product.

Figure 2 shows a block diagram indicating inputs and outputs of the recipe determination.

Figures 3a to 3e show a method for recipe determination of a production process.

Figure 4 shows the nested loops of the method for recipe determination.

Figures 5a to 5c show exemplary plots representing some of the inputs of the recipe determination.

Figures 6a to 6d show a conceptual diagram of an exemplary recipe determination and related plots.

Figures 7a to 7f show a conceptual diagram of another exemplary recipe determination and related plots.

Figures 8a to 8c show a conceptual diagram of yet another exemplary recipe determination and related plots.

Figures 9a to 9e show a conceptual diagram of a further exemplary recipe determination and related plots.

Detailed Description

In the following, a detailed description of examples will be given with reference to the drawings. It should be understood that various modifications to the examples may be made. Unless explicitly indicated otherwise, elements of one example may be combined and used in other examples to form new examples.

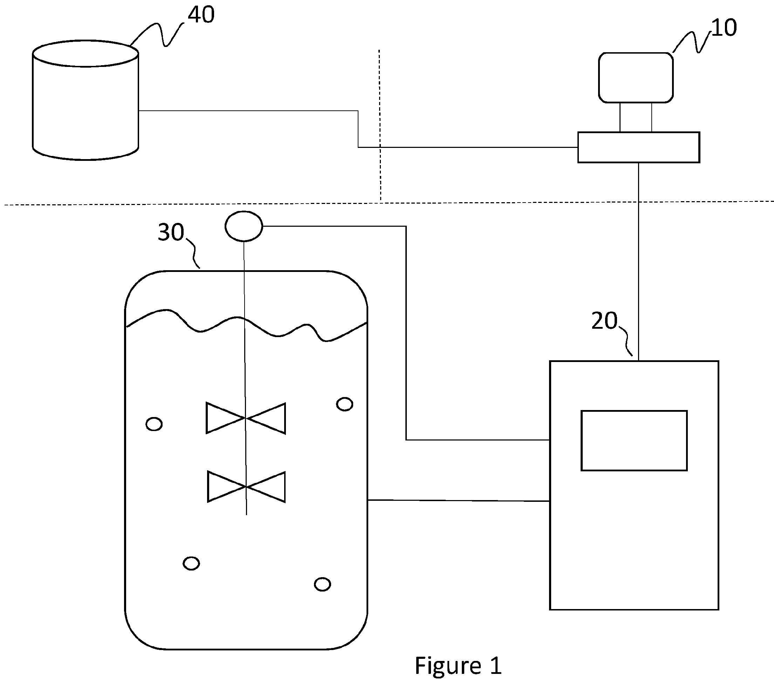

**Figure 1** shows a computer system 10 for determining at least one recipe for a production process to produce a chemical, pharmaceutical, or biotechnological product.
The computer system 10 may include a processing unit, a system memory, and a system bus. The system bus couples various system components including the system memory to the processing unit. The processing unit may perform arithmetic, logic and/or control operations by accessing the system memory. The system memory may store information and/or instructions for use in combination with the processing unit. The system memory may include volatile and non-volatile memory, such as a random access memory (RAM) and a read only memory (ROM).
The computer system 10 may further include a hard disk drive for reading from and writing to a hard disk (not shown), and an external unit drive for reading from or writing to a removable unit. The drives and their associated computer-readable media provide nonvolatile storage of computer readable instructions, data structures, program modules and other data for the personal computer 920. The data structures may include relevant data for the implementation of the method as described above.
A number of program modules may be stored on the hard disk, external disk, ROM or RAM, including an operating system (not shown), one or more application programs, other program modules (not shown), and program data. The application programs may include at least a part of the functionality as described below.
A user may enter commands and information into the computer system 10 through input devices such as keyboard and mouse. A monitor or other type of display device is also connected to the system bus via an interface, such as a video input/output.
The computer system 10 may communicate with other electronic devices. To communicate, the computer system 10 may operate in a networked environment using connections to one or more electronic devices.

In particular, the computer system may interface and communicate with a control system 20. The computer system 10 may be operable, possibly in conjunction with other devices, to determine a recipe for a production process.

The control system 20 may be connected to a bioreactor 30 constituting the equipment for performing the production process. The control system 20 and the computer system 10 may be located in different rooms of the same facility or in any two informatically connected (e.g. via a network) locations. The computer system 10 may be a separate entity from the control systems 20. In other examples (not shown) the computer system 10 may coincide with the control system 20.

In some examples, a database 40 may be provided. The database may be connected to a network, such that the database is accessible by multiple devices/users. The database may be implemented as a cloud database, i.e. a database that runs on a cloud computing platform. In other words, the database may be accessible over the Internet via a provider that makes shared processing resources and data available to computers and other devices on demand. The database may be implemented using a virtual machine image or a database service. The database may use an SQL based or NoSQL data model.

The database 40 may store any of: sets of values for recipe parameters, recipe template composites, process evolution information, setup specification, likelihood functions, utility functions, mappings. Communications between the database 40 and the computer system 10 may be secured, e.g. via Internet protocol security (IPSEC) or other security protocols. A virtual private network (VPN) may also be used.

The database 40 may be hosted by a service provider, possibly on a virtual machine, and may be accessible by various users from multiple organizations, possibly located in a variety of different geographic locations around the world. Alternatively, the database 40 may be hosted locally, e.g. in the computer system 10. Accordingly, the computer system 10 and the database 40 may or may not be located in physical proximity. In particular, the database 40 may be located in a location that is geographically distant (e.g. on another continent) from the computer system.

An example of a production process for which a recipe is determined by the computer system 10 may be a fed-batch process comprising the following phases:

- add media to bioreactor
- condition (set temperature, pH)
- add inoculum
- allow to grow in batch phase (control pH, DO, temperature; sample at intervals)
- when nutrients exhausted, move to fed phase
- allow to grow in fed phase (control pH, DO, temperature; sample at intervals; supply additional nutrients)
- harvest product.

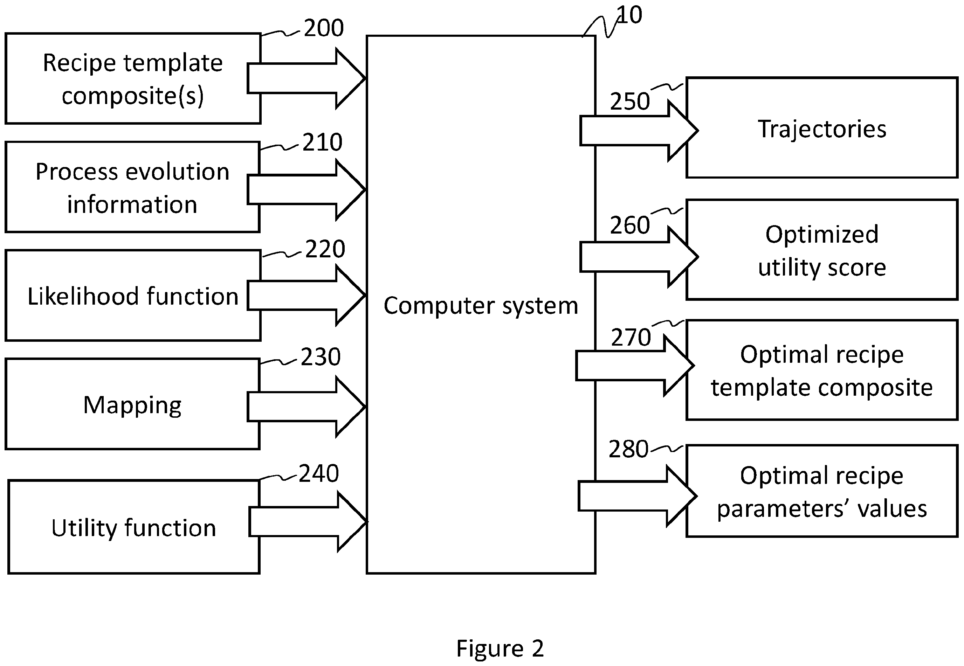

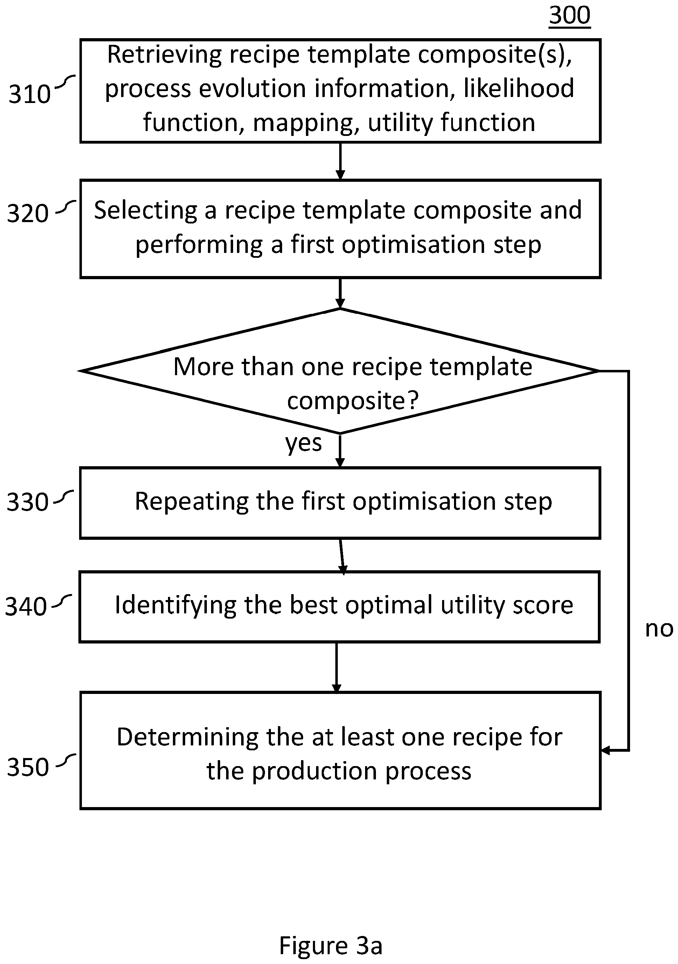

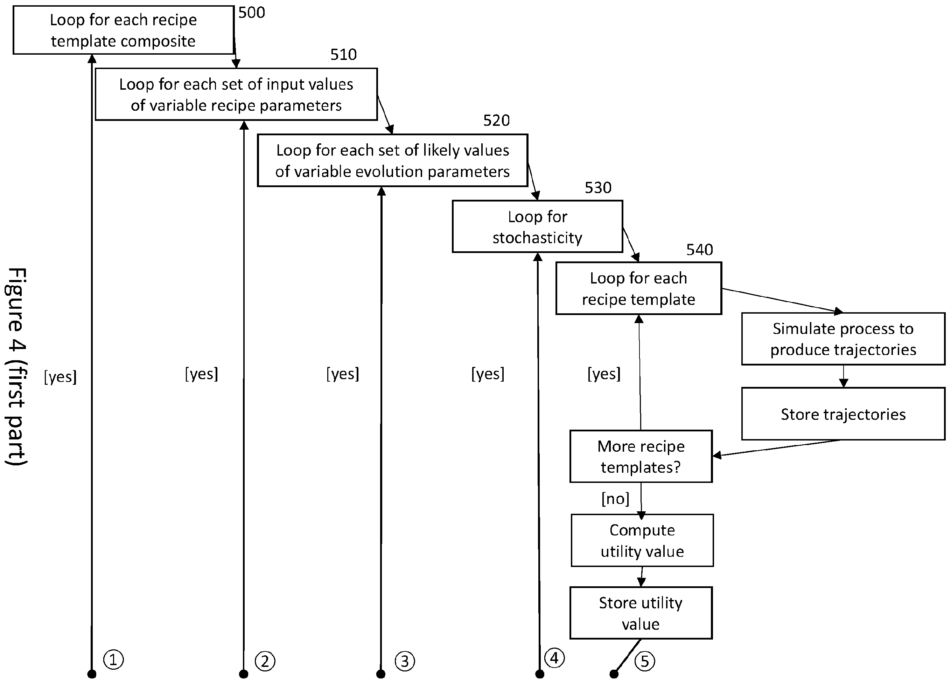

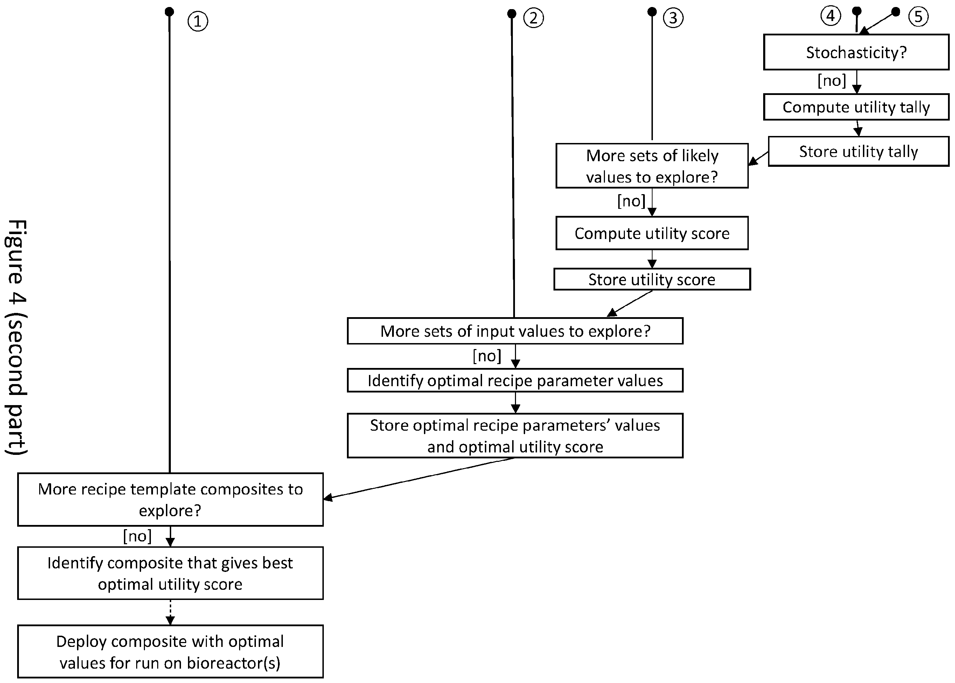

**Figures 3a to 3e** show an exemplary method 300 for determining a recipe for a production process. The method will be described in conjunction with **Figure 2,** which shows a block diagram indicating inputs and outputs of the recipe determination, and with **Figure 4,** which shows the method from the perspective of the nested loops therein. Figure 4 is divided into two halves that are connected at the dots according to the corresponding numbers. In the following, the method will be described in relation to a production process in a bioreactor.

Starting with **Figure 3a,** at step 310 one or more recipe template composites 200 are retrieved, wherein each recipe template composite comprises one or more recipe templates. A recipe template is a recipe having one or more free parameters, the variable recipe parameters.

Further, at 310, process evolution information 210 is retrieved, wherein the process evolution information describes the time evolution of one or more process variables that describe a state of the production process. The process evolution information 210 characterises how the process variables change with time, exemplarily including initial conditions for the process variables and relations among the process variables.

In particular, the process evolution information 210 may comprise relations empirically derived from previous executions of the production process and/or equations derived by theoretical models about the evolution of the production process. These relations and equations may be characterized by various parameters, denoted as evolution parameters. At least one of these evolution parameters may be a free parameter.

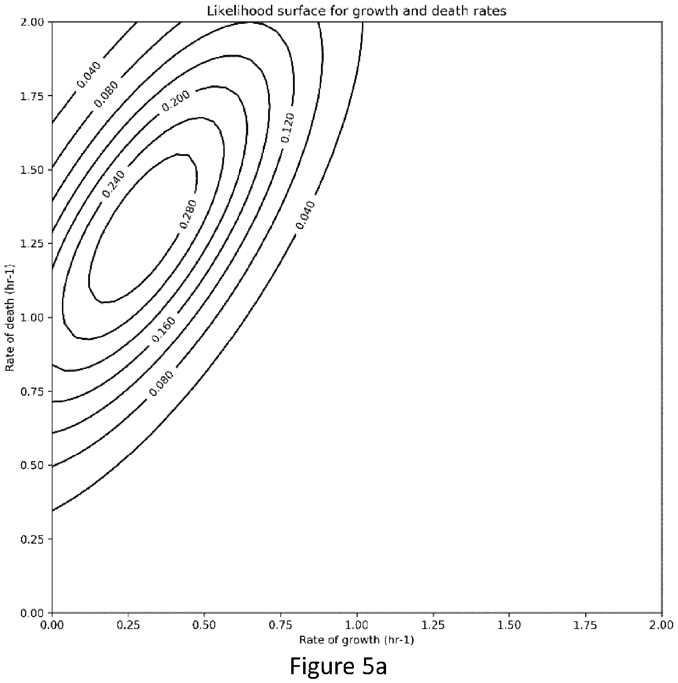

Further, at 310, a likelihood function 220, a mapping 230 and a utility function 240 are retrieved. The likelihood function 220 is a probability distribution for the values of the evolution parameters. In other words, the likelihood function 220 indicates how likely it is that the process evolution information 210, given a certain value for an evolution parameter, models the production process in an accurate manner. An exemplary plot of a likelihood function 220 for two evolution parameters, growth rate and death rate, is shown in **Figure 5a.**

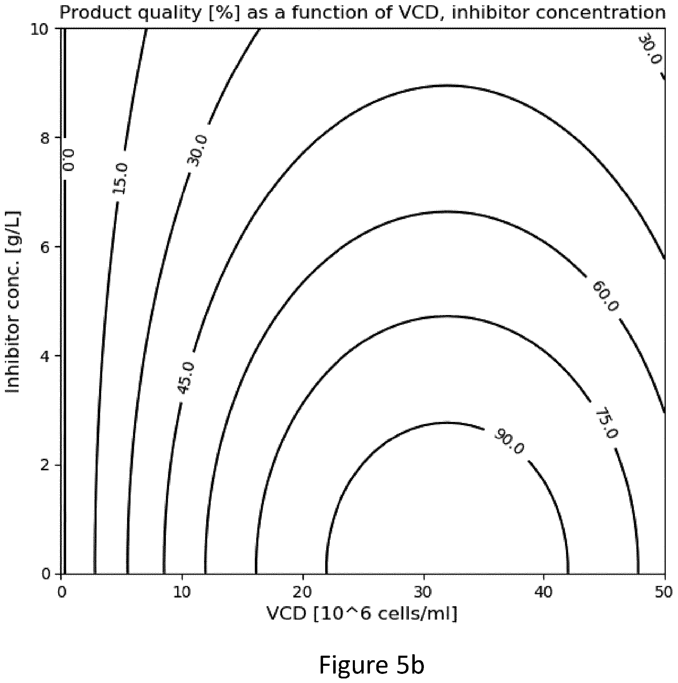

The mapping 230 translates the values of the process variables into values of performance indicators. In some cases, it is not straightforward to understand the link between the process variables and the relevant outputs of the production process, and the mapping 230 provides exactly this link. **Figure 5b** shows an exemplary plot of a mapping 230 that maps two process variables, inhibitor concentration and viable cell density, to product quality, which is a performance indicator.

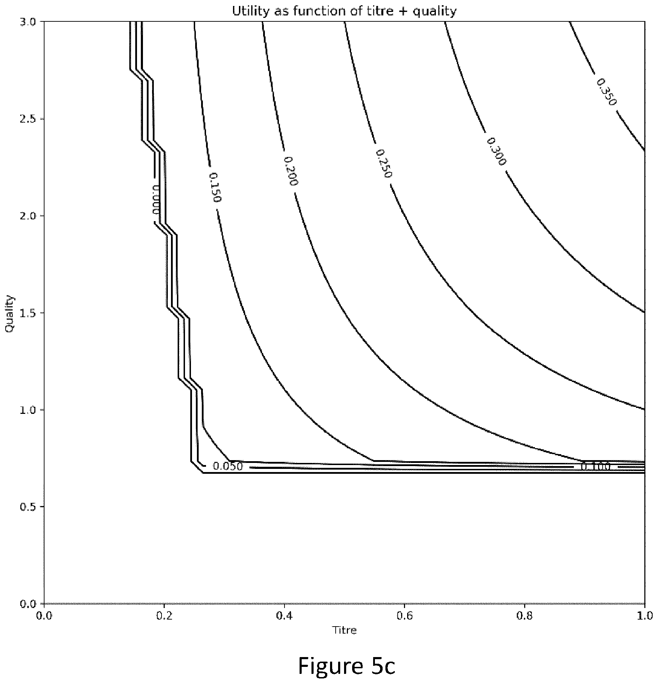

The utility function 240 adds a further refinement to assessing the performance of the production process by associating a desirability value to the values of the performance indicators. In other words, the utility function 240 provides a quantitative characterization of the process performance in terms of the values of its performance indicators. An exemplary plot of a utility function 240 for two performance indicators, titre and quality of the product, is shown in **Figure 5c.**

The recipe template composites 200, the process evolution information 210, the likelihood function 220, the mapping 230 and the utility function 240 may be retrieved by means of a file system. Exemplarily, these input data may be stored in a data storage device.

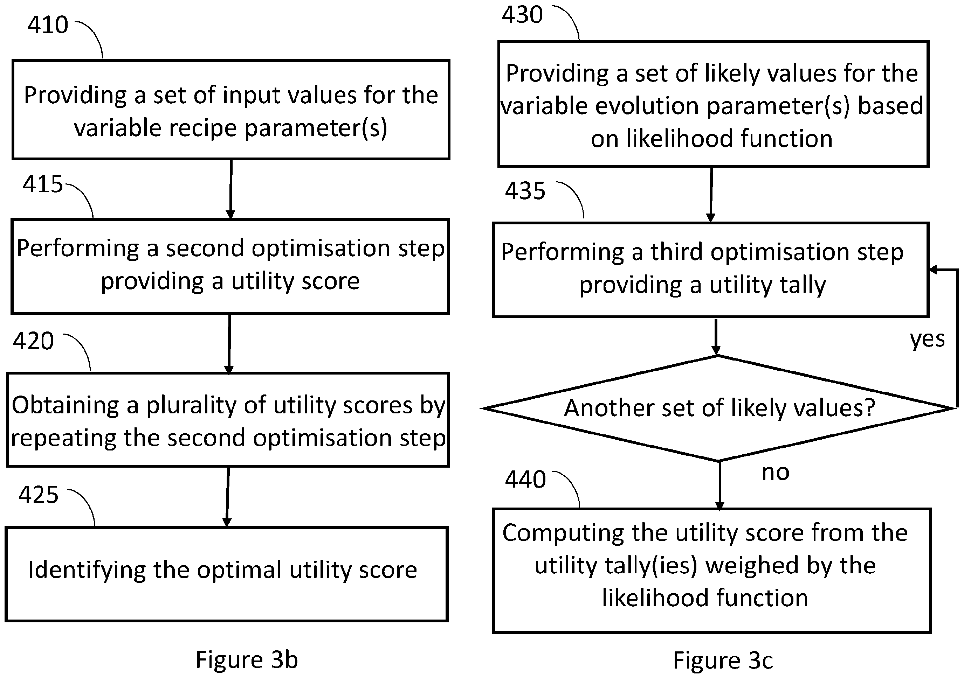

At 320, a recipe template composite is selected and a first optimisation step is performed. The first optimisation step is illustrated in **Figure 3b.** At 410 a set of input values is provided for the variable recipe parameter(s) and, using this set of input values, at 415 a second optimisation step is performed, which gives a utility score as a result. At 420 a plurality of utility scores are obtained by performing the second optimisation step for different sets of input values. The repetition of the second optimisation step corresponds to loop 510 shown in Figure 4.

The second optimisation step is illustrated in **Figure 3c.** At 430 a set of likely values is provided for the variable evolution parameter(s) based on the likelihood function 220. Once the set of likely values has been assigned, at 435 a third optimisation step is performed, which gives a utility tally as a result. If there are other sets of likely values to be considered, the third optimisation step is repeated, as illustrated also by loop 520 in Figure 4.

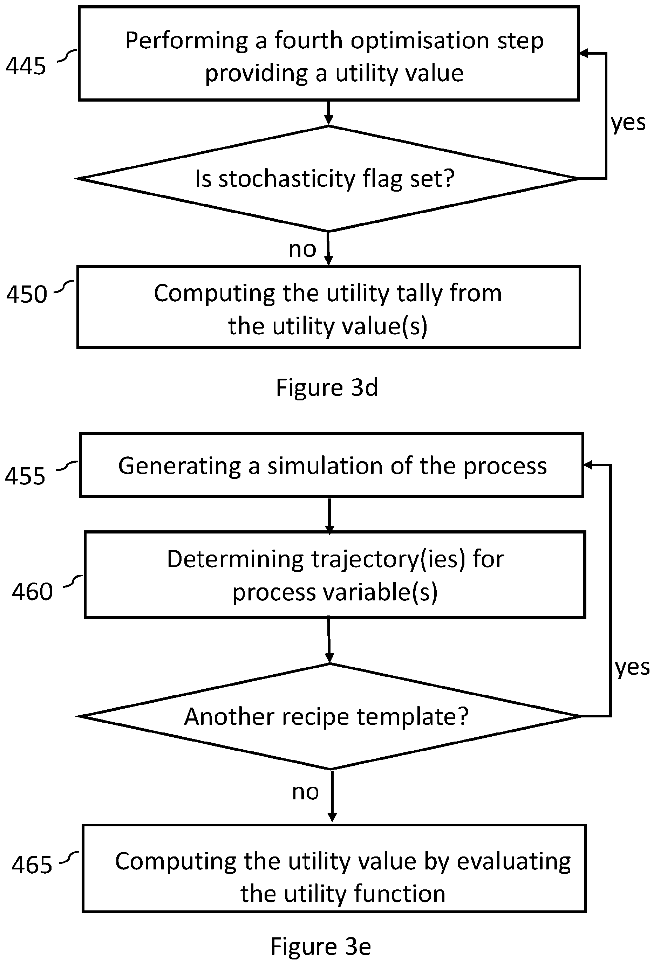

The third optimisation step is illustrated in **Figure 3d.** At 445 a fourth optimisation step is performed, which gives a utility value as a result. If stochasticity is considered, the fourth optimisation step is repeated a predetermined or predeterminable number of times. The repetition of the fourth optimisation step corresponds to loop 530 in Figure 4.

The fourth optimisation step is illustrated in **Figure 3e.** At 455 a simulation of the production process is generated on the basis of the recipe template composite selected at 320, the set of input values provided at 410 and the set of likely values provided at 420. During the simulation, the values of the process variables over time are recorder in order to obtain trajectories 250 at 460. If there is more than one recipe template in the recipe template composite selected at 320, steps 455 and 460 are performed for each recipe template. The repetition of steps 455 and 460 corresponds to loop 540 in Figure 4.

Once the loop 540 has completed, at 465 the utility value is computed by evaluating the utility function 240 using the values of the process variables from the trajectories 250 and the mapping 230.

Once one or more utility values have been obtained for the same recipe template composite, set of input values and set of likely values, depending on whether stochasticity is accounted for, the method proceeds at 450 by computing the utility tally from the one or more utility values.

Once one or more utility tallies have been obtained corresponding, respectively, to one or more sets of likely values, and for the same recipe template composite and set of input values, at 440 the utility score is computed by weighting the utility tally(ies) with the likelihood function 220.

From the plurality of utility scores obtained at 420, at 425 the optimal utility score is identified. In other words, the optimal set of input values that optimizes the utility score is identified. If there is only one recipe template composite, that recipe template composite 270 combined with the optimal set of input values 280 is determined to be the at least one recipe for the production process.

If there is more than one recipe template composite, each of the recipe template composites is selected in turn and at 330 the first optimisation step is repeated for all remaining recipe template composites. The repetition of the first optimisation step corresponds to the outer loop 500 shown in Figure 4.

Accordingly, a plurality of optimal utility scores corresponding to the plurality of recipe template composites has been identified and, then, at 340 the best optimal utility score 260 is identified among those, i.e. the maximum or minimum of the plurality of optimal utility scores. The combination of the recipe template composite 270 and the set of input values 280 associated with (i.e. that result in) the best optimal utility score 260 is determined at 350 to be the at least one recipe for the production process.

The general method illustrated above with reference to Figures 2, 3a-3e and 4 will be discussed in the following in relation to four specific exemplary scenarios.

First scenario

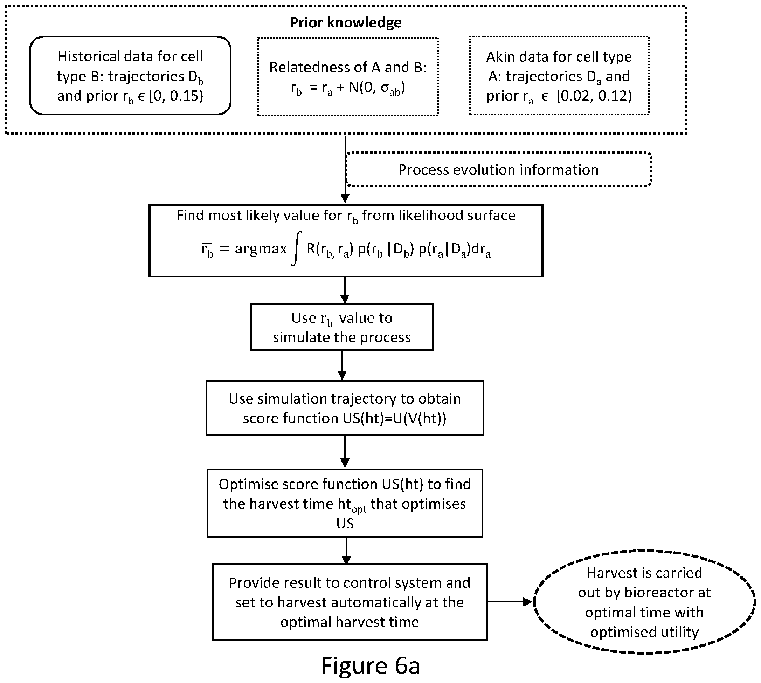

**Figures 6a to 6d** show a conceptual diagram of an exemplary recipe determination and related plots. The first scenario involves a culture process with simple growth.

At 310, the process evolution information 210 is retrieved. The model for this production process may assume that viable cells reproduce at a maximum rate, $r$, and that growth is slowed down as the cell population approaches maximum capacity. The process evolution information 210 in this case comprises the following two differential equations:

$$\frac{dV}{dt} = rV \frac{k_V}{k_V + I_V}$$

$$\frac{dI_V}{dt} = V$$

(5)

wherein $V$ is the viable cell density (VCD) [cells/ml], $r$ is the cell growth rate [hr$^{-1}$], $k_V$ is half of a capacity constant [cells.hr/ml] and $I_V$ is the cumulative cell count [cells.hr/ml]. The process evolution information 210 in this case comprises only one variable evolution parameter, namely the cell growth rate.

Further, a single recipe template composite 200 comprising one recipe template is retrieved, and the recipe template has one variable recipe parameter, the harvest time.

A mapping 230 is also retrieved, wherein the mapping 230 is a function of the VCD and is the identity function, i.e. the VCD is itself considered a performance indicator. Additionally, a utility function 240 is retrieved, wherein the utility function 240 is only a function of the VCD, $U(V)= a*log(V)$, wherein a is a constant.

In this example retrieving the likelihood function 220 comprises retrieving akin data, relatedness information and historical data and computing the likelihood function 220 based on all those, as explained in the following.

The cell type that will be used for the production process is cell type B. The prior knowledge available includes historical data for cell type B, in particular trajectories for the process variables, $D_b$ and a prior on the growth rate for cell type B, $r_b$, derived e.g. from literature or from experience, as well as akin data related to an akin production process that used cell type A together with relatedness information. The akin data include trajectories for the process variables, $D_a$, and a prior for the growth rate of cell type A, $r_a$. The relatedness information between process B (using cell type B) and process A (using cell type A) may be based on experimental/literature knowledge of cell line behaviours and/or derived from a comparison between the historical data and the akin data.

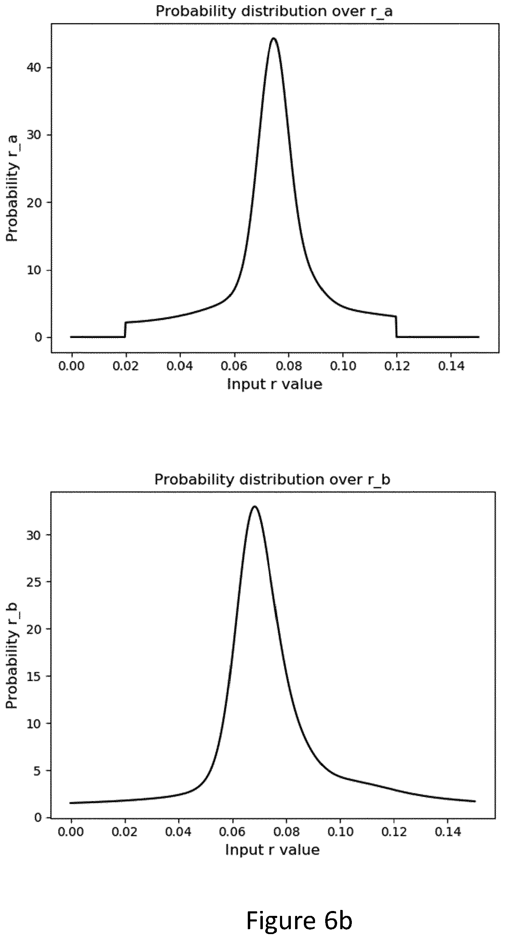

The prior on $r_b$ is a uniform distribution in the interval [0, 0.15) and the prior on $r_a$ is a uniform distribution in the interval [0.02, 0.12). For each cell type x, Bayesian inference may be used to obtain a posterior distribution $p(r_x |D_x) \sim p(D_x | r_x) p(r_x)$, wherein $p(r_x)$ is the prior and $p(D_x | r_x)$ is the conditional distribution of the data for a given value of the growth rate. The value of the conditional distribution may be calculated at each data point e.g. by assuming a Gaussian distribution centred on the mean $r_x$. The posterior distributions obtained in this manner are shown in **Figure 6b.**

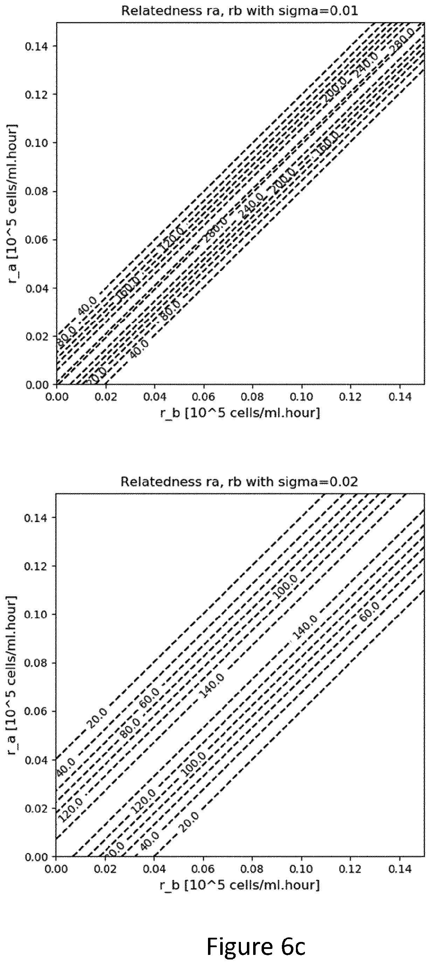

The relatedness information in this case is the probability of a value for $r_b$ given a value for $r_a$. The relatedness is $R(r_b , r_a) = N(r_b - r_a , \sigma_{ab})$, wherein N is the normal distribution. **Figure 6c** shows two plots for the relatedness, in the upper plot the variance is set to 0.01 and in the lower plot the variance is set to 0.02. In this scenario the variance is assumed to be 0.01.

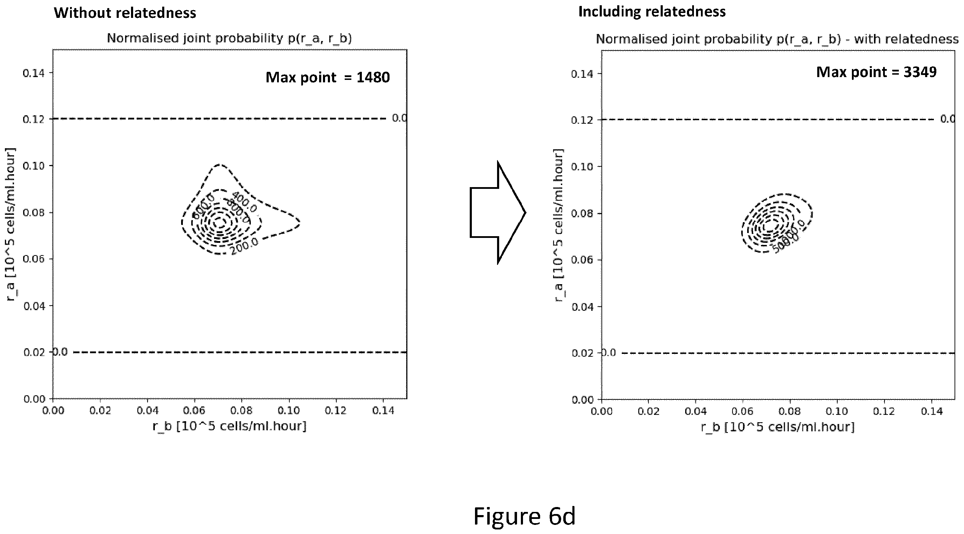

The available prior knowledge discussed above is merged in the joint probability distribution for $r_a$ and $r_b$, $p(r_a , r_b |D_a , D_b) \sim p(r_a |D_a) p(r_b | D_b) R (r_b , r_a)$. It should be noted that, if the relatedness is not taken into consideration, the joint probability reduces to $p(r_a |D_a) p(r_b | D_b)$. **Figure 6d** shows the difference between the normalized joint probability without relatedness (plot on the left) and with relatedness (plot on the right). The probability landscape is more constrained and the maximum probability area is more than two times higher.

The likelihood function 220, $L(r_b)$, is computed as the integral over the joint probability distribution:

$$L(r_b) = \int R(r_b, r_a) p(r_b|D_b) p(r_a|D_a) dr_a$$

(6)

After having retrieved all the necessary inputs, the first optimisation step is performed at 320, which comprises providing 410 an input value (set of one element) for the harvest time and then performing 415 the second optimisation step. The second optimisation step comprises providing 430 a likely value (set of one element) for the growth rate based on the likelihood function 220. In this example, the likely value for $r_b$ is chosen as the most likely value, i.e. the value that maximises the likelihood function $\overline{r_b}= argmax\ L(r_b)$. Then at 435 the third optimisation step is performed. No other values are considered for the growth rate, this means there is no loop within the second optimisation step and the utility score computed at 440 will coincide with the only utility tally. Further, if stochasticity is not considered, the utility tally computed at 450 will coincide with the utility value computed at 465 by performing the fourth optimisation step at 445.

In the fourth optimisation step, at 455 a simulation is generated using the process evolution information 210 of equations (5) with the most likely value for the growth rate and given initial conditions, the retrieved recipe template composite 200 comprising only one recipe template, and the input value for the harvest time, denoted e.g. with $ht_1$. From the simulation, the values of the VCD at different times are obtained at 460, i.e. the trajectory for the VCD. In particular, in order to evaluate the utility function 240, the value of the VCD at the time coinciding with the harvest time may be considered. At 465 the utility value is then computed as $U[V(ht_1)]$.

At 420 the above steps are repeated and a plurality of utility scores $U[V(ht_1)], ... U[V(ht_n)]$ is obtained, with $n$ greater than or equal to 2. The plurality of input values for the harvest time may be retrieved together with the recipe template composite, or input by a user, or drawn from a distribution according to certain criteria.

Alternatively, in this very specific case, instead of performing the loop to obtain the plurality of utility scores, the trajectory for the VCD obtained from a single simulation may be used to compute $U[V(ht_1)], ... U[V(ht_n)]$, since the trajectory is indeed $V(t)$. This "shortcut" can be generally applied to cases in which the variable recipe parameter is a timepoint e.g. for performing an action, because the trajectories already provide the values of the process variables at different times. The same holds if there are more variable recipe parameters and each one of them is a timepoint.

At 425 the score function $US(ht) = U[V(ht)]$ is optimised e.g. using numerical methods in order to find the optimal utility score and the associated $ht^{opt}$. The recipe template with harvest time $ht^{opt}$ is provided to the control system of the bioreactor, so that harvest is carried out automatically at $ht^{opt}$, thereby optimizing the utility score and, thus, the production process.

Second scenario

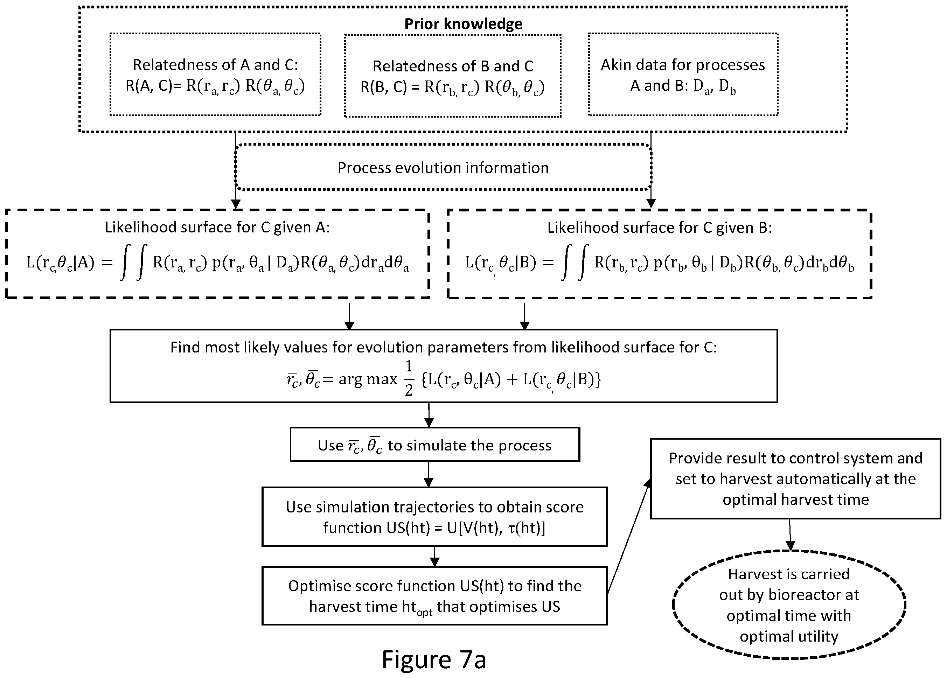

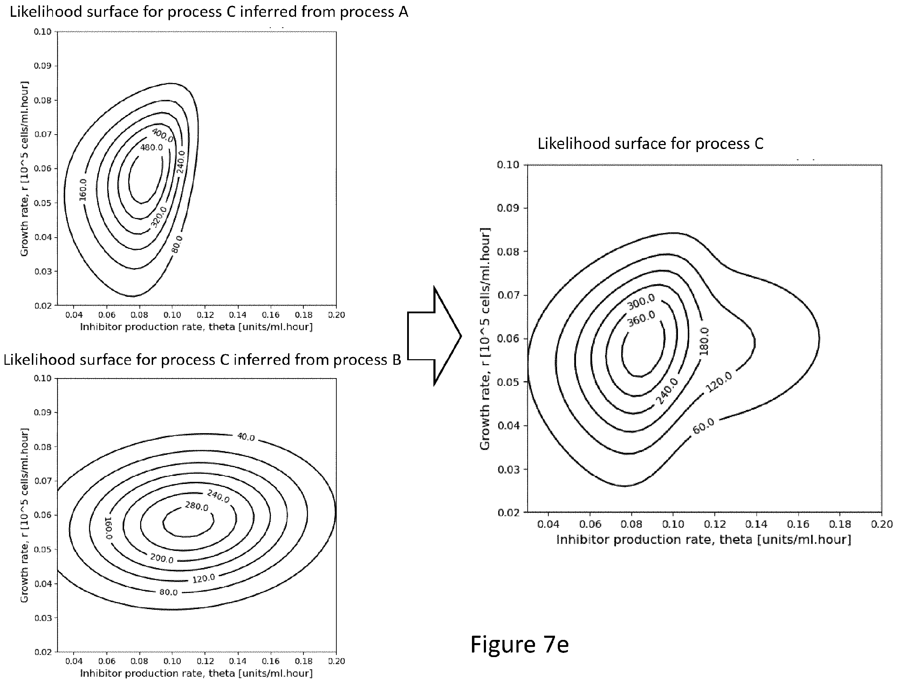

**Figures 7a to 7f** show a conceptual diagram of an exemplary recipe determination and related plots. The second scenario involves a culture process with growth and apoptosis with inhibitor production.

At 310, the process evolution information 210 is retrieved. The model for this production process may assume that viable cells reproduce at a maximum rate, $r$, and that growth is slowed down is slowed by an inhibitory toxin which is produced as a byproduct of cell growth. Further, cells have a finite lifetime and become apoptotic at a constant rate $\delta_V$, and apoptotic cells quickly lyse at rate $\delta_A$, after which they can no longer be detected. The process evolution information 210 in this case comprises the following three differential equations:

$$\frac{dV}{dt} = \frac{rV}{1 + e^{-s(\tau-c)}} - \delta_V V$$

$$\frac{dA}{dt} = \delta_V V - \delta_A A$$

$$\frac{d\tau}{dt} = \frac{\theta r V}{1 + e^{-s(\tau-c)}}$$

$$(7)$$

wherein $V$ is the viable cell density [cells/ml], $r$ is the cell growth rate [hr$^{-1}$], $s$ is the sensitivity to inhibitor [mM], $c$ is the sigmoid centre for inhibitor response [mM], $\delta_V$ is the apoptosis rate [hr$^{-1}$], $A$ is the apoptotic cell density [cells/ml], $\delta_A$ is the lysis rate [hr$^{-1}$], $\tau$ is the inhibitor concentration [mM] and $\theta$ is the inhibitor production [$\mu$mol/cell]. The process evolution information 210 in this case comprises two variable evolution parameters, namely the cell growth rate and the inhibitor production.

Further, a single recipe template composite 200 comprising one recipe template is retrieved, and the recipe template has one variable recipe parameter, the harvest time. A mapping 230 is also retrieved, wherein the mapping 230 is a function of the VCD and the inhibitor concentration and is the identity function, i.e. $V$ and $\tau$ are both process variables and performance indicators. Additionally, a utility function 240 is retrieved, wherein the utility function 240 depends not only on reaching sufficient cell density but also on the amount of inhibitor in the media, namely

$$U(V, \tau) = \begin{cases} \dfrac{V[1 - (e^{0.14\tau} - 1)]}{1 + e^{0.4(15-V)}} & \text{if } V > 13 \cdot 10^5 \text{cells/ml} \\ 0 & \text{if } V \leq 13 \cdot 10^5 \text{cells/ml} \end{cases}.$$

$$(8)$$

In this example retrieving the likelihood function 220 comprises retrieving akin data related to two different akin processes, A and B, and corresponding relatedness information and computing the likelihood function 220 based on all those, as explained in the following.

The production process C for which an optimal recipe should be determined uses a certain cell type at a large scale. The prior knowledge available includes akin data for akin production process A, $D_a$, which uses the same cell type as C but at a smaller scale, and akin data for production process B, $D_b$, which uses a different cell type than C but at the same scale as C. For example, the datasets $D_a$ and $D_b$ may include trajectory data from a large number of runs.

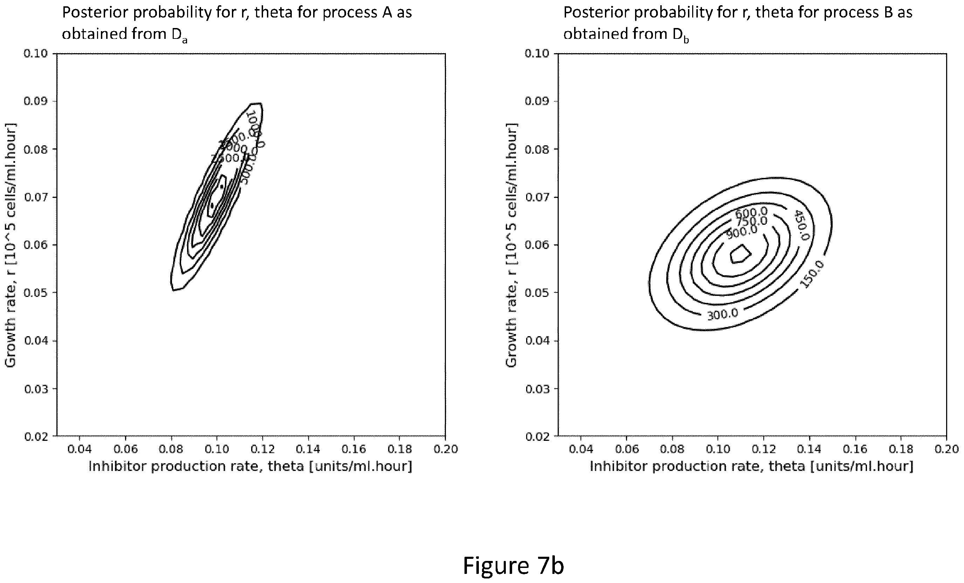

For each process (A and B), Bayesian inference may be used to obtain a posterior distribution $p(r_x, \theta_x | D_x) \sim p(D_x | r_x, \theta_x)$, wherein $p(D_x | r_x, \theta_x)$ is the conditional distribution of the data for a given value of the growth rate and the inhibitor production, while the prior is uniform. The conditional distribution may be obtained by computing the probability that, for each run in $D_x$, the run data could have been produced if the "true" values for the evolution parameters had been $r_x, \theta_x$. For example, the run data in $D_x$ may comprise a time series of cell densities, $a(t)$, and simulated data for the times series, $b(t)$, may be obtained based on the evolution parameters $r_x, \theta_x$. Exemplarily, the probability is estimated as the integral of $N(a(t)-b(t), \sigma)$, where $\sigma$ is an estimate of the standard error of the measurement system for the cell density. The posterior distributions obtained in this manner are shown in **Figure 7b.**

The relatedness information may be based on experimental/literature knowledge about the production processes. The relatedness information in this case is the probability of value for the evolution parameters for process C given values for evolution parameters for process A/B. It may be assumed that $R(A, C) = R(r_c, r_a) * R(\theta_c, \theta_a)$, and similarly for B.

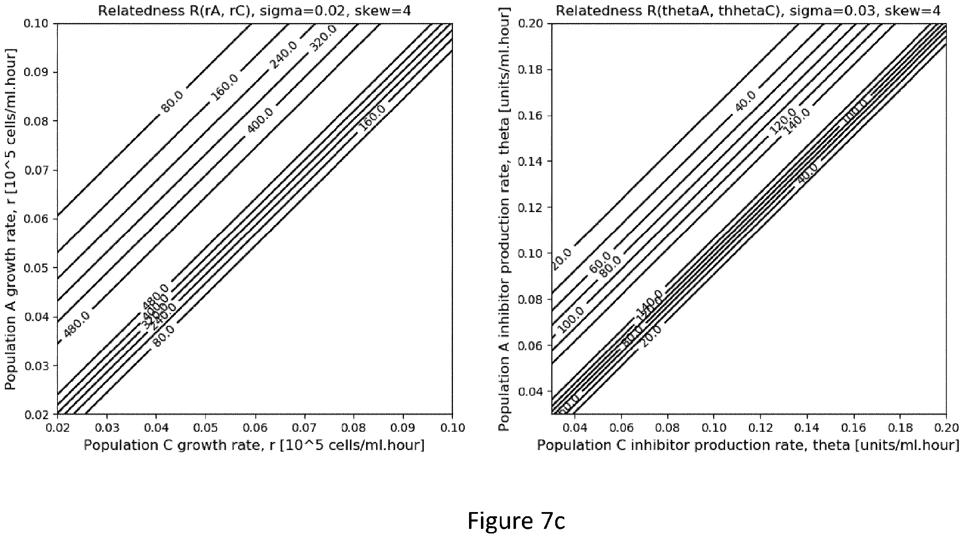

As mentioned, the cell type for processes A and C is the same. According to the scientific literature, this cell type slows down its processes at the scale of C due to the limits on the dissolved oxygen. Even if the dissolved oxygen is not an evolution parameter in the process evolution information, this information can be taken into consideration in the relatedness between A and C. In particular, the relatedness is chosen as a distribution with a longer tail towards the lower end, reflecting the probability that both the growth rate and the inhibitor production will be lower for process C than for process A. **Figure 7c** shows on the left side a plot for the relatedness $R(r_c, r_a)$, assuming a distribution with variance 0.02 and skewness 4, and on the right side a plot for the relatedness $R(\theta_c, \theta_a)$, assuming a distribution with variance 0.03 and skewness 4.

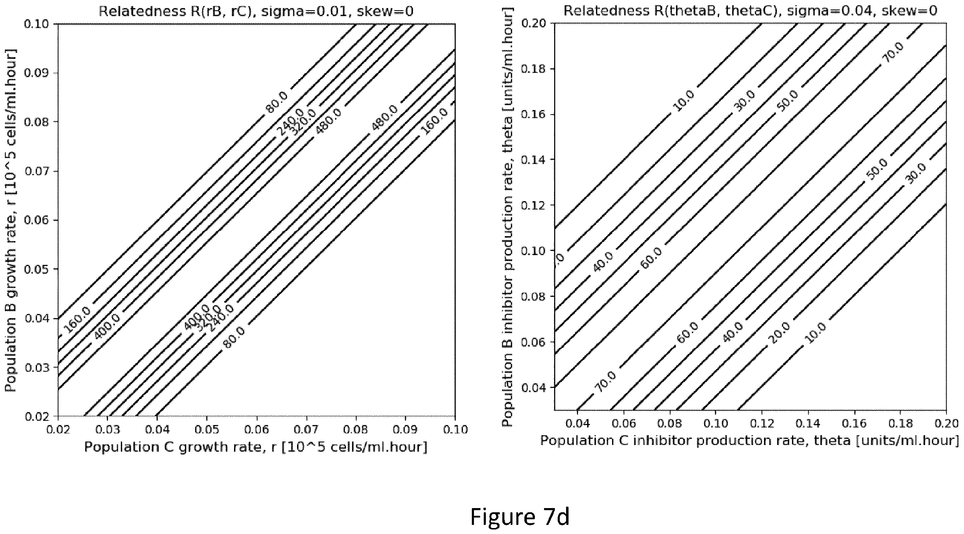

The cell types for processes B and C are different but similar, and it is assumed that they behave similarly in terms of growth rate and inhibitor production, although there is a larger uncertainty about the latter, which is reflected in the choice of a larger variance. **Figure 7d** shows on the left side a plot for the relatedness $R(r_c, r_b)$, assuming a normal distribution with variance 0.01, and on the right side a plot for the relatedness $R(\theta_c, \theta_b)$, assuming a distribution with variance 0.04.

The posterior distributions obtain from the akin data and the relatedness information are combined to compute the likelihood function 220 for process C. Specifically,

$$L(r_c, \theta_c) = \frac{1}{2} [L(r_c, \theta_c | A) + L(r_c, \theta_c | B)]$$

$$= \frac{1}{2} \left[ \int R(r_c, r_a) R(\theta_c, \theta_a) \, p(r_a, \theta_a | D_a) dr_a d\theta_a \right.$$

$$\left. + \int R(r_c, r_b) R(\theta_c, \theta_b) \, p(r_b, \theta_b | D_b) dr_b d\theta_b \right]$$

$$(9)$$

After having retrieved all the necessary inputs, the first optimisation step is performed at 320, which comprises providing 410 an input value (set of one element) for the harvest time and then performing 415 the second optimisation step. The second optimisation step comprises providing 430 a set of likely values for the variable evolution parameters based on the likelihood function 220 of equation (9). In this example, the likely values for the growth rate and the inhibitor production are chosen as the most likely values, i.e. the values that maximise the likelihood function $(\overline{r_c}, \overline{\theta_c}) = \text{argmax } L(r_c, \theta_c)$. Then at 435 the third optimisation step is performed. No other values are considered for the variable evolution parameters, this means there is no loop within the second optimisation step and the utility score computed at 440 will coincide with the only utility tally. Further, if stochasticity is not considered, the utility tally computed at 450 will coincide with the utility value computed at 465 by performing the fourth optimisation step at 445.

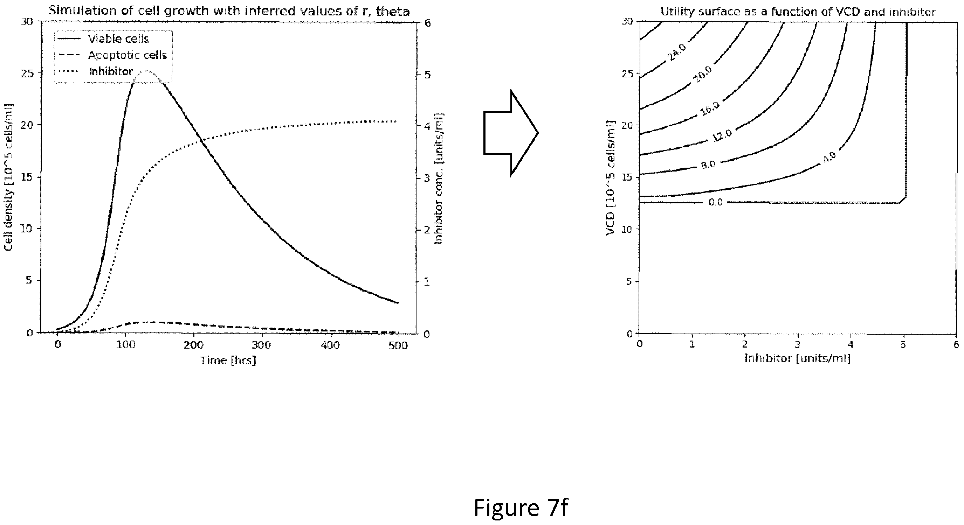

In the fourth optimisation step, at 455 a simulation is generated using the process evolution information 210 of equations (7) with the most likely values for ($r_c$, $\theta_c$) and given initial conditions, the retrieved recipe template composite 200 comprising only one recipe template, and the input value for the harvest time, denoted e.g. with $ht_1$. From the simulation, the values of the process variables (in particular VCD and inhibitor concentration) at different times are obtained at 460, i.e. the trajectories. The left-side plot in **Figure 7f** shows the trajectories for the process variables $V$, $\tau$ and $A$.

In this example, similarly to the first scenario, the utility score function can be directly obtained from the trajectories, which already provide $V$ and $\tau$ as a function of time, without looping over the second optimisation step. The values of the process variables are fed to the utility function 240 of equation (8), a plot of which is shown on the right side of Figure 7f.

At 425 the score function $US(ht) = U[V(ht), \tau (ht)]$ is optimised e.g. using numerical methods in order to find the optimal utility score and the associated $ht^{opt}$. In this example the optimal utility score equals 13.13, while $ht^{opt}$ = 108 hours. These values correspond to $V$ = 23.65*10$^5$ cells/ml and $\tau$ = 2.54 mM. The recipe template with harvest time $ht^{opt}$ is provided to the control system of the bioreactor, so that harvest is carried out automatically at $ht^{opt}$, thereby optimizing the utility score and, thus, the production process C.

### Third scenario

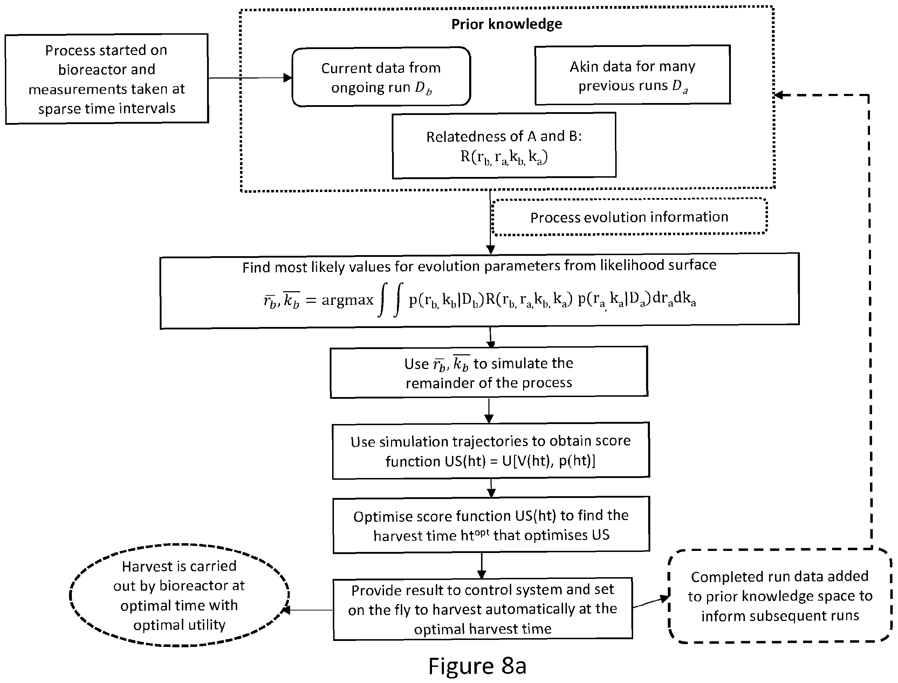

**Figures 8a to 8c** show a conceptual diagram of an exemplary recipe determination and related plots. The third scenario involves a culture process with growth, inhibitor production and protein production.

At 310, the process evolution information 210 is retrieved. The model for this production process may assume that viable cells reproduce at a maximum rate, $r$, and that growth is slowed down is slowed by an inhibitory toxin which is produced as a byproduct of cell growth. Further, cells have a finite lifetime and become apoptotic at a constant rate $\delta_V$. Viable cells produce protein with activity r and protein is degraded by the build-up of the inhibitor at a rate $\delta_\tau$. The process evolution information 210 in this case comprises the following four differential equations:

$$\frac{dV}{dt} = rV\frac{k}{k + I_\tau} - \delta_V V$$

$$\frac{dI_\tau}{dt} = \tau$$

$$\frac{d\tau}{dt} = \theta rV\frac{k}{k + I_\tau}$$

$$\frac{dp}{dt} = \rho V - p\tau\delta_\tau$$

$$(10)$$

wherein $V$ is the viable cell density [cells/ml], $r$ is the cell growth rate [hr$^{-1}$], $k$ is the inhibitor concentration capacity [mM*hr/ml], $\delta_V$ is the apoptosis rate [hr$^{-1}$], $I_\tau$ is the cumulative inhibitor concentration [inhibitor*hr/ml], $\tau$ is the inhibitor concentration [mM], $\theta$ is the inhibitor production [$\mu$mol/cell], $\delta_\tau$ is the protein degradation [mM$^{-1}$*hr$^{-1}$], $p$ is the viable protein concentration [units/ml] and $\rho$ is the protein production rate [units/cell*hr]. The process evolution information 210 in this case comprises two variable evolution parameters, namely the cell growth rate and the inhibitor concentration capacity.

Further, a mapping 230 is retrieved, wherein the mapping 230 is a function of the VCD and the viable protein concentration and is the identity function, i.e. $V$ and $p$ are both process variables and performance indicators. Additionally, a utility function $U(V,p)$ 240 is retrieved.

In this scenario, the production process has already started and the recipe is updated and optimized on the fly. Accordingly, the recipe template composite 200 retrieved corresponds to the recipe currently being used, in which the harvest time is the variable recipe parameter whose value has to be chosen in order to optimize the utility function.

In this example, retrieving the likelihood function 220 comprises retrieving current data related to an ongoing run of the production process B, $D_b$, akin data related to an akin process A, $D_a$, as well as corresponding relatedness information and computing the likelihood function 220 based on all those, as explained in the following. Process B uses cell type B and process A uses cell type A.

In particular, the dataset $D_a$ may include trajectory data from a large number of runs. For process A, Bayesian inference may be used to obtain a probability or posterior distribution $p(r_a, k_a | D_a) \sim p(D_a | r_a, k_a)$, wherein $p(D_a | r_a, k_a)$

is the conditional distribution of the data given values for the growth rate r, and the inhibitor concentration saturation constant $k$, while the prior is again uniform. The conditional distribution may be obtained by computing the probability that, for each run in $D_a$, the run data could have been produced if the "true" values for the evolution parameters had been $r_a$, $k_a$.

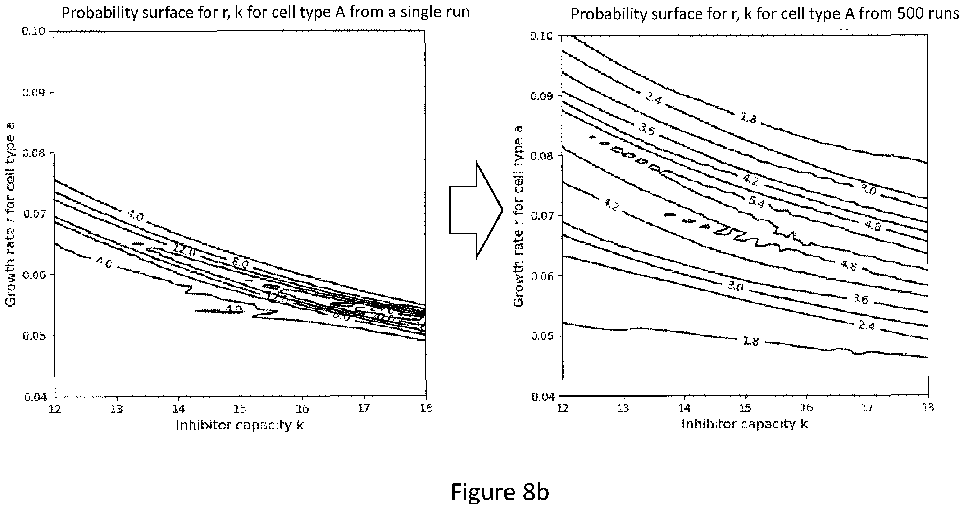

Indeed, if data relative to more than a single run are available, the probability surfaces can be combined additively to give an increasingly more informative description of the probability landscape. The larger the dataset, the closer is the probability landscape to predicting the population mean for each of the evolution parameters of interest. **Figure 8b** shows the probability surface for $r$ and $k$ as obtained from data $D_a$ when the data relate to a single run (left side) and to 500 runs (right side). The estimates for the population means for $r$ and $k$ from a single run are $r = 0.054$ and $k = 17.2$. The estimates for the population means for $r$ and $k$ from 500 runs are r = 0.069 and k = 15.7.

The relatedness information may be based on experimental/literature knowledge about the production processes and may be a joint distribution over the two variable evolution parameters, $R(r_b, r_a, k_b, k_a)$, e.g. a multivariate normal distribution having standard deviation equal to 0.012 for the growth rate and standard deviation equal to 0.008 for the inhibitor saturation constant (the off-diagonal terms of the covariance matrix are set to zero).

Based on the partial data $D_b$ from the ongoing process, it is also possible to obtain a posterior or probability distribution $p(r_b, k_b \mid D_b)$ similarly to what explained above for A. Since it is based on a single, partial run, this distribution may not be particularly informative, but it can be combined with $p(r_a, k_a \mid D_a)$ and the relatedness information $R(r_b, r_a, k_b, k_a)$ to obtain a likelihood function 220 that is more informative, namely

$$L(r_b, k_b) = \int \int p(r_b, k_b | D_b) R(r_b, r_a, k_b, k_a)\, p(r_a, k_a | D_a)\, dr_a dk_a$$

$$(11)$$

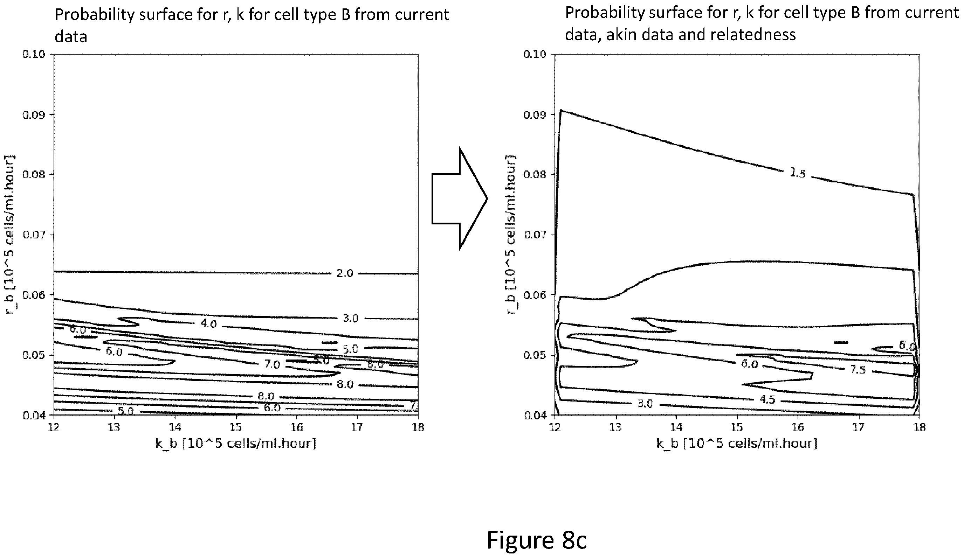

**Figure 8c** shows the difference between $p(r_b, k_b \mid D_b)$ on the left and $L(r_b, k_b)$ on the right.

After having retrieved all the necessary inputs, the first optimisation step is performed at 320, which comprises providing 410 an input value (set of one element) for the harvest time and then performing 415 the second optimisation step. The second optimisation step comprises providing 430 a set of likely values for the variable evolution parameters based on the likelihood function 220 of equation (11). In this example, the likely values for the growth rate and the inhibitor concentration capacity are chosen as the most likely values, i.e. the values that maximise the likelihood function $(\overline{r}_b, \overline{k}_b)$ = argmax $L(r_b, k_b)$. Then at 435 the third optimisation step is performed. No other values are considered for the variable evolution parameters, this means there is no loop within the second optimisation step and the utility score computed at 440 will coincide with the only utility tally. Further, if stochasticity is not considered, the utility tally computed at 450 will coincide with the utility value computed at 465 by performing the fourth optimisation step at 445.

In the fourth optimisation step, at 455 a simulation is generated using the process evolution information 210 of equations (10) with the most likely values for $(r_b, k_b)$ and given initial conditions, the recipe being used in the ongoing run, and the input value for the harvest time, denoted e.g. with $ht_1$. From the simulation, the values of the process variables at different times are obtained at 460, i.e. the trajectories.

In this example, similarly to the first and second scenarios, the utility score function can be directly obtained from the trajectories, which already provide $V$ and $p$ as a function of time, without looping within the first optimisation step. At 425 the score function $US(ht) = U[V(ht), p\,(ht)]$ is optimised e.g. using numerical methods in order to find the optimal utility score and the associated $ht^{opt}$ The value for harvest time $ht^{opt}$ is provided to the control system of the bioreactor, so that the recipe is updated on the fly and harvest is carried out automatically at $ht^{opt}$, thereby optimizing the utility score and, thus, the production process B.

Once the run is completed, the trajectories data are stored so that they can be part of the prior knowledge space for subsequent runs.

Fourth scenario

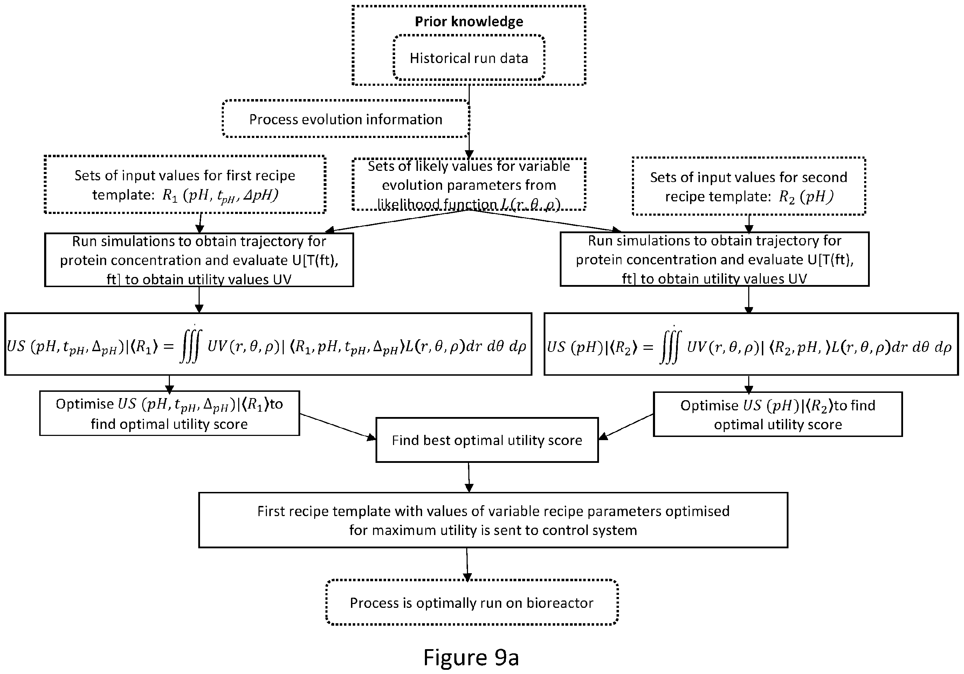

**Figures 9a to 9e** show a conceptual diagram of an exemplary recipe determination and related plots. The fourth scenario involves a culture process with pH-dependant growth, inhibitor production and protein production.

At 310, the process evolution information 210 is retrieved. The model for this production process may assume that viable cells reproduce at a maximum rate, $r$, and that growth is slowed down is slowed by an inhibitory toxin which is produced as a byproduct of cell growth. Further, cells have a finite lifetime and become apoptotic at a constant rate $\delta_V$. Viable cells produce protein with activity $\rho$ and protein is degraded by the build-up of the inhibitor at a rate $\delta_r$. The cell growth rate is dependent on the pH being maintained around an optimal level $pH_{gro}$, while deviations on either side of this optimum will inhibit growth. The protein is stable for high pH but is denatured at low pH at a rate $\delta_{pH}$ and with centre point of the response $c$.

The process evolution information 210 in this case comprises the following four differential equations:

$$\frac{dV}{dt} = rV\frac{k}{k + I_\tau} \cdot e^{-\frac{(pH - pH_{gro})2}{2\sigma^2}} - \delta_V V$$

$$\frac{dI_\tau}{dt} = \tau$$

$$\frac{d\tau}{dt} = \theta rV\frac{k}{k + I_\tau}$$

$$\frac{dp}{dt} = \rho V - p\tau\delta_\tau - \frac{p\delta_{pH}}{1 + e^{-s(pH-c)}}$$

$$(12)$$

wherein $V$ is the viable cell density [cells/ml], $r$ is the cell growth rate [hr$^{-1}$], $k$ is the inhibitor concentration capacity [mM*hr/ml], $\delta_V$ is the apoptosis rate [hr$^{-1}$], $I_\tau$ is the cumulative inhibitor concentration [inhibitor*hr/ml], $\tau$ is the inhibitor concentration [mM], $\theta$ is the inhibitor production [$\mu$mol/cell], $\delta_\tau$ is the protein degradation [mM$^{-1}$*hr$^{-1}$], $p$ is the viable protein concentration [units/ml], $\rho$ is the protein production rate [units/cell*hr], $pH_{gro}$ is the optimal pH for growth [pH], $\sigma$ is the tolerance to deviation from $pH_{gro}$ [pH], $\delta_{pH}$ is the rate of pH-mediated protein degradation [hr$^{-1}$], s is the sensitivity to pH change [pH$^{-1}$] and $c$ is the centre point of response [pH]. The process evolution information 210 in this case comprises three variable evolution parameters, namely the cell growth rate, the inhibitor production and the protein production rate.

Besides the process evolution information, two recipe template composites 200 are retrieved, each comprising a single recipe template. The first recipe template involves a shift of the pH during the execution and comprises three variable recipe templates, the starting value for the pH, the magnitude of the pH shift, $\Delta_{pH}$, and the time of the shift, $t_{pH}$. The second recipe template comprises one variable recipe template, the value at which the pH is set, and according to this recipe template the pH is kept constant.

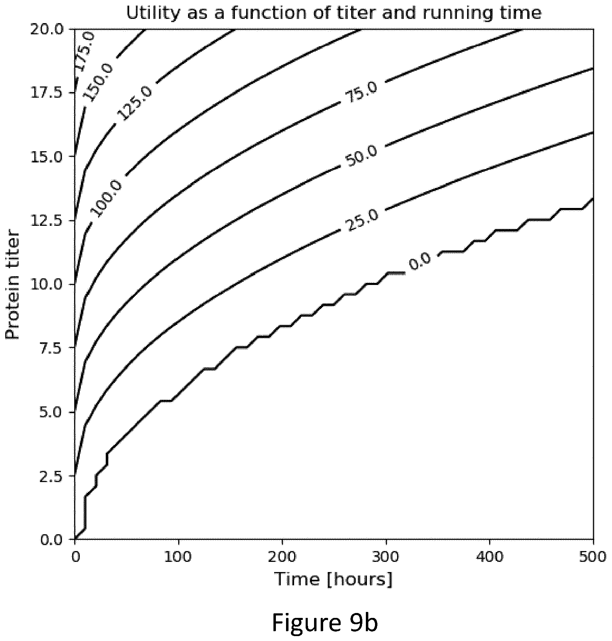

Further, a mapping 230 is retrieved, wherein the mapping 230 is a function M of the viable protein concentration and associates it to the titre $T$ as performance indicator. Additionally, a utility function 240 is retrieved. The goal of the optimisation is not simply to produce the most protein but to consider also the costs of the process, in particular due to the running time $ft$. The utility function 240 is given by $U(T, ft) = 10T - 6\sqrt{ft}$ (13) and is plotted in **Figure 9b.** It can be seen that a gain due to increasing the protein titre is weighted against the increased running time cost of achieving the titre.

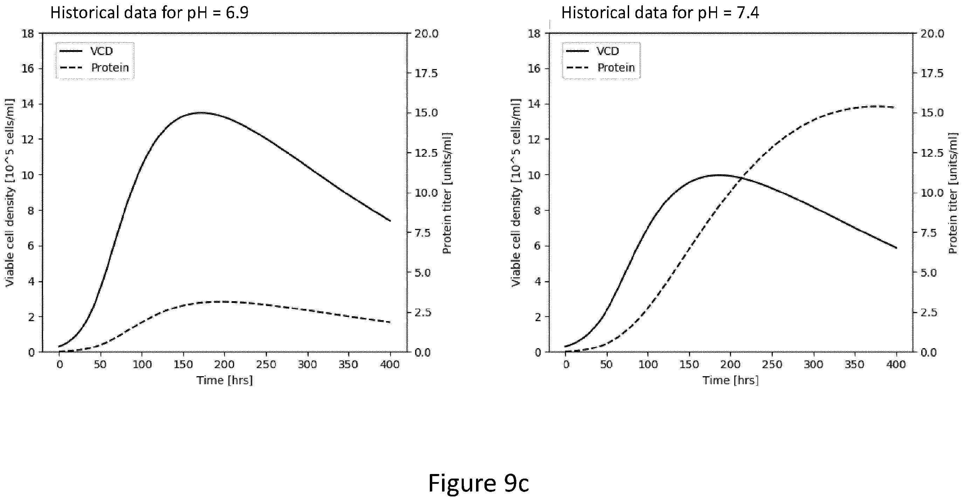

In this example, retrieving the likelihood function 220 comprises retrieving historical data related to one or more previous runs of the production process for which the recipe has to be optimized and computing the likelihood function 220 based on those, as explained in the following. In particular, the historical data may include trajectory data for at least some of the process variables. **Figure 9c** comprises two exemplary plots showing the trajectories for the VCD and the viable protein concentration, for a run with pH = 6.9 (on the left) and a run with pH = 7.4 (on the right).

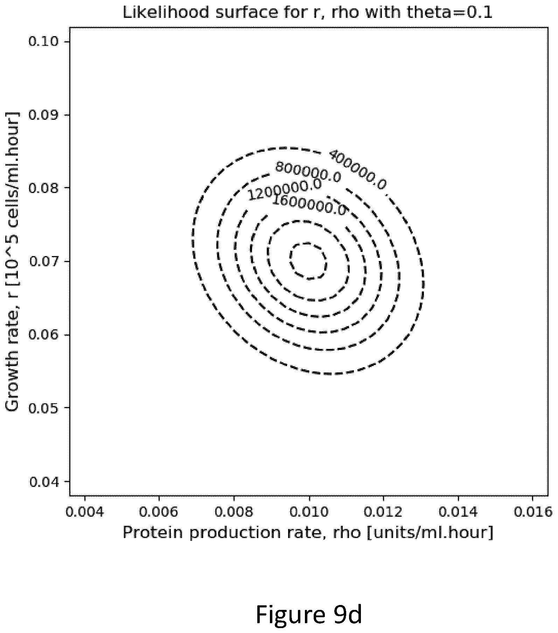

Based on the historical data, Bayesian inference may be used to obtain the likelihood function $L(r, \rho, \theta)$ as the probability or posterior distribution $p(r, \rho, \theta|D) \sim p(D \mid r, \rho, \theta)$, wherein $p(D \mid r, \rho, \theta)$ is the conditional distribution of the data for a given value of the growth rate and the inhibitor concentration capacity, while the priors are uniform. The conditional distribution may be obtained by computing the probability that, for each run in $D$, the run data could have been produced if the "true" values for the evolution parameters had been $r, \rho, \theta$. **Figure 9d** shows a slice of the three-dimensional likelihood space for a fixed $\theta$ equal to 0.1. The inferred distribution parameters for the likelihood function are, given $X = [r, \theta, \rho]$,

$$\mu_X = \begin{bmatrix} 0.07, & 0.1, & 0.01 \end{bmatrix}$$

$$\Sigma_X = \begin{pmatrix} 64 & 0.32 & -2.5 \\ 0.32 & 4.0 & 0.032 \\ -2.56 & 0.032 & 2.56 \end{pmatrix} \times 10^{-6}$$

$$(14)$$

After having retrieved all the necessary inputs, the first recipe template is selected and the first optimisation step is performed at 320, which comprises providing 410 a set of input values for pH, $\Delta_{pH}$, and $t_{pH}$, and then performing 415 the second optimisation step. The second optimisation step comprises providing 430 a set of likely values for the variable evolution parameters r, θ, ρ based on the likelihood function 220. In this example, the likely values may be drawn randomly with the probability of selection dependant on the likelihood function 220.

Then at 435 the third optimisation step is performed. If stochasticity is not considered, the third optimisation step coincides with the fourth optimisation step and the utility tally computed at 450 will coincide with the utility value computed at 465 by performing the fourth optimisation step at 445. In the fourth optimisation step, at 455 a simulation is generated using the process evolution information 210 of equations (12) with the provided set of likely values, given initial conditions, the first recipe template, and the set of input values for the variable recipe parameters. From the simulation, the values of the process variables at different times are obtained at 460, i.e. the trajectories, in particular for the protein concentration *p*. Via the mapping, the values for the titre T can be obtained and fed to the utility function 240 of equation (13), in particular T at the final time, which is also the running time, *T(ft)*. *The* utility value is then *UV=U(T(ft), ft]* and is associated to the given recipe template composite, the given set of input values and the set of likely values.

The third/fourth optimisation step is repeated by providing different sets of likely values, thereby obtaining a plurality of utility values/utility tallies $UV_1$, $UV_2$, ... $UV_n$. At 440 the utility score for a specific set of input values $(\overline{pH}, \overline{t_{pH}}, \overline{\Delta_{pH}})$ is computed by weighting the utility values by the likelihood function 220:

$$US\,(\overline{pH}, \overline{t_{pH}}, \overline{\Delta_{pH}})|\langle R_1 \rangle = \iiint UV(r, \theta, \rho)|\,\langle R_1, \overline{pH}, \overline{t_{pH}}, \overline{\Delta_{pH}} \rangle L(r,\ \theta,\ \rho) dr\, d\theta\, d\rho$$

$$(15)$$

At 420 the second optimisation step is repeated by iterating over different values of pH, $\Delta_{pH}$, $t_{pH}$, thereby obtaining a plurality of utility scores, from which a score function $US\,(pH, t_{pH}, \Delta_{pH})|\langle R_1 \rangle$ is defined, and at 425 the optimal utility score is identified, namely by optimizing the score function

$$pH^{opt}, t_{pH}^{opt},\ \Delta_{pH}{}^{opt} = \underset{pH,\,t_{pH},\,\Delta pH}{\mathrm{argmax}}\ US\,(pH, t_{pH}, \Delta_{pH})|\langle R_1 \rangle$$

$$(16)$$

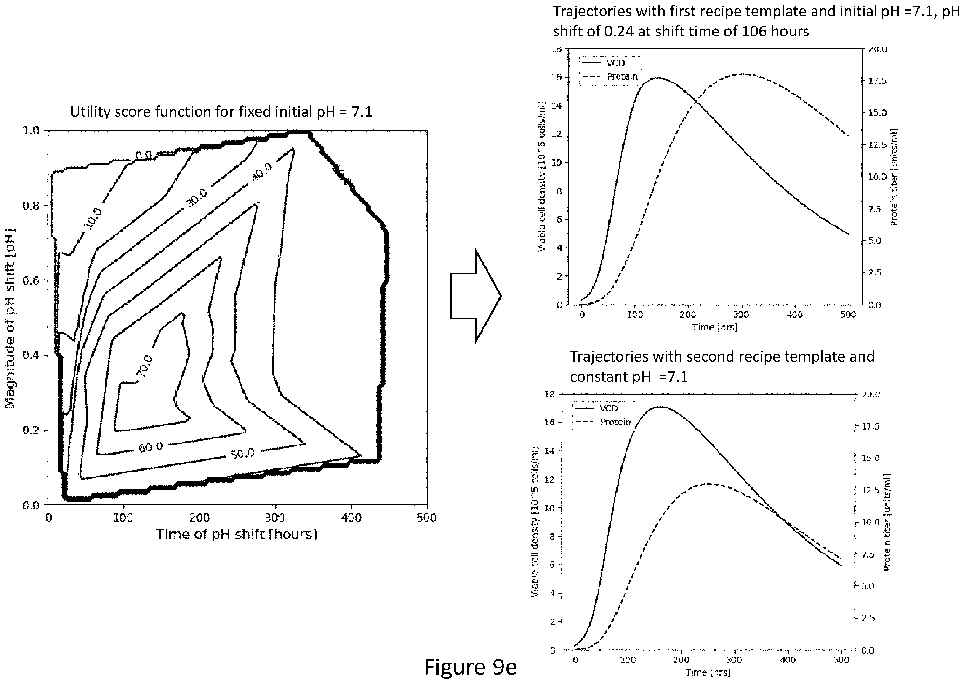

The optimal utility score $US_{R1}^{opt} = US\,(pH^{opt}, t_{pH}^{opt},\ \Delta_{pH}{}^{opt})|\langle R_1 \rangle$ associated with the first recipe template $R_1$ equals 78.9. **Figure 9e** shows on the left side the utility score as a function of $\Delta_{pH}$, $t_{pH}$ for an intial pre-shift pH of 7.1.

The whole procedure is repeated again at 330 for the second recipe template $R_2$, obtaining an optimal utility score associate thereto, $US_{R2}^{opt} = 37.55$. At 340 the best optimal utility score is identified, which in this case is $US_{R1}^{opt}$. Figure 9e shows in the upper plot on the right side the trajectories of the simulation performed with the first recipe template and the values of the variable recipe parameters that give the optimal utility score of 78.93, namely starting pH = 7.1, $\Delta_{pH}$ = 0.24 and $t_{pH}$ = 106 hours. The lower plot on the right side of Figure 9e shows the trajectories of the simulation performed with the second recipe template and the value that gives the optimal utility score of 37.55, namely constant pH = 7.1.

The first recipe template with the values starting pH = 7.1, $\Delta_{pH}$ = 0.24 and $t_{pH}$ = 106 hours is provided to the control system of the bioreactor, so that the production process is optimised, i.e. executed in a manner that maximises utility.

**Claims**

1. A computer-implemented method (300) of determining at least one recipe for a production process to produce a chemical, pharmaceutical and/or biotechnological product, wherein the production process is defined by a plurality of steps specified by one or more recipe parameters controlling an execution of the production process and the at least one recipe comprises the plurality of steps defining the production process, the method comprising:

   - retrieving (310):

      -- one or more recipe template composites (200), wherein a recipe template composite (200) comprises one or more recipe templates and a recipe template is a recipe in which at least one of the one or more recipe parameters specifying the plurality of steps is a variable recipe parameter being variable and having no predetermined value at the outset;
      -- process evolution information (210) that describes the time evolution of one or more process variables that describe a state of the production process, wherein the process evolution information (210) comprises one or more evolution parameters and at least one of the one or more evolution parameters is a variable evolution parameter being variable and having no predetermined value at the outset;
      -- a likelihood function (220) for the one or more evolution parameters, wherein the likelihood function (220) provides a likelihood that one or more values for the one or more evolution parameters are feasible for the production process;
      -- a mapping (230) that maps the one or more process variables onto one or more performance indicators;
      -- a utility function (240) for at least one of the one or more performance indicators, wherein the utility function provides a desirability value associated to the one or more performance indicators;

   - selecting (320) a recipe template composite (200) and performing a first optimisation step comprising:

      -- providing (410) a set of input values for the at least one variable recipe parameter in the recipe template composite (200);
      -- performing (415) a second optimisation step providing a utility score;
      -- repeating (420) the second optimisation step for at least another set of input values, thereby obtaining a plurality of utility scores;
      -- identifying (425) the optimal utility score from the plurality of utility scores;

   - if only one recipe template composite (200) was retrieved, selecting (350) the set of input values (280) that yields the optimal utility score (260) together with the one recipe template composite as the at least one recipe for the production process; or
   - if more than one recipe template composite (200) was retrieved:

      -- repeating (330) the first optimisation step for each recipe template composite (200), thereby obtaining a plurality of optimal utility scores;
      -- identifying (340) the best optimal utility score (260) among the plurality of optimal utility scores;
      -- selecting (350) the recipe template composite (270) and the set of input values (280) that yield the best optimal utility score (260) as the at least one recipe for the production process;

   wherein:

   - the second optimisation step comprises:

      -- providing (430) a set of likely values for the at least one variable evolution parameter based on the likelihood function (220);
      -- performing (435) a third optimisation step providing a utility tally;
      -- if there is at least another set of likely values that is suitable, repeating the third optimisation step for the at least another set of likely values, thereby obtaining a plurality of utility tallies;
      -- computing (440) the utility score by weighting the utility tally or utility tallies by the likelihood function (220);

- the third optimisation step comprises:

-- performing (445) a fourth optimisation step providing a utility value;
-- if a stochasticity flag is set, repeating the fourth optimisation step, thereby obtaining a plurality of utility values;
-- computing (450) the utility tally as the utility value or by compounding the plurality of utility values;

- the fourth optimisation step comprises:

-- generating (455) a simulation by simulating the execution of the production process using a recipe template in the recipe template composite (200) with the set of input values for the at least one variable recipe parameter, the process evolution information (210) and the set of likely values for the at least one variable evolution parameter;
-- if the recipe template composite (200) comprises more than one recipe template, repeating the step of generating the simulation for each recipe template in the recipe template composite (200);
-- determining (460), from the one or more simulations, one or more trajectories (250) for the one or more process variables, wherein a trajectory (250) corresponds to a time-based profile of values recordable during the simulated execution of the production process;
-- computing (465) the utility value by evaluating the utility function using the one or more process variables of the one or more trajectories (250) and the mapping (230).

2. The method (300) of claim 1, wherein the chemical, pharmaceutical and/or biotechnological product is a first product and retrieving the likelihood function (220) comprises:

- retrieving akin data related to at least one akin production process to produce a second chemical, pharmaceutical and/or biotechnological product, wherein the at least one akin production process has been at least partially performed and wherein the at least one akin production process is different from the production process;
- retrieving relatedness information providing a quantitative indication of similarity between the production process and the akin production process;
- computing the likelihood function (220) based on the akin data and the relatedness information.

3. The method (300) of any one of the preceding claims, wherein retrieving the likelihood function (220) comprises:

- retrieving current data related to an ongoing run of the production process;
- computing the likelihood function (220) based on the current data.

4. The method (300) of any one of the preceding claims, wherein retrieving the likelihood function (220) comprises:

- retrieving historical data related to one or more past runs of the production process;
- computing the likelihood function (220) based on the historical data.

5. The method (300) of any one of the preceding claims, further comprising:

providing the at least one recipe to a control system (20);
executing, by the control system (20), the production process based on the at least one recipe.

6. The method (300) of claim 5, further comprising:
storing data from the executed production process as historical data and/or storing data from the executing production process as current data.

7. The method (300) of any one of the preceding claims, further comprising updating the likelihood function based on the one or more trajectories and storing the updated likelihood function.

8. A computer program product comprising computer-readable instructions, which, when loaded and executed on a computer system, cause the computer system to perform operations according to all the steps of the method of any one of the preceding claims.

9. A computer system (10) operable to determine at least one recipe for a production process to produce a chemical, pharmaceutical and/or biotechnological product, wherein the production process is defined by a plurality of steps specified by one or more recipe parameters controlling an execution of the production process and the at least one recipe comprises the plurality of steps defining the production process, the computer system (10) comprising:

- a retrieving module configured to retrieve:

-- one or more recipe template composites (200), wherein a recipe template composite (200) comprises one or more recipe templates and a recipe template is a recipe in which at least one of the one or more recipe parameters specifying the plurality of steps is a variable recipe parameter being variable and having no predetermined value at the outset;
-- process evolution information (210) that describes the time evolution of one or more process variables that describe a state of the production process, wherein the process evolution information (210) comprises one or more evolution parameters and at least one of the one or more evolution parameters is a variable evolution parameter being variable and having no predetermined value at the outset;
-- a likelihood function (220) for the one or more evolution parameters, wherein the likelihood function (220) provides a likelihood that one or more values for the one or more evolution parameters are feasible for the production process;
-- a mapping (230) that maps the one or more process variables onto one or more performance indicators;
-- a utility function (240) for at least one of the one or more performance indicators, wherein the utility function (240) provides a desirability value associated to the one or more performance indicators;

- a computing module configured to select (320) a recipe template composite (200) and perform a first optimisation step comprising:

-- providing (410) a set of input values for the at least one variable recipe parameter in the recipe template composite (200);
-- performing (415) a second optimisation step providing a utility score;
-- repeating (420) the second optimisation step for at least another set of input values, thereby obtaining a plurality of utility scores;
-- identifying (425) the optimal utility score from the plurality of utility scores;

wherein the computing module is further configured, if only one recipe template composite (200) was retrieved, to select (350) the set of input values (280) that yields the optimal utility score (260) together with the one recipe template composite as the at least one recipe for the production process;
or the computing module is further configured, if more than one recipe template composite (200) was retrieved, to:

- repeat (330) the first optimisation step for each recipe template composite (200), thereby obtaining a plurality of optimal utility scores;
- identify (340) the best optimal utility score (260) among the plurality of optimal utility scores;
- select the recipe template composite (270) and the set of input values (280) that yield the best optimal utility score (260) as the at least one recipe for the production process;

and wherein:
- the second optimisation step comprises:

-- providing (430) a set of likely values for the at least one variable evolution parameter based on the likelihood function (220);
-- performing (435) a third optimisation step providing a utility tally;
-- if there is at least another set of likely values that is suitable, repeating the third optimisation step for the at least another set of likely values, thereby obtaining a plurality of utility tallies;
-- computing (440) the utility score by weighting the utility tally or the utility tallies by the likelihood function (220);

- the third optimisation step comprises:

-- performing (445) a fourth optimisation step providing a utility value;
-- if a stochasticity flag is set, repeating the fourth optimisation step, thereby obtaining a plurality of utility values;

-- computing (450) the utility tally as the utility value or by compounding the plurality of utility values;

- the fourth optimisation step comprises:

-- generating (455) a simulation by simulating the execution of the production process using a recipe template in the recipe template composite (200) with the set of input values for the at least one variable recipe parameter, the process evolution information (210) and the set of likely values for the at least one variable evolution parameter;
-- if the recipe template composite (200) comprises more than one recipe template, repeating the step of generating the simulation for each recipe template in the recipe template composite (200);
-- determining (460), from the one or more simulations, one or more trajectories (250) for the one or more process variables, wherein a trajectory (250) corresponds to a time-based profile of values recordable during the simulated execution of the production process;
-- computing (465) the utility value by evaluating the utility function using the one or more process variables of the one or more trajectories (250) and the mapping (230).

10. The computer system (10) of claim 9, wherein the chemical, pharmaceutical and/or biotechnological product is a first product and the retrieving module is further configured to:

- retrieve akin data related to at least one akin production process to produce a second chemical, pharmaceutical and/or biotechnological product, wherein the at least one akin production process has been at least partially performed and wherein the at least one akin production process is different from the production process;
- retrieve relatedness information providing a quantitative indication of similarity between the production process and the akin production process;

and the computing module is further configured to compute the likelihood function (220) based on the akin data and the relatedness information.

11. The computer system (10) of claim 9 or 10, wherein the retrieving module is further configured to retrieve current data related to an ongoing run of the production process and the computing module is further configured to compute the likelihood function (220) based on the current data.

12. The computer system (10) of any one of claims 9 to 11, wherein the retrieving module is further configured to retrieve historical data related to one or more past runs of the production process and the computing module is further configured to compute the likelihood function (220) based on the historical data.

13. The computer system (10) of any one of claims 9 to 12, further configured to be interfaced with a control system (20) for controlling a production process equipment (30), wherein:

the computer system (10) is configured to provide the at least one recipe to the control system (20); and
the control system (20) is configured to execute the production process based on the at least one recipe.

14. The computer system (10) of claim 13, further configured to store data from the executed production process as historical data and/or to store data from the executing production process as current data.

15. The computer system (10) of any one of claims 9 to 14, wherein:
the computing module is further configured to update the likelihood function based on the one or more trajectories.

**Patentansprüche**

1. Computerimplementiertes Verfahren (300) zum Bestimmen von mindestens einem Rezept für einen Produktionsprozess zum Produzieren eines chemischen, pharmazeutischen und/oder biotechnologischen Produkt, wobei der Produktionsprozess durch eine Vielzahl von Schritten definiert wird, die durch einen oder mehrere Rezeptparameter spezifiziert sind, die eine Ausführung des Produktionsprozesses steuern, und das mindestens eine Rezept eine Vielzahl von Schritten umfasst, die den Produktionsprozess definieren, wobei das Verfahren Folgendes umfasst:

- Abrufen (310):

-- von einer oder mehreren Rezeptvorlagenzusammenstellungen (200), wobei eine Rezeptvorlagenzusammenstellung (200) eine oder mehrere Rezeptvorlagen umfasst und eine Rezeptvorlage ein Rezept ist, bei dem mindestens einer des einen oder der mehreren Rezeptparameter, die die Vielzahl von Schritten spezifizieren, ein variabler Rezeptparameter ist, der variabel ist und am Anfang keinen vorbestimmten Wert aufweist;

-- Prozessentwicklungsinformationen (210), die die zeitliche Entwicklung von einer oder mehreren Prozessvariablen beschreiben, die einen Zustand des Produktionsprozesses beschreiben, wobei die Prozessentwicklungsinformationen (210) einen oder mehrere Entwicklungsparameter umfassen und mindestens einer des einen oder der mehreren Entwicklungsparameter ein variabler Entwicklungsparameter ist, der variabel ist und am Anfang keinen vorbestimmten Wert aufweist;

-- einer Wahrscheinlichkeitsfunktion (220) für den einen oder die mehreren Entwicklungsparameter, wobei die Wahrscheinlichkeitsfunktion (220) eine Wahrscheinlichkeit bereitstellt, dass ein oder mehrere Werte für den einen oder die mehreren Entwicklungsparameter für den Produktionsprozess realisierbar sind;

-- einer Zuordnung (230), die die eine oder die mehreren Prozessvariablen einem oder mehreren Leistungsindikatoren zuordnen;

-- einer Nützlichkeitsfunktion (240) für mindestens einen des einen oder der mehreren Leistungsindikatoren, wobei die Nützlichkeitsfunktion einen Erwünschtheitswert bereitstellt, der mit dem einen oder den mehreren Leistungsindikatoren verknüpft ist;

- Auswählen (320) einer Rezeptvorlagenzusammenstellung (200) und Durchführen eines ersten Optimierungsschritts, der Folgendes umfasst:

-- Bereitstellen (410) eines Satzes von Eingangswerten für den mindestens einen variablen Rezeptparameter in der Rezeptvorlagenzusammenstellung (200);

-- Durchführen (415) eines zweiten Optimierungsschritts, der eine Nützlichkeitsbewertung bereitstellt;

-- Wiederholen (420) des zweiten Optimierungsschritts für mindestens einen weiteren Satz von Eingangswerten, dadurch Erhalten einer Vielzahl von Nützlichkeitsbewertungen;

-- Identifizieren (425) der optimalen Nützlichkeitsbewertung in der Vielzahl von Nützlichkeitsbewertungen;

- wenn nur eine Rezeptvorlagenzusammenstellung (200) abgerufen wurde, Auswählen (350) des Satzes von Eingangswerten (280), der die optimale Nützlichkeitsbewertung (260) ergibt, zusammen mit der einen Rezeptvorlagenzusammenstellung als das mindestens eine Rezept für den Produktionsprozess; oder

- wenn mehr als eine Rezeptvorlagenzusammenstellung (200) abgerufen wurde:

-- Wiederholen (330) des ersten Optimierungsschritts für jede Rezeptvorlagenzusammenstellung (200), dadurch Erhalten einer Vielzahl von optimalen Nützlichkeitsbewertungen;

-- Identifizieren (340) der besten optimalen Nützlichkeitsbewertung (260) in der Vielzahl von optimalen Nützlichkeitsbewertungen;

-- Auswählen (350) der Rezeptvorlagenzusammenstellung (270) und des Satzes von Eingangswerten (280), die die beste optimale Nützlichkeitsbewertung (260) ergeben, als das mindestens eine Rezept für den Produktionsprozess;

wobei:

- der zweite Optimierungsschritt Folgendes umfasst:

-- Bereitstellen (430) eines Satzes von wahrscheinlichen Werten für den mindestens einen variablen Entwicklungsparameter auf Basis der Wahrscheinlichkeitsfunktion (220);

-- Durchführen (435) eines dritten Optimierungsschritts, der eine Nützlichkeitszählung bereitstellt;

-- wenn es mindestens einen weiteren Satz von wahrscheinlichen Werten gibt, der geeignet ist, Wiederholen des dritten Optimierungsschritts für den mindestens einen weiteren Satz von wahrscheinlichen Werten, dadurch Erhalten einer Vielzahl von Nützlichkeitszählungen;

-- Berechnen (440) der Nützlichkeitsbewertung durch Gewichten der Nützlichkeitszählung bzw. Nützlichkeitszählungen durch die Wahrscheinlichkeitsfunktion (220);

- der dritte Optimierungsschritt Folgendes umfasst:

-- Durchführen (445) eines vierten Optimierungsschritts, der einen Nützlichkeitswert bereitstellt;

-- wenn ein Stochastizitätsmarker gesetzt ist, Wiederholen des vierten Optimierungsschritts, dadurch Erhalten einer Vielzahl von Nützlichkeitswerten;
-- Berechnen (450) der Nützlichkeitszählung als den Nützlichkeitswert oder durch Kumulieren der Vielzahl von Nützlichkeitswerten;

- der vierte Optimierungsschritt Folgendes umfasst:

-- Erzeugen (455) einer Simulation durch Simulieren der Ausführung des Produktionsprozesses unter Verwendung einer Rezeptvorlage in der Rezeptvorlagenzusammenstellung (200) mit dem Satz von Eingangswerten für den mindestens einen variablen Rezeptparameter, den Prozessentwicklungsinformationen (210) und dem Satz von wahrscheinlichen Werten für den mindestens einen variablen Entwicklungsparameter;
-- wenn die Rezeptvorlagenzusammenstellung (200) mehr als eine Rezeptvorlage umfasst, Wiederholen des Schritts des Erzeugens der Simulation für jede Rezeptvorlage in der Rezeptvorlagenzusammenstellung (200);
-- Bestimmen (460) von einer oder mehreren Trajektorien (250) für die eine oder die mehreren Prozessvariablen anhand der einen oder der mehreren Simulationen, wobei eine Trajektorie (250) einem zeitbasierten Profil von Werten, die während der simulierten Ausführung des Produktionsprozesses aufzeichenbar sind, entspricht;
-- Berechnen (465) des Nützlichkeitswertes durch Beurteilen der Nützlichkeitsfunktion unter Verwendung der einen oder der mehreren Prozessvariablen der einen oder der mehreren Trajektorien (250) und der Zuordnung (230).

2. Verfahren (300) nach Anspruch 1, wobei das chemische, pharmazeutische und/oder biotechnologische Produkt ein erstes Produkt ist und das Abrufen der Wahrscheinlichkeitsfunktion (220) Folgendes umfasst:

- Abrufen von ähnlichen Daten, die mindestens einen ähnlichen Produktionsprozess betreffen, um ein zweites chemisches, pharmazeutisches und/oder biotechnologisches Produkt zu produzieren, wobei der mindestens eine ähnliche Produktionsprozess mindestens teilweise durchgeführt wurde und wobei sich der mindestens eine ähnliche Produktionsprozess vom Produktionsprozess unterscheidet;
- Abrufen von Verwandtschaftsinformationen, die eine quantitative Anzeige der Ähnlichkeit zwischen dem Produktionsprozess und dem ähnlichen Produktionsprozess bereitstellen;
- Berechnen der Wahrscheinlichkeitsfunktion (220) auf Basis der ähnlichen Daten und der Verwandtschaftsinformationen.

3. Verfahren (300) nach einem der vorhergehenden Ansprüche, wobei das Abrufen der Wahrscheinlichkeitsfunktion (220) Folgendes umfasst:

- Abrufen von aktuellen Daten" die einen laufenden Lauf des Produktionsprozesses betreffen;
- Berechnen der Wahrscheinlichkeitsfunktion (220) auf Basis der aktuellen Daten.

4. Verfahren (300) nach einem der vorhergehenden Ansprüche, wobei das Abrufen der Wahrscheinlichkeitsfunktion (220) Folgendes umfasst:

- Abrufen von Verlaufsdaten, die einen oder mehrere vorherige Läufe des Produktionsprozesses betreffen;
- Berechnen der Wahrscheinlichkeitsfunktion (220) auf Basis der Verlaufsdaten.

5. Verfahren (300) nach einem der vorhergehenden Ansprüche, das ferner Folgendes umfasst:

Bereitstellen des mindestens einen Rezepts für ein Steuersystem (20);
Ausführen des Produktionsprozesses durch das Steuersystem (20) auf Basis des mindestens einen Rezepts.

6. Verfahren (300) nach Anspruch 5, das ferner Folgendes umfasst:
Speichern von Daten aus dem ausgeführten Produktionsprozess als Verlaufsdaten und/oder Speichern von Daten aus dem derzeit ausgeführten Produktionsprozess als aktuelle Daten.

7. Verfahren (300) nach einem der vorhergehenden Ansprüche, das ferner das Aktualisieren der Wahrscheinlichkeitsfunktion auf Basis der einen oder der mehreren Trajektorien und das Speichern der aktualisierten Wahrscheinlichkeitsfunktion umfasst.

8. Computerprogrammprodukt, das computerlesbare Anweisungen umfasst, die, wenn sie in ein Computersystem geladen und von demselben ausgeführt werden, das Computersystem veranlassen, Operationen gemäß allen Schritten des Verfahrens nach einem der vorhergehenden Ansprüche durchzuführen.

9. Computersystem (10), das betreibbar ist, mindestens ein Rezept für einen Produktionsprozess zum Produzieren eines chemischen, pharmazeutischen und/oder biotechnologischen Produkt zu bestimmen, wobei der Produktionsprozess durch eine Vielzahl von Schritten definiert wird, die durch einen oder mehrere Rezeptparameter spezifiziert sind, die eine Ausführung des Produktionsprozesses steuern, und das mindestens eine Rezept eine Vielzahl von Schritten umfasst, die den Produktionsprozess definieren, wobei das Computersystem (10) Folgendes umfasst:

- ein Abrufmodul, das dazu ausgelegt ist, Folgendes abzurufen:

-- eine oder mehrere Rezeptvorlagenzusammenstellungen (200), wobei eine Rezeptvorlagenzusammenstellung (200) eine oder mehrere Rezeptvorlagen umfasst und eine Rezeptvorlage ein Rezept ist, bei dem mindestens einer des einen oder der mehreren Rezeptparameter, die die Vielzahl von Schritten spezifizieren, ein variabler Rezeptparameter ist, der variabel ist und am Anfang keinen vorbestimmten Wert aufweist;
-- Prozessentwicklungsinformationen (210), die die zeitliche Entwicklung von einer oder mehreren Prozessvariablen beschreiben, die einen Zustand des Produktionsprozesses beschreiben, wobei die Prozessentwicklungsinformationen (210) einen oder mehrere Entwicklungsparameter umfassen und mindestens einer des einen oder der mehreren Entwicklungsparameter ein variabler Entwicklungsparameter ist, der variabel ist und am Anfang keinen vorbestimmten Wert aufweist;
-- eine Wahrscheinlichkeitsfunktion (220) für den einen oder die mehreren Entwicklungsparameter, wobei die Wahrscheinlichkeitsfunktion (220) eine Wahrscheinlichkeit bereitstellt, dass ein oder mehrere Werte für den einen oder die mehreren Entwicklungsparameter für den Produktionsprozess realisierbar sind;
-- eine Zuordnung (230), die die eine oder die mehreren Prozessvariablen einem oder mehreren Leistungsindikatoren zuordnen;
-- eine Nützlichkeitsfunktion (240) für mindestens einen des einen oder der mehreren Leistungsindikatoren, wobei die Nützlichkeitsfunktion (240) einen Erwünschtheitswert bereitstellt, der mit dem einen oder den mehreren Leistungsindikatoren verknüpft ist;

- ein Berechnungsmodul, das dazu ausgelegt ist, eine Rezeptvorlagenzusammenstellung (200) auszuwählen (320) und einen ersten Optimierungsschritt durchzuführen, der Folgendes umfasst:

-- Bereitstellen (410) eines Satzes von Eingangswerten für den mindestens einen variablen Rezeptparameter in der Rezeptvorlagenzusammenstellung (200);
-- Durchführen (415) eines zweiten Optimierungsschritts, der eine Nützlichkeitsbewertung bereitstellt;
-- Wiederholen (420) des zweiten Optimierungsschritts für mindestens einen weiteren Satz von Eingangswerten, dadurch Erhalten einer Vielzahl von Nützlichkeitsbewertungen;
-- Identifizieren (425) der optimalen Nützlichkeitsbewertung in der Vielzahl von Nützlichkeitsbewertungen;

wobei das Berechnungsmodul ferner dazu ausgelegt ist, wenn nur eine Rezeptvorlagenzusammenstellung (200) abgerufen wurde, den Satz von Eingangswerten (280), der die optimale Nützlichkeitsbewertung (260) ergibt, zusammen mit der einen Rezeptvorlagenzusammenstellung als das mindestens eine Rezept für den Produktionsprozess auszuwählen (350);
oder das Berechnungsmodul ist ferner zu Folgendem ausgelegt, wenn mehr als eine Rezeptvorlagenzusammenstellung (200) abgerufen wurde:

- Wiederholen (330) des ersten Optimierungsschritts für jede Rezeptvorlagenzusammenstellung (200), dadurch Erhalten einer Vielzahl von optimalen Nützlichkeitsbewertungen;
- Identifizieren (340) der besten optimalen Nützlichkeitsbewertung (260) in der Vielzahl von optimalen Nützlichkeitsbewertungen;
- Auswählen der Rezeptvorlagenzusammenstellung (270) und des Satzes von Eingangswerten (280), die die beste optimale Nützlichkeitsbewertung (260) ergeben, als das mindestens eine Rezept für den Produktionsprozess;
und wobei:

- der zweite Optimierungsschritt Folgendes umfasst:

-- Bereitstellen (430) eines Satzes von wahrscheinlichen Werten für den mindestens einen variablen Entwicklungsparameter auf Basis der Wahrscheinlichkeitsfunktion (220);

-- Durchführen (435) eines dritten Optimierungsschritts, der eine Nützlichkeitszählung bereitstellt;

-- wenn es mindestens einen weiteren Satz von wahrscheinlichen Werten gibt, der geeignet ist, Wiederholen des dritten Optimierungsschritts für den mindestens einen weiteren Satz von wahrscheinlichen Werten, dadurch Erhalten einer Vielzahl von Nützlichkeitszählungen;

-- Berechnen (440) der Nützlichkeitsbewertung durch Gewichten der Nützlichkeitszählung bzw. der Nützlichkeitszählungen durch die Wahrscheinlichkeitsfunktion (220) ;

- der dritte Optimierungsschritt Folgendes umfasst:

-- Durchführen (445) eines vierten Optimierungsschritts, der einen Nützlichkeitswert bereitstellt;

-- wenn ein Stochastizitätsmarker gesetzt ist, Wiederholen des vierten Optimierungsschritts, dadurch Erhalten einer Vielzahl von Nützlichkeitswerten;

-- Berechnen (450) der Nützlichkeitszählung als den Nützlichkeitswert oder durch Kumulieren der Vielzahl von Nützlichkeitswerten;

- der vierte Optimierungsschritt Folgendes umfasst:

-- Erzeugen (455) einer Simulation durch Simulieren der Ausführung des Produktionsprozesses unter Verwendung einer Rezeptvorlage in der Rezeptvorlagenzusammenstellung (200) mit dem Satz von Eingangswerten für den mindestens einen variablen Rezeptparameter, den Prozessentwicklungsinformationen (210) und dem Satz von wahrscheinlichen Werten für den mindestens einen variablen Entwicklungsparameter;

-- wenn die Rezeptvorlagenzusammenstellung (200) mehr als eine Rezeptvorlage umfasst, Wiederholen des Schritts des Erzeugens der Simulation für jede Rezeptvorlage in der Rezeptvorlagenzusammenstellung (200);

-- Bestimmen (460) von einer oder mehreren Trajektorien (250) für die eine oder die mehreren Prozessvariablen anhand der einen oder der mehreren Simulationen, wobei eine Trajektorie (250) einem zeitbasierten Profil von Werten, die während der simulierten Ausführung des Produktionsprozesses aufzeichenbar sind, entspricht;

-- Berechnen (465) des Nützlichkeitswertes durch Beurteilen der Nützlichkeitsfunktion unter Verwendung der einen oder der mehreren Prozessvariablen der einen oder der mehreren Trajektorien (250) und der Zuordnung (230).

**10.** Computersystem (10) nach Anspruch 9, wobei das chemische, pharmazeutische und/oder biotechnologische Produkt ein erstes Produkt ist und das Abrufmodul ferner zu Folgendem ausgelegt ist:

- Abrufen von ähnlichen Daten, die mindestens einen ähnlichen Produktionsprozess betreffen, um ein zweites chemisches, pharmazeutisches und/oder biotechnologisches Produkt zu produzieren, wobei der mindestens eine ähnliche Produktionsprozess mindestens teilweise durchgeführt wurde und wobei sich der mindestens eine ähnliche Produktionsprozess vom Produktionsprozess unterscheidet;

- Abrufen von Verwandtschaftsinformationen, die eine quantitative Anzeige der Ähnlichkeit zwischen dem Produktionsprozess und dem ähnlichen Produktionsprozess bereitstellen;

und das Berechnungsmodul ist ferner dazu ausgelegt, die Wahrscheinlichkeitsfunktion (220) auf Basis der ähnlichen Daten und der Verwandtschaftsinformationen zu berechnen.

**11.** Computersystem (10) nach Anspruch 9 oder 10, wobei das Abrufmodul ferner dazu ausgelegt ist, aktuelle Daten abzurufen, die einen laufenden Lauf des Produktionsprozesses betreffen, und das Berechnungsmodul ferner dazu ausgelegt ist, die Wahrscheinlichkeitsfunktion (220) auf Basis der aktuellen Daten zu berechnen.

**12.** Computersystem (10) nach einem der Ansprüche 9 bis 11, wobei das Abrufmodul ferner dazu ausgelegt ist, Verlaufsdaten abzurufen, die einen oder mehrere vorherige Läufe des Produktionsprozesses betreffen, und das Berechnungsmodul ferner dazu ausgelegt ist, die Wahrscheinlichkeitsfunktion (220) auf Basis der Verlaufsdaten zu berechnen.

**13.** Computersystem (10) nach einem der Ansprüche 9 bis 12, das ferner dazu ausgelegt ist, zum Steuern einer Pr-

**EP 3 901 710 B1**

toduktionsprozessausrüstung (30) mit einem Steuersystem (20) verbunden zu sein, wobei:

das Computersystem (10) dazu ausgelegt ist, das mindestens eine Rezept für das Steuersystem (20) bereitzustellen; und

das Steuersystem (20) dazu ausgelegt ist, den Produktionsprozess auf Basis des mindestens einen Rezepts auszuführen.

**14.** Computersystem (10) nach Anspruch 13, das ferner dazu ausgelegt ist, Daten aus dem ausgeführten Produktionsprozess als Verlaufsdaten zu speichern und/oder Daten vom derzeit ausgeführten Produktionsprozess als aktuelle Daten zu speichern.

**15.** Computersystem (10) nach einem der Ansprüche 9 bis 14, wobei:
das Berechnungsmodul ferner dazu ausgelegt ist, die Wahrscheinlichkeitsfunktion auf Basis der einen oder der mehreren Trajektorien zu aktualisieren.


**Revendications**

**1.** Procédé mis en œuvre par ordinateur (300) pour déterminer au moins une recette pour un processus de production pour produire un produit chimique, pharmaceutique et/ou biotechnologique, dans lequel le processus de production est défini par une pluralité d'étapes spécifiées par un ou plusieurs paramètres de recette commandant une exécution du processus de production, et la au moins une recette comprend la pluralité d'étapes définissant le processus de production, le procédé comprenant :

- la récupération (310) :

-- d'un ou de plusieurs composites de modèles de recettes (200), dans lequel un composite de modèles de recettes (200) comprend un ou plusieurs modèles de recettes et un modèle de recette est une recette dans laquelle au moins un des un ou plusieurs paramètres de recette spécifiant la pluralité d'étapes est un paramètre de recette variable qui est variable et qui n'a pas de valeur prédéterminée au départ ;
-- d'informations d'évolution de processus (210) qui décrivent l'évolution temporelle d'une ou de plusieurs variables de processus qui décrivent un état du processus de production, dans lequel les informations d'évolution de processus (210) comprennent un ou plusieurs paramètres d'évolution et au moins un des un ou plusieurs paramètres d'évolution est un paramètre d'évolution variable qui est variable et qui n'a pas de valeur prédéterminée au départ ;
-- d'une fonction de vraisemblance (220) pour les un ou plusieurs paramètres d'évolution, dans lequel la fonction de vraisemblance (220) fournit une probabilité qu'une ou plusieurs valeurs pour les un ou plusieurs paramètres d'évolution soient réalisables pour le processus de production ;
-- d'un mappage (230) qui mappe les une ou plusieurs variables de processus à un ou plusieurs indicateurs de performance ;
-- d'une fonction d'utilité (240) pour au moins l'un des un ou plusieurs indicateurs de performance, dans lequel la fonction d'utilité fournit une valeur de désirabilité associée aux un ou plusieurs indicateurs de performance ;

- la sélection (320) d'un composite de modèles de recettes (200) et la réalisation d'une première étape d'optimisation comprenant :

-- la fourniture (410) d'un jeu de valeurs d'entrée pour le au moins un paramètre de recette variable dans le composite de modèles de recettes (200) ;
-- la réalisation (415) d'une deuxième étape d'optimisation fournissant un score d'utilité ;
-- la répétition (420) de la deuxième étape d'optimisation pour au moins un autre jeu de valeurs d'entrée, obtenant ainsi une pluralité de scores d'utilité ;
-- l'identification (425) du score d'utilité optimal parmi la pluralité de scores d'utilité ;

- si un seul composite de modèles de recettes (200) a été récupéré, la sélection (350) du jeu de valeurs d'entrée (280) qui donne le score d'utilité optimal (260) en même temps que le seul composite de modèle de recette comme la au moins une recette pour le processus de production ; ou
- si plus d'un composite de modèles de recettes (200) a été récupéré :

-- la répétition (330) de la première étape d'optimisation pour chaque composite de modèles de recettes (200), obtenant ainsi une pluralité de scores d'utilité optimaux ;
-- l'identification (340) du meilleur score d'utilité optimal (260) parmi la pluralité de scores d'utilité optimaux ;
-- la sélection (350) du composite de modèles de recettes (270) et du jeu de valeurs d'entrée (280) qui donnent le meilleur score d'utilité optimal (260) comme la au moins une recette pour le processus de production ;

dans lequel :

- la deuxième étape d'optimisation comprend :

-- la fourniture (430) d'un jeu de valeurs probables pour le au moins un paramètre d'évolution variable sur la base de la fonction de vraisemblance (220) ;
-- la réalisation (435) d'une troisième étape d'optimisation fournissant un total d'utilité ;
-- s'il existe au moins un autre jeu de valeurs probables qui convient, la répétition de la troisième étape d'optimisation pour le au moins un autre jeu de valeurs probables, obtenant ainsi une pluralité de totaux d'utilité ;
-- le calcul (440) du score d'utilité en pondérant le ou les totaux d'utilité par la fonction de vraisemblance (220) ;

- la troisième étape d'optimisation comprend :

-- la réalisation (445) d'une quatrième étape d'optimisation fournissant une valeur d'utilité ;
-- si un indicateur de propriété stochastique est réglé, la répétition de la quatrième étape d'optimisation, obtenant ainsi une pluralité de valeurs d'utilité ;
-- le calcul (450) du total d'utilité comme valeur d'utilité ou en composant la pluralité de valeurs d'utilité ;

- la quatrième étape d'optimisation comprend :

-- la génération (455) d'une simulation en simulant l'exécution du processus de production à l'aide d'un modèle de recette dans le composite de modèles de recettes (200) avec le jeu de valeurs d'entrée pour le au moins un paramètre de recette variable, les informations d'évolution de processus (210) et le jeu de valeurs probables pour le au moins un paramètre d'évolution variable ;
-- si le composite de modèles de recettes (200) comprend plus d'un modèle de recette, la répétition de l'étape de génération de la simulation pour chaque modèle de recette dans le composite de modèles de recettes (200) ;
-- la détermination (460), à partir des une ou plusieurs simulations, d'une ou de plusieurs trajectoires (250) pour les une ou plusieurs variables de processus, dans lequel une trajectoire (250) correspond à un profil temporel de valeurs enregistrables pendant l'exécution simulée du processus de production ;
-- le calcul (465) de la valeur d'utilité en évaluant la fonction d'utilité à l'aide des une ou plusieurs variables de processus des une ou plusieurs trajectoires (250) et du mappage (230).

2. Procédé (300) selon la revendication 1, dans lequel le produit chimique, pharmaceutique et/ou biotechnologique est un premier produit et la récupération de la fonction de vraisemblance (220) comprend :

- la récupération de données apparentées relatives à au moins un processus de production apparenté pour produire un deuxième produit chimique, pharmaceutique et/ou biotechnologique, dans lequel le au moins un processus de production apparenté a été au moins partiellement réalisé et dans lequel le au moins un processus de production apparenté est différent du processus de production ;
- la récupération d'informations de rapprochement fournissant une indication quantitative d'une similarité entre le processus de production et le processus de production apparenté ;
- le calcul de la fonction de vraisemblance (220) sur la base des données apparentées et des informations de rapprochement.

3. Procédé (300) selon l'une quelconque des revendications précédentes, dans lequel la récupération de la fonction de vraisemblance (220) comprend :

- la récupération de données actuelles relatives à une exécution en cours du processus de production ;

- le calcul de la fonction de vraisemblance (220) sur la base des données actuelles.

4. Procédé (300) selon l'une quelconque des revendications précédentes, dans lequel la récupération de la fonction de vraisemblance (220) comprend :

- la récupération de données historiques relatives à une ou plusieurs exécutions antérieures du processus de production ;
- le calcul de la fonction de vraisemblance (220) sur la base des données historiques.

5. Procédé (300) selon l'une quelconque des revendications précédentes, comprenant en outre :

la fourniture de la au moins une recette à un système de commande (20) ;
l'exécution, par le système de commande (20), du processus de production sur la base de la au moins une recette.

6. Procédé (300) selon la revendication 5, comprenant en outre :
le stockage de données du processus de production exécuté comme données historiques et/ou le stockage de données du processus de production en exécution comme données actuelles.

7. Procédé (300) selon l'une quelconque des revendications précédentes, comprenant en outre la mise à jour de la fonction de vraisemblance sur la base des une ou plusieurs trajectoires et le stockage de la fonction de vraisemblance mise à jour.

8. Produit de programme informatique comprenant des instructions lisibles par ordinateur, qui, lorsqu'elles sont chargées et exécutées sur un système informatique, amènent le système informatique à réaliser des opérations selon les étapes du procédé de l'une quelconque des revendications précédentes

9. Système informatique (10) pouvant fonctionner pour déterminer au moins une recette pour un processus de production pour produire un produit chimique, pharmaceutique et/ou biotechnologique, dans lequel le processus de production est défini par une pluralité d'étapes spécifiées par un ou plusieurs paramètres de recette commandant une exécution du processus de production, et la au moins une recette comprend la pluralité d'étapes définissant le processus de production, le système informatique (10) comprenant :

- un module de récupération configuré pour récupérer :

-- un ou plusieurs composites de modèles de recettes (200), dans lequel un composite de modèles de recettes (200) comprend un ou plusieurs modèles de recettes et un modèle de recette est une recette dans laquelle au moins un des un ou plusieurs paramètres de recette spécifiant la pluralité d'étapes est un paramètre de recette variable qui est variable et qui n'a pas de valeur prédéterminée au départ ;
-- des informations d'évolution de processus (210) qui décrivent l'évolution temporelle d'une ou de plusieurs variables de processus qui décrivent un état du processus de production, dans lequel les informations d'évolution de processus (210) comprennent un ou plusieurs paramètres d'évolution et au moins un des un ou plusieurs paramètres d'évolution est un paramètre d'évolution variable qui est variable et qui n'a pas de valeur prédéterminée au départ ;
-- une fonction de vraisemblance (220) pour les un ou plusieurs paramètres d'évolution, dans lequel la fonction de vraisemblance (220) fournit une probabilité qu'une ou plusieurs valeurs pour les un ou plusieurs paramètres d'évolution soient réalisables pour le processus de production ;
-- un mappage (230) qui mappe les une ou plusieurs variables de processus à un ou plusieurs indicateurs de performance ;
-- une fonction d'utilité (240) pour au moins l'un des un ou plusieurs indicateurs de performance, dans lequel la fonction d'utilité (240) fournit une valeur de désirabilité associée aux un ou plusieurs indicateurs de performance ;

- un module de calcul configuré pour sélectionner (320) un composite de modèles de recettes (200) et réaliser une première étape d'optimisation comprenant :

-- la fourniture (410) d'un jeu de valeurs d'entrée pour le au moins un paramètre de recette variable dans le composite de modèles de recettes (200) ;
-- la réalisation (415) d'une deuxième étape d'optimisation fournissant un score d'utilité ;

-- la répétition (420) de la deuxième étape d'optimisation pour au moins un autre jeu de valeurs d'entrée, obtenant ainsi une pluralité de scores d'utilité ;
-- l'identification (425) du score d'utilité optimal parmi la pluralité de scores d'utilité ;

dans lequel le module de calcul est en outre configuré, si un seul composite de modèles de recettes (200) a été récupéré, pour sélectionner (350) le jeu de valeurs d'entrée (280) qui donne le score d'utilité optimal (260) en même temps que le seul composite de modèle de recette comme la au moins une recette pour le processus de production ;

ou le module de calcul est en outre configuré, si plus d'un composite de modèles de recettes (200) a été récupéré, pour :

- répéter (330) la première étape d'optimisation pour chaque composite de modèles de recettes (200), obtenant ainsi une pluralité de scores d'utilité optimaux ;
- identifier (340) le meilleur score d'utilité optimal (260) parmi la pluralité de scores d'utilité optimaux ;
- sélectionner le composite de modèles de recettes (270) et le jeu de valeurs d'entrée (280) qui donnent le meilleur score d'utilité optimal (260) comme la au moins une recette pour le processus de production ;

et dans lequel :

- la deuxième étape d'optimisation comprend :

-- la fourniture (430) d'un jeu de valeurs probables pour le au moins un paramètre d'évolution variable sur la base de la fonction de vraisemblance (220) ;
-- la réalisation (435) d'une troisième étape d'optimisation fournissant un total d'utilité ;
-- s'il existe au moins un autre jeu de valeurs probables qui convient, la répétition de la troisième étape d'optimisation pour le au moins un autre jeu de valeurs probables, obtenant ainsi une pluralité de totaux d'utilité ;
-- le calcul (440) du score d'utilité en pondérant le ou les totaux d'utilité par la fonction de vraisemblance (220) ;

- la troisième étape d'optimisation comprend :

-- la réalisation (445) d'une quatrième étape d'optimisation fournissant une valeur d'utilité ;
-- si un indicateur de propriété stochastique est réglé, la répétition de la quatrième étape d'optimisation, obtenant ainsi une pluralité de valeurs d'utilité ;
-- le calcul (450) du total d'utilité comme valeur d'utilité ou en composant la pluralité de valeurs d'utilité ;

- la quatrième étape d'optimisation comprend :

-- la génération (455) d'une simulation en simulant l'exécution du processus de production à l'aide d'un modèle de recette dans le composite de modèles de recettes (200) avec le jeu de valeurs d'entrée pour le au moins un paramètre de recette variable, les informations d'évolution de processus (210) et le jeu de valeurs probables pour le au moins un paramètre d'évolution variable ;
-- si le composite de modèles de recettes (200) comprend plus d'un modèle de recette, la répétition de l'étape de génération de la simulation pour chaque modèle de recette dans le composite de modèles de recettes (200) ;
-- la détermination (460), à partir des une ou plusieurs simulations, d'une ou de plusieurs trajectoires (250) pour les une ou plusieurs variables de processus, dans lequel une trajectoire (250) correspond à un profil temporel de valeurs enregistrables pendant l'exécution simulée du processus de production ;
-- le calcul (465) de la valeur d'utilité en évaluant la fonction d'utilité à l'aide des une ou plusieurs variables de processus des une ou de plusieurs trajectoires (250) et du mappage (230).

10. Système informatique (10) selon la revendication 9, dans lequel le produit chimique, pharmaceutique et/ou biotechnologique est un premier produit et le module de récupération est configuré en outre pour :

- récupérer des données apparentées relatives à au moins un processus de production apparenté pour produire un deuxième produit chimique, pharmaceutique et/ou biotechnologique, dans lequel le au moins un processus de production apparenté a été au moins partiellement réalisé et dans lequel le au moins un processus de production apparenté est différent du processus de production ;
- récupérer des informations de rapprochement fournissant une indication quantitative d'une similarité entre le processus de production et le processus de production apparenté ;

et le module de calcul est configuré en outre pour calculer la fonction de vraisemblance (220) sur la base des données apparentées et des informations de rapprochement.

11. Système informatique (10) selon la revendication 9 ou 10, dans lequel le module de récupération est configuré en outre pour récupérer des données actuelles relatives à une exécution en cours du processus de production, et le module de calcul est configuré en outre pour calculer la fonction de vraisemblance (220) sur la base des données actuelles.

12. Système informatique (10) selon l'une quelconque des revendications 9 à 11, dans lequel le module de récupération est configuré en outre pour récupérer des données historiques relatives à une ou plusieurs exécutions antérieures du processus de production, et le module de calcul est configuré en outre pour calculer la fonction de vraisemblance (220) sur la base des données historiques.

13. Système informatique (10) selon l'une quelconque des revendications 9 à 12, configuré en outre pour être interfacé avec un système de commande (20) pour commander un équipement de processus de production (30), dans lequel :

le système informatique (10) est configuré pour fournir la au moins une recette au système de commande (20) ; et
le système de commande (20) est configuré pour exécuter le processus de production sur la base de la au moins une recette.

14. Système informatique (10) selon la revendication 13, configuré en outre pour stocker des données du processus de production exécuté comme données historiques et/ou pour stocker des données du processus de production en exécution comme données actuelles.

15. Système informatique (10) selon l'une quelconque des revendications 9 to 14, dans lequel :
le module de calcul est configuré en outre pour mettre à jour la fonction de vraisemblance sur la base des une ou de plusieurs trajectoires.

Figure 1

Figure 2

<u>300</u>

```
310 ─┐  ┌─────────────────────────────────────────┐
      │  │ Retrieving recipe template composite(s), │
      │  │ process evolution information, likelihood │
      │  │    function, mapping, utility function    │
         └─────────────────────────────────────────┘
```

310 ⟋ — Retrieving recipe template composite(s), process evolution information, likelihood function, mapping, utility function

320 ⟋ — Selecting a recipe template composite and performing a first optimisation step

More than one recipe template composite?

yes

330 ⟋ — Repeating the first optimisation step

340 ⟋ — Identifying the best optimal utility score

no

350 ⟋ — Determining the at least one recipe for the production process

Figure 3a

EP 3 901 710 B1

410

Providing a set of input values for the variable recipe parameter(s)

415

Performing a second optimisation step providing a utility score

420

Obtaining a plurality of utility scores by repeating the second optimisation step

425

Identifying the optimal utility score

Figure 3b

430

Providing a set of likely values for the variable evolution parameter(s) based on likelihood function

435

Performing a third optimisation step providing a utility tally

Another set of likely values?

yes

no

440

Computing the utility score from the utility tally(ies) weighed by the likelihood function

Figure 3c

445

Performing a fourth optimisation step
providing a utility value

Is stochasticity flag set?

yes

no

450

Computing the utility tally from
the utility value(s)

Figure 3d

455

Generating a simulation of the process

460

Determining trajectory(ies) for
process variable(s)

Another recipe template?

yes

no

465

Computing the utility value by evaluating
the utility function

Figure 3e

Figure 4 (first part)

Figure 4 (second part)

EP 3 901 710 B1

Figure 5a

Figure 5b

EP 3 901 710 B1

Figure 5c

**Prior knowledge**

Historical data for cell
type B: trajectories $D_b$
and prior $r_b \in [0, 0.15)$

Relatedness of A and B:
$r_b = r_a + N(0, \sigma_{ab})$

Akin data for cell type
A: trajectories $D_a$ and
prior $r_a \in [0.02, 0.12)$

Process evolution information

Find most likely value for $r_b$ from likelihood surface

$$\bar{r}_b = \text{argmax} \int R(r_{b,} r_a)\ p(r_b \,|\, D_b)\ p(r_a \,|\, D_a) dr_a$$

Use $\bar{r}_b$ value to
simulate the process

Use simulation trajectory to obtain
score function US(ht)=U(V(ht))

Optimise score function US(ht) to find
the harvest time $ht_{opt}$ that optimises
US

Provide result to control system and
set to harvest automatically at the
optimal harvest time

Harvest is carried
out by bioreactor at
optimal time with
optimised utility

Figure 6a

Probability distribution over r_a

Probability distribution over r_b

Figure 6b

Figure 6c

**Without relatedness**

Normalised joint probability p(r_a, r_b)

Max point = 1480

r_a [10^5 cells/ml.hour]

r_b [10^5 cells/ml.hour]

**Including relatedness**

Normalised joint probability p(r_a, r_b) - with relatedness

Max point = 3349

r_a [10^5 cells/ml.hour]

r_b [10^5 cells/ml.hour]

Figure 6d

**Prior knowledge**

Akin data for processes A and B: $D_a$, $D_b$

Relatedness of B and C
$R(B, C) = R(r_b, r_c)\, R(\theta_b, \theta_c)$

Relatedness of A and C:
$R(A, C) = R(r_a, r_c)\, R(\theta_a, \theta_c)$

Process evolution information

Likelihood surface for C given B:
$$L(r_c, \theta_c | B) = \int\int R(r_b, r_c)\, p(r_b, \theta_b \mid D_b)\, R(\theta_b, \theta_c)\, dr_b\, d\theta_b$$

Likelihood surface for C given A:
$$L(r_c, \theta_c | A) = \int\int R(r_a, r_c)\, p(r_a, \theta_a \mid D_a)\, R(\theta_a, \theta_c)\, dr_a\, d\theta_a$$

Find most likely values for evolution parameters from likelihood surface for C:
$$\bar{r_c}, \bar{\theta_c} = \arg\max \frac{1}{2}\{L(r_c, \theta_c | A) + L(r_c, \theta_c | B)\}$$

Use $\bar{r_c}$, $\bar{\theta_c}$ to simulate the process

Use simulation trajectories to obtain score function $US(ht) = U[V(ht),\ \tau(ht)]$

Optimise score function $US(ht)$ to find the harvest time $ht_{opt}$ that optimises $US$

Provide result to control system and set to harvest automatically at the optimal harvest time

Harvest is carried out by bioreactor at optimal time with optimal utility

Figure 7a

65

Figure 7b

Figure 7c

Figure 7d

EP 3 901 710 B1

Figure 7e

Figure 7f

**Prior knowledge**

| Process started on bioreactor and measurements taken at sparse time intervals | → | Current data from ongoing run $D_b$ | | Akin data for many previous runs $D_a$ |

Relatedness of A and B:
$$R(r_{b,}\, r_a, k_{b,}\, k_a)$$

Process evolution information

Find most likely values for evolution parameters from likelihood surface

$$\overline{r_b}, \overline{k_b} = \operatorname{argmax} \int \int p(r_{b,}\, k_b | D_b) R(r_{b,}\, r_a, k_{b,}\, k_a)\, p(r_a\, k_a | D_a)\, dr_a dk_a$$

Use $\overline{r_b}, \overline{k_b}$ to simulate the remainder of the process

Use simulation trajectories to obtain score function US(ht) = U[V(ht), p(ht)]

Optimise score function US(ht) to find the harvest time ht^opt that optimises US

Harvest is carried out by bioreactor at optimal time with optimal utility

Provide result to control system and set on the fly to harvest automatically at the optimal harvest time

Completed run data added to prior knowledge space to inform subsequent runs

## Figure 8a

Figure 8b

72

Probability surface for r, k for cell type B from current data

Probability surface for r, k for cell type B from current data, akin data and relatedness

Figure 8c

EP 3 901 710 B1

Figure 9a

Utility as a function of titer and running time

Protein titer

Time [hours]

Figure 9b

Figure 9c

Figure 9d

Figure 9e

**EP 3 901 710 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3525053 A1
- EP 3291038 A1
- EP 18000132 D